# EUROPÄISCHE PATENTSCHRIFT

(11) **EP 3 894 624 B1**
(45) Veröffentlichungstag und Bekanntmachung des Hinweises auf die Patenterteilung: **11.10.2023**
(21) Anmeldenummer: 19742584.6
(22) Anmeldetag: 19.07.2019
(51) Int. Cl.: D06N 3/14, C14C 11/00, D06N 3/00, B32B 5/20, D06N 3/18

(54) **SCHICHTMATERIAL UND VERFAHREN ZUR HERSTELLUNG EINES SCHICHTMATERIALS**
LAYERED MATERIAL AND PROCESS OF PRDUCING THE LAYERED MATERIAL
MATÉRIAU MULTICOUCHES ET SON PROCÉDÉ DE PRODUCTION

(30) Priorität: 13.12.2018 AT 511072018; 09.04.2019 AT 503102019; 18.04.2019 AT 503542019; 18.04.2019 DE 102019110290
(43) Veröffentlichungstag der Anmeldung: 20.10.2021
(73) Patentinhaber: Schaefer, Philipp, 30175 Hannover (DE)
(72) Erfinder: Schaefer, Philipp, 30175 Hannover (DE)
(74) Vertreter: Wildhack, Andreas
(86) Internationale Anmeldenummer: PCT/EP2019/069529
(87) Internationale Veröffentlichungsnummer: WO 2020/119961

(56) Entgegenhaltungen:
- EP-A1- 1 300 474
- EP-A1- 1 887 128
- EP-A1- 3 248 833
- WO-A2-2009/049728
- DE-A1-102017 109 453

## Beschreibung

Die Erfindung betrifft ein Verfahren zur Herstellung eines Schichtmaterials gemäß dem Oberbegriff des Patentanspruches 1.

Des Weiteren betrifft die Erfindung ein Schichtmaterial gemäß dem Oberbegriff des Patentanspruches 17 sowie gemäß dem Verfahren bzw. unter Verwendung eines erfindungsgemäßen Schichtmaterials erhältliche Gegenstände.

EP3248833A1 und EP1887128A1 offenbaren ein Verfahren zur Herstellung eines oberflächenstrukturierten Schichtmaterials. Die Prägung erfolgt mit einer Vakuum-Prägung, wobei nur die obige Schicht strukturiert wird.

DE102017109453A1 offenbart eine Oberflächenprägung, und die geschäumte Zwischenschicht wird nicht strukturiert.

EP1300474A1 offenbart einen Prägedruck von weniger als 125 kg/cm3, um eine geschäumte Schicht zu strukturieren. Die obige Schicht wird nach der Prägung auf die strukturierte Schicht aufgebracht.

WO2009/049728A2 offenbart ein beschichtetes Leder, worin die Beschichtung perforiert worden ist. WO2009/049728A2 offenbart nur Oberflächenstruktur und ein Prägedruck wird nicht erwähnt.

In der EP 1644539-B1 werden durch eine PU-Beschichtung durchgehende Kapillaren beschrieben. Die Strukturierung der Beschichtung erfolgt auf einer Matrize aus Silikonkautschuk. Die Polyurethandispersion oder -mischung für die strukturgebende Schicht wird auf die negativstrukturierte Matrize aufgetragen und mittels Wärme getrocknet und verfestigt. Die Matrize selbst nimmt kein Wasser auf, sodass die Wasserentfernungen nur über und/oder durch die Oberfläche der Beschichtung erfolgen kann. Das Gleiche gilt, wenn die Strukturierung auf negativstrukturiertem Releasepaper erfolgt. Die Strukturierung erfolgt also in-situ bei der Trocknung und Verfestigung der Polyurethandispersionsoberschicht. Sie ist vernetzt und nach einer 48-stündigen Lagerzeit nicht mehr umstrukturierbar. Da die störungsfreie Trocknung insbesondere von dickeren Dispersionsmischungen kompliziert ist, das heißt, wenn keine Feuchtigkeit in den einstweiligen Träger abgeführt werden kann, muss die Trocknung mit ansteigender Temperatur erfolgen. Dazu ist ein hoher Energieaufwand nötig, weil nicht nur die Dispersionsschicht erwärmt werden muss, sondern auch beim Erwärmen die einstweilige Unterlage. Durch die Verdunstung der aufgetragenen Schicht wird auch der Unterlage Wärme entzogen, die immer wieder neu zugeführt werden muss. Eine wesentliche Aufgabe der Erfindung ist das Einsparen von Energie und die damit zusammenhängende Emissionsreduzierung.

Die Ausbildung von Kapillaren ist nur bei dünnen Beschichtungen möglich. Ihre Anzahl pro Flächeneinheit und ihr Durchmesser sind schwierig zu steuern, weil sie beim Verfestigen der PU-Dispersion auf der Matrize als Löcher in der Beschichtung entstehen, die mit Löchern oder dünnen Stellen in der Kleberschicht kommunizieren müssen. Die Beschichtung ist vernetzt und kann nicht neu strukturiert werden und selbst, wenn dies möglich wäre, würden sich die Kapillaren unter dem hohen Druck, welcher für das Umprägen erforderlich ist, verschließen. Diese Beschichtungen zeigen eine einheitliche Struktur in der Fläche. Das gleiche gilt für sogenannte korrigierte Narbenleber mit einer geschäumten Polyurethanbeschichtung. Die Erfindung hat sich unter anderem die Aufgabe gestellt, diese Nachteile zu vermeiden und Formatzuschnitte und Stanzteile für die weiterverarbeitende Industrie zu schaffen, nämlich die Ausbildung von individuellen Oberflächen, die auch technische Funktionen aufweisen können, z.B. die Ausbildung von Stanzteilen für Schuhe, die unterschiedliche Strukturen an einem Stück aufweisen und gegebenenfalls auch noch gleichmäßig verteilte bzw. exakt ausgebildete Kapillaren besitzen. Erfindungsgemäß wird ein Schichtmaterial geschaffen, welches diese Fehler nicht aufweist und die Voraussetzung bildet, um Formatzuschnitte zu schaffen, die kostengünstig und mit beliebigen Oberflächen in der weiterverarbeitenden Industrie strukturiert werden können. Die Erfindung ermöglicht Technikern und Produktgestaltern, z.B. in einer Schuhfabrik, die individuelle Gestaltung der Oberfläche.

Die Herstellung der Matrizen im 3D-Verfahren, beispielsweise für technische Funktion besitzende Oberflächen, ist digital einfach und bei kleinen Matrizen schnell durchzuführen.

Eine weitere Aufgabe der Erfindung besteht darin, ein Leder so zu beschichten und die herausgeschnittenen Teile so zu strukturieren, dass nur stanzteilbedinger Abfall anfällt, weil auch die Teile der Haut mit geringer Dicke und Losnarbigkeit, die normalerweise Abfall darstellen, mit einer zu dem Material passenden Struktur versehen werden können. Dies wird vor allem durch die Prägeparameter, Druck und Temperatur sowie die druckelastische Materialien aufweisenden Press- bzw. Prägewerkzeuge erreicht.

Aufgabengemäß soll zum Strukturieren nur Energie für Formatzuschnitte und Stanzteile benötigt werden, was ebenfalls eine erhebliche Energieeinsparung darstellt. Zur Aufgabe gehört es auch, die Lebenszeit von Silikonkautschukmatrizen zu verlängern, da die strukturgebenden Matrizen nicht mit nassem Polyisocyanat als Vernetzter enthaltenen Polyurethandispersionen in Verbindungen kommen sollen. Ferner gehört es zur Aufgabe der Erfindung zum Strukturieren von Formatzuschnitten und Stanzteilen neben Silikonkautschukmatrizen auch Matrizen mit textilen Oberflächen zu verwenden. Textile Matrizen sind zum Nassaufbringen von Dispersionsbeschichtungen nicht geeignet.

Bei den bekannten Verfahren bei denen die Strukturierung in größeren Flächen in-situ erfolgt, beträgt die Verweilzeit der Dispersion bzw. der Dispersionsmischungen für die strukturgebende Oberfläche zwischen 2 und 5 Minuten. Aufgabengemäß soll diese Zeit auf wenige Sekunden reduziert werden.

Bekannte Materialien bzw. Beschichtungen, die auf Umkehr-Matrizen hergestellt wurden, bestehen aus mehreren Schichten. Schichtentrennungen sind daher vorprogrammiert. Durch einen Schichtenaufbau entsteht aber auch ein sogenannter Sperrholzeffekt, d.h. die Trägermaterialien werden nach der Beschichtung automatisch steifer. Die bekannten Schichtmaterialien sind relativ hart.

Erfindungsgemäß sollen weiche Schichtmaterialien erstellt werden mit einer homogen aussehenden Oberfläche, die beim Heißprägen - aufgrund ihrer erfindungsgemäß vorgesehenen Schaumstruktur - verhindern, dass die volle Temperatur der Matrize beim Verpressen an die Trägerschicht weitergeführt wird. Höhere Temperaturen werden sowohl bei Mikrofaservlies als auch bei Leder als Stress empfunden und die Trägermaterialien verhärten und verlieren an Stärke, insbesondere wenn Feuchtigkeit, Hitze und Druck gemeinsam die Trägerschicht beaufschlagen.

Die Erfindung hat als wesentliche Aufgabe, ein Schichtmaterial zu erstellen, das einfach herstellbar und lagerfähig ist, eine exakte Oberflächenstrukturierung insbesondere von Formatzuschnitten und Stanzteilen zulässt, beste mechanische bzw. physikalische Eigenschaften besitzt und wirtschaftlich herstellbar und weiterverarbeitbar ist. Die Schicht soll aus wässrigen PU-Dispersionen einschichtig aufgebaut sein und auch bei einer Stärke von mehr als 0,4 mm keine Lunker, Einfallstellen, Blasen oder beim Trocknen entstehende Risse aufweisen. Ferner soll die nasse Beschichtung beim Trocknen bzw. Wasserentzug nicht Ihren vollen Wasseranteil an Dicke verlieren.

Weitere wesentliche Aufgabe der Erfindung ist es, ein Schichtmaterial mit einer ebenen, strukturlosen, zweidimensionalen Beschichtungsoberfläche so zu schaffen, dass die Beschichtung auch nach einer Lagerzeit von mehr als sechs Monaten ohne Qualitätsverlust, kostengünstig mit einer beliebigen individuellen Strukturierung geprägt werden kann und eine dreidimensionale Struktur annimmt bzw. beibehält. Die Prägung des Schichtmaterials soll somit nach einer längeren Zeitspanne nach der Erstellung der Schichten erfolgen können. Dies wird vor allem mit der speziellen Art des eingesetzten PU-Schaumes erreicht, insbesondere dessen Thermoplastizität und Zusammensetzung.

Um auf technische Veränderungen rasch, unkompliziert und kostengünstig, insbesondere unabhängig von Zeit und Ort, reagieren zu können, wird es erfindungsgemäß möglich, z.B. in einer Schuhfabrik oder anderen Schichtmaterial verarbeitenden Betrieben, aus dem Schichtmaterial einen Formatteil herauszuschneiden oder zu stanzen und mittels einer, vorzugsweise im 3D-Druckverfahren erstellten, Matrize mit der geforderten Struktur zu versehen.

Eine weitere Aufgabe der Erfindung ist es, ein Schichtmaterial zu erstellen, dessen Schichten mit PU-Dispersionen auf rein wässriger Basis erstellt werden können.

Aus der DE 4230997 A1 ist ein Verfahren bekannt, bei dem ein Schichtmaterial erstellt wird, indem auf eine Trägerschicht ein PU-Schaum, erstellt aus einer PU-Dispersionsmischung, aufgebracht und mit einer Metallwalze strukturiert wird. Die Nachteile dieser beschriebenen Vorgansweise sind beträchtlich, insbesondere da im Gegensatz zur Erfindung eine Abstimmung der Prägeparameter, des Aufbaues der Dispersionen und der Prägewerkzeuge nicht vorliegt.

Erfindungsgemäß ist ein Verfahren der eingangs genannten Art mit den im Kennzeichen des Anspruches 1 angeführten Merkmalen charakterisiert.

Bei dieser Vorgangsweise erhält man ein Schichtmaterial, bei dem eine Trägerschicht eine oberflächenstrukturierbare Schicht trägt, welches auch nach längerer Lagerung optimal weiterverarbeitet werden kann. Dazu ist es lediglich nötig, die oberflächenstrukturierbare Schicht thermisch zu aktivieren und oberhalb ihres Erweichungspunktes thermoplastisch mit einer Matrize unter Wärme und Druckbeaufschlagung zu verformen. Die Schicht und die weitere Schicht behalten nach Abzug von der Matrize ihre Struktur bei. Durch die Druckbeaufschlagung erhält man ein praktisch untrennbares Schichtmaterial, das die Matrize vor allem aufgrund der ausgebildeten Schichtdicke und des gewählten Prägedruckes formgetreu wiedergibt. Die auf die Trägerschicht aufgebrachte Schicht aus PU-Schaum und die weitere, nicht geschäumte Schicht sind strukturiert. Die Konsistenz der Trägerschicht wird durch die Druckbeaufschlagung nicht negativ beeinträchtigt. Der erfindungsgemäße Druckbereich berücksichtigt die Konsistenz der eingesetzten PU-Schäume und strukturiert, ohne wesentlich die Schaumstruktur zu verändern. Der Prägevorgang kann wirtschaftlich für kleinere Zuschnitte und Stanzteile vorgenommen werden.

Von Vorteil ist es, wenn die Schicht nach dem Aufbringen auf die Trägerschicht vor dem Strukturieren auf einen Wassergehalt von weniger als 1,5 Gew.-%, vorzugsweise weniger als 0,5 Gew.-%, insbesondere bis zur Wasserfreiheit, getrocknet wird. Dies ist für das Aufbringen der weiteren Schicht und das Prägen von Vorteil. Zur Erstellung eines PU-Schaums oder Mikrohohlkugeln enthaltenden Schaumes wird eine wässrige PU-Dispersionsmischung auf Basis von aliphatischem und/oder aromatischem Polyether- und/oder Polyester- und/oder Polycarbonatpolyurethan eingesetzt. Der PU-Schaum wird ferner mit einer PU-Dispersionsmischung erstellt, bei der die einzelnen zur Erstellung der PU-Dispersionsmischung eingesetzten gut mischbaren PU-Dispersionen in getrocknetem Zustand unterschiedliche Temperaturen ihres Erweichungspunkts zeigen. Die PU-Dispersionen werden so gewählt, dass die PU-Dispersionsmischung nach ihrem Trocknen und einem allfälligen Vernetzen, das aber nur ein Untervernetzen darstellt, und auch nach ihrem Prägen bzw. Strukturieren thermoplastische Kontaktklebereigenschaften besitzt bzw. beibehält.

Eine aufschäumbare PU-Dispersionsmischung enthält zwischen 65 und 91 Gew.-% Polyurethandisperisonen bezogen auf das Gesamtgewicht des PU-Schaums mit allen Zusätzen. Diese Zusätze sind z.B. Polyacrylatdispersionen, Verdicker, Pigmente, flammhemmende Zusätze, Schäummittel, Vernetzer. Es kommen PU-Dispersionsmischungen zum Einsatz, die jeweils zwischen 35 und 52 Gew-%, bezogen auf das Gesamtgewicht der jeweiligen PU-Dispersion, Feststoffe enthalten.

Der Erweichungspunkt und die Klebeeigenschaften des PU-Schaums können nicht nur durch Wahl des Erweichungspunktes der einzelnen PU-Dispersionen festgelegt werden, sondern kann auch durch Zugabe von Vernetzern gesteuert werden. Vorteilhafterweise werden 0 bis 4,2 Gew.-% Vernetzer bezogen auf das Gesamtgewicht des PU-Schaums eingesetzt. Ein derartiger Vernetzter ist beispielsweise der Vernetzer XL80 der Firma Lanxess AG.

Es werden vorteilhaft PU-Dispersionen eingesetzt, welche im getrockneten, unvernetzten oder untervernetzten Zustand einen Erweichungspunkt haben, der oberhalb von 45 °C liegt, und die somit oberhalb dieser Temperatur weich und klebrig werden. Der Erweichungspunkt kann bei Einsatz von Vernetzern im erfindungsgemäßen Ausmaß auch oberhalb von 95 °C liegen. Vor und nach dem Untervernetzen soll die getrockneten PU-Dispersionsmischung thermoplastische Eigenschaften besitzen und die PU-Dispersionsmischung ist oberhalb des Erweichungspunkts unter Druck fließfähig und lässt sich bleibend verformen. Für das Prägen soll die Schicht aus PU-Schaum honigartig, zähflüssig aber nicht dünnflüssig sein, um die Struktur der Matrize exakt und rasch annehmen zu können. Je nach Anwendungszweck des Schichtmaterials können der Erweichungspunkt und die Klebeeigenschaften eingestellt bzw. gewählt werden.

Sowohl für die Erstellung des Anteils der PU-Dispersionsmischung mit Schmelz- bzw. Kontaktklebereigenschaften als auch für den Anteil der PU-Dispersionsmischung ohne derartige Eigenschaften, welche beiden Anteile zur Erstellung des PU-Schaums vermischt werden, können jeweils auch mehrere PU-Dispersionen eingesetzt werden, die jeweils gewünschten Eigenschaften besitzen bzw. ausbilden.

Zweckmäßig werden zur Ausbildung des PU-Schaumes Verdickungsmittel auf wasserfreier Polyacrylatbasis mit zähflüssiger Konsistenz oder Ammoniak enthaltende Schaumhilfspasten, wie z.B. Millio-Form, eingesetzt. Verdicker auf Polyacrylatbasis, welche den PU-Schaum stabilisieren, werden in einem Ausmaß von 1,5 bis 5 Gew.-% des Gesamtgewichtes des PU-Schaums eingesetzt.

Für die Erstellung des PU-Schaums werden PU-Dispersionen auf Basis von aliphatischen Polyether- und/oder Polyester- und/oder Polycarbonatpolyurethanen eingesetzt. Die für die Erstellung von PU-Dispersionsmischung eingesetzten PU-Dispersionen können unterschiedliche Temperaturen für ihre jeweiligen Erweichungspunkte haben bzw. werden nach diesem Gesichtspunkt ausgewählt bzw. zusammengemischt. Es ist somit möglich, gezielt unterschiedliche Erweichungspunkte bzw. Erweichungsbereiche für den getrockneten PU-Schaum einzustellen. Durch Erwärmen auf diesen gewünschten Erweichungspunkt bzw. oberhalb davon bzw. auf einen das Prägen zulassenden Erweichungsbereich, ist es möglich, der Oberfläche des wasserfreien bzw. nahezu wasserfreien, thermoplastischen bzw. thermoplastisch strukturierbaren PU-Schaums dauerhaft eine gewünschte Oberflächenstruktur zu verleihen.

Der Einsatz von unterschiedlichen PU-Dispersionen erfolgt vor allem auch, um die Hydrolysebeständigkeit, die Haftung, die Weichheit und die Prägbarkeit des PU-Schaums einzustellen bzw. zu optimieren und an unterschiedliche Anwendungsfälle anzupassen.

Die für die Erstellung des PU-Schaums eingesetzten PU-Dispersionen enthalten vorteilhaft jeweils 35 bis 52 Gew.-% PU-Feststoff, bezogen auf das jeweilige Gewicht der eingesetzten PU-Dispersion samt deren Zuschlagstoffe. Die einzelnen PU-Dispersionen werden sodann zu der PU-Dispersionsmischung vermengt bzw. vermischt und die zur Erstellung des PU-Schaums eingesetzte PU-Dispersionsmischung enthält 65 bis 91 Gew.-% derartiger PU-Dispersionen, bezogen auf das Gesamtgewicht des PU-Schaums samt allen Zuschlagstoffen.

Erfindungsgemäß werden besonders gute Eigenschaften im Hinblick auf Haftung der Schicht auf der Trägerschicht erzielt, wenn eine PU-Dispersionsmischung zum Einsatz kommt, die zwischen 18 und 52 Gew.-% - bezogen auf die fertige PU-Dispersionsmischung - einer handelsüblichen PU-Dispersion auf Polyesterbasis mit einem Feststoffanteil von ca. 40 % enthält, wie sie zum Beispiel als wärmeaktivierbarer Industriekontaktkleber unter dem Namen Luphen von der Firma BASF angeboten wird. Die restlichen 39 bis 73 Gew.-% werden von einer ebenfalls ca. 40 % Feststoffe enthaltenden PU-Dispersion mit einem Erweichungspunkt von über 125 °C gebildet, z.B. einer PU-Dispersion mit der Bezeichnung DLV-N der Firma Lanxess AG. Diese Mischung führt insbesondere bei Mikrofaservliesen und bei geschliffenen Narbenledern zu außergewöhnlich hohen Haftungseigenschaften, ohne das fertige Produkt nennenswert zu verhärten.

Das wärmeaktivierbare Polyurethan von vorteilhaft einsetzbaren PU-Dispersionen besitzt zumindest eine teilweise lineare und/oder zumindest teilkristalline Struktur und ist in getrocknetem Zustand thermoplastisch verformbar und als PU-Schaum auch verdichtbar.

Die PU-Dispersionen für die PU-Dispersionsmischung zur Erstellung des PU-Schaums weisen einen pH-Wert von 6 bis 9,5 auf.

Vorteilhaft für eine längere Lagerung ist es, wenn der getrocknete PU-Schaum wasserfrei und nicht vernetzt bzw. untervernetzt ist und bei einer Temperatur von110 bis 160 °C erweicht bzw. klebrig wird bzw. hoch viskos schmilzt und unter dem vorgesehenen Druck fließt, um die Struktur der Matrize annehmen zu können.

Der PU-Schaum wird erstellt, indem in oder die PU-Dispersionsmischung ein Gas, vorzugsweise Luft oder Stickstoff, eingebracht wird, wobei in einen Liter der PU-Dispersionsmischung so viel Gas und/oder Mikrohohlkugeln eingebracht bzw. eingeschlagen werden, dass ein Liter des Ausgangsmaterials ein Volumen von 1,10 bis 1,70 l, vorzugsweise 1,20 bis 1,50 l, annimmt.

Die erfindungsgemäße Vorgangsweise ist einfach und wirtschaftlich. Es ist möglich, dass der PU-Schaum auf die Trägerschicht, insbesondere airless, aufgesprüht oder im Siebdruckverfahren oder mit zumindest einer Walze oder einer Rakel in gleicher Dicke aufgebracht wird. Auf diese Weise ist es einfach, die gewünschte Dicke der aufzubringenden Schicht aus PU-Schaum einzustellen, welche Dicke letztlich auch für die Eigenschaften des Schichtmaterials wichtig ist.

Für spezielle Anwendungszwecke kann es vorteilhaft sein, wenn vor oder gleichzeitig mit der unter Druckaufbringung erfolgenden Strukturierung des PU-Schaums mit der Matrize direkt auf die Schicht eine weitere Schicht aus einer, gegebenenfalls eine unterschiedliche Farbe besitzenden PU-Dispersion aufgebracht bzw. angebunden wird. Diese Schicht hat nach dem Verfestigen bzw. Trocknen eine Dicke von 0,015 bis 0,060 mm, vorzugsweise 0,020 bis 0,045 mm. Auf diese Weise kann neben einer Schutzwirkung für die Schaumschicht eine unterschiedliche Farbgebung für die Oberfläche des Schichtmaterials erzielt werden. Werden Teilbereiche der aufgebrachten weiteren Schicht z.B. durch Lasern entfernt und besitzt die aufgebrachte weitere Schicht eine andere Farbe als der PU-Schaum, können farblich unterschiedlich gestaltete Muster auf dem Schichtmaterial ausgebildet werden. Das Aufbringen der weiteren Schicht kann direkt auf den bereits auf der Trägerschicht befindlichen, vorteilhaft schon getrockneten PU-Schaum erfolgen. Es ist aber auch möglich, vor der Prägung des PU-Schaums auf die Matrize diese weitere dünne Schicht aufzubringen und im Zuge der Prägung des PU-Schaums die auf der Matrize befindliche weitere Schicht direkt mit der Matrize auf die Oberfläche des PU-Schaums aufzubringen bzw. unter Druckaufbringung zu verbinden bzw. auf diese zu übertragen.

Die mit der Schicht aus getrocknetem PU-Schaum versehene Trägerschicht bzw. das Schichtmaterial kann in Bahnenware oder in Form von Zuschnitten gefertigt werden und ist nach Trocknen des PU-Schaums gut lagerbar.

Erfindungsgemäß wird zur Erstellung eines oberflächenstrukturierten Schichtmaterials die getrocknete Schicht, gegebenenfalls gleichzeitig bzw. gemeinsam mit der weiteren Schicht, mit einer strukturierten Matrize druckbeaufschlagt und dabei gegebenenfalls dickenreduziert. Die Verbindung der Schicht mit der Trägerschicht wird damit weiter verbessert. Dies erfolgt vorteilhaft bei einer Temperatur von 110 bis 160 °C. Es werden eine Kontaktdauer von 2 bis 28 s, vorzugsweise von 6 bis 18 s, und ein Kontaktdruck von 4 bis 48 kg/cm² eingehalten. Die Schicht aus PU-Schaum kann für das Strukturieren, gegebenenfalls gleichzeitig bzw. gemeinsam, mit der weiteren Schicht, auf eine Temperatur von 110 bis 160 °C, z.B. mit IR-Strahlung, gebracht werden, druckbeaufschlagt und strukturiert und gegebenenfalls dickenreduziert werden. Für ein rasches und exaktes Strukturieren kann vorgesehen sein, dass die Trägerschicht, die weitere Schicht und die Schicht unter Aufbringung eines Kontaktdrucks von 0,8 bis 48 kg/cm², vorzugsweise von 4 bis 48 kg/cm², insbesondere von 18 bis 25 kg/cm², miteinander verpresst und verbunden und mit einer Matrize strukturiert werden.

Es kann vorgesehen sein, dass der PU-Schaum Zusätze enthält, z.B. Pigmente und/oder Polyacrylatdispersionen und/oder Silikone und/oder Mattierungsmittel und/oder Verdicker und/oder Vernetzer und/oder Flammhemmmittel. Dabei können bezogen auf das Gesamtgewicht des PU-Schaums 1,5 bis 3,5 Gew.-% Mikrohohlkugeln bzw. 2 bis 12 Gew.-% Pigmente bzw. 1,8 bis 4,5 Gew.-% Polyacrylate als Verdicker und Schaumstabilisator bzw. 1 bis 4 Gew.-% Silikone zugesetzt werden.

Erfindungsgemäß kann vorgesehen sein, dass der PU-Schaum derart erstellt wird, dass die Schicht nach der Strukturierung mit der Matrize eine Dichte von 0,80 bis 1,05 g/cm³ oder von 0,89 bis 1,05 g/cm³ besitzt. Die Dichte hängt wesentlich von der Art und Menge der Pigmente ab. Ein mit Titandioxid weiß eingefärbter PU-Schaum hat naturgemäß eine höhere Dichte als ein schwarzer PU-Schaum. Die Dicke hat aber auch einen gewissen Einfluss auf die Viskosität und Prägbarkeit des PU-Schaumes

In der Praxis ist es vorteilhaft, wenn dem PU-Schaum Vernetzer im Ausmaß von bis zu 4,2 Gew.-% und/oder 8 bis 25 Gew.-% jeweils einer 40 bis 60 %-igen Acrylatdispersion zugesetzt werden. Die Gewichtsangaben beziehen sich auf das Gesamtgewicht des PU-Schaums. Der PU-Schaum ist jedenfalls nicht oder nicht vollständig vernetzt und bleibt nach einem ersten Strukturierungsvorgang weiterhin thermoplastisch verformbar.

Die auf die Oberfläche des getrockneten PU-Schaums aufgebrachte weitere Schicht muss nicht thermoplastisch sein, ist aber vorteilhafterweise wärmeabriebfest und gegen MEK sowie Isopropanol beständig. Die weitere Schicht übernimmt, auch wenn sie nicht thermoplastisch ist, die Struktur der PU-Schicht und die der Matrize. Vor allem können aber die mit der weiteren Schicht eingesetzten Farbpigmente unterschiedliche Farbe gegenüber der Schicht besitzen.

Für die Erstellung eines Schichtmaterials, bei dem als Trägerschicht ein Textilmaterial, z.B. ein Gewebe oder Gewirke, eingesetzt wird, hat es sich als besonders vorteilhaft erwiesen, wenn vor Aufbringen der Schicht aus PU-Schaum auf eine von einem Textilmaterial, z.B. Gewebe oder Gewirke, gebildeten Trägerschicht auf die Oberfläche des Textilmaterials als Vorbeschichtung eine dünne Lage aus PU-Schlagschaum oder aus gegebenenfalls geschäumten Weich-PVC jeweils mit einer Stärke von 0,25 bis 0,40 mm oder aus einer gleichstarken, vernetzten PU-Dispersionsschlagschaumschicht oder einer Polyacrylatschaumschicht besteht. Die Trägerschicht wird somit mit einer Schicht aus geschäumten Weich-PVC oder einem vernetzten PU-Schaum oder einer Polyacrylatschicht beschichtet.

Ein erfindungsgemäßes Schichtmaterial ist durch die im Kennzeichen des Anspruchs 11 angeführten Merkmale charakterisiert. Ein derartiges Schichtmaterial kann auch nach längerer Lagerungszeit bei erhöhter Temperatur und gleichzeitiger Anwendung von Druck oberflächenstrukturiert werden, da es nicht vernetzt bzw. ohne Vernetzer erstellt ist oder untervernetzt ist und somit thermoplastisch verformbar ist und bleibt.

Der PU-Schaum des Schichtmaterials besitzt ein spezifisches Gewicht von 0,8 bis 1,05 kg/dm³. Die Schicht aus PU-Schaum besitzt eine Dicke von 0,030 bis 0,450 mm, vorzugsweise 0,075 bis 0,450 mm. Für die Schicht werden Polyurethane eingesetzt, vorteilhaft aliphatische oder aromatische Polyurethane auf Polyether- oder Polyester- oder Polycarbonatbasis. Die Schicht aus PU-Schaum kann Pigmente und/oder Vernetzer und/oder Polyacrylate enthalten und allenfalls an Stelle eines eingeschlagenen Gases die vorgesehenen Mikrohohlkugeln. Die Schicht aus verfestigtem, getrocknetem PU-Schaum weist vorteilhaft eine Shore-A-Härte von 28 bis 68 auf. Auf der Oberfläche der Schicht und der auf die Schicht aufgebrachten weiteren Schicht ist eine Strukturierung ausgebildet bzw. eingeprägt. Die strukturierte Schicht, auch wenn sie Vernetzer enthält, d.h. untervernetzt ist, ist und bleibt thermoplastisch. Die Schicht aus PU-Schaum weist eine Dicke auf, die nur 2 bis 18 %, vorzugsweise 3 bis 9 %, dicker als eine Schicht ist, die aus einer gewichtsgleichen Menge aus ungeschäumter PU-Dispersion bzw. ungeschäumter PU-Dispersionsmischung gleicher Zusammensetzung gebildet ist, nachdem diese Menge über eine gleich große Fläche wie der PU-Schaum verteilt wurde.

Die Messung der Shore-A-Härte erfolgt derart, dass eine Vielzahl der zu untersuchenden Schichten aus dem jeweiligen Material, vorzugsweise aus verfestigtem oder getrocknetem oder strukturiertem PU-Schaum, angefertigt und gestapelt wird und damit ein Prüfkörper mit einer Stärke von 5 mm in Anlehnung an die Norm DIN ISO 7619-1 erstellt wird, der sodann vermessen wird.

Die Verwendbarkeit und Verarbeitbarkeit des Schichtmaterials wird optimiert bzw. ein Oberflächenschutz des strukturierten PU-Schaums wird erreicht, wenn bei einer von einem Textilmaterial gebildeten Trägerschicht zwischen der Oberfläche des Textilmaterials und der Schicht eine dünne Lage aus geschäumtem Weich-PVC oder aus einer vernetzten PU-Dispersion oder einer vernetzten PU-Dispersionsmischung, vorzugsweise aus aliphatischem Polyurethan auf Polyester- oder Polyether- oder Polycarbonatbasis oder aus einer Polyacrylatdispersion, ausgebildet ist, welche Lage eine Dicke von 0,25 bis 0,40 mm besitzt und eine Verbindungsschicht für die aufzubringende Schicht aus PU-Schaum darstellt, wobei gegebenenfalls die beiden Schichten eine Gesamtdicke von 0,35 bis 0,60 mm ausbilden.

Es wird auf die Oberfläche der Schicht eine dünne wärmestrukturierbare, nicht geschäumte, weitere Schicht aus einer getrockneten PU-Dispersion mit einer Dicke von 0,0150 bis 0,060 mm, vorzugsweise 0,020 bis 0,0450 mm, aufgebracht bzw. an die Schicht angebunden, wobei in der weiteren Schicht aus PU-Schaum eine der Strukturprägung in der Schicht entsprechende Struktur ausgebildet bzw. eingeprägt ist. Die weitere Schicht weist eine größere Shore-A-Härte auf als die Schicht aus PU-Schaum bzw. besitzt eine Härte von mehr als 70 Shore-A und enthält gegebenenfalls 1 bis 4 Gew.-% Polysiloxane. Die weitere Schicht besteht vorzugsweise zu mehr als 45 Gew.-% aus Polyether-Polyurethan auf Polycarbonatbasis, wie das Produkt Aquaderm Finish HW2 der Firma Lanxess AG.

Sofern als Trägerschicht ein Leder eingesetzt wird, hat es sich als vorteilhaft erwiesen, wenn das Narbenleder ein vollnarbiges Rindleder, vorzugsweise Rinds-Spaltleder, Kalbleder, Ziegenleder, Schweineleder, Schafleder, Wasserbüffelleder oder Känguruleder ist, bei welchem Leder die Narbenschicht vorteilhafterweise um mindestens 5 % bis maximal 60 % mechanisch entfernt ist. Ein Lederfaserwertstoff kann zerkleinerte Stanzabfälle aus Oberleder und/oder synthetische Fasern enthalten.

Sofern als Trägerschicht ein Mikrofaservlies vorgesehen ist, ist es von Vorteil, wenn die Fasern des Mikrofaservlieses aus Polyester oder Polyamid bestehen, wobei die Hohlräume zwischen den Fasern mit einem Kunststoff, vorzugsweise auf Polyurethanbasis imprägniert bzw. gefüllt sind, der eine Schaumstruktur oder eine koagulierte Mikrozellenstruktur aufweist.

Der PU-Schaum kann vorteilhafterweise eine offenzellige Struktur besitzen und/oder luftdurchlässig sein und/oder eine Wasserdampfdurchlässigkeit von mehr als 0,050 mg/cm²/h, vorzugsweise von mehr als 0,12 mg/cm²/h, gemäß DIN EN ISO 14268 aufweisen, womit vor allem bei Stanzteilen für Schuhe Vorteile erreicht werden. Erfindungsgemäß eignet sich das Schichtmaterial besonders vorteilhaft für die Herstellung von Gegenständen wie z.B. Zuschnitte, Stanzteile, Schuhteile, Sport- und Arbeitsschuhe, Schuheinlegesohlen, Taschen, Lederwaren, Lenkradbezüge, Polsterungsüberzüge, Innenwandverkleidungen und Sitzbezüge für Kraftfahrzeuge und partiell Beschichtung für den Schutzbereich von Textilien Uniformen, Arbeitsbekleidungen, Sicherheitsbekleidungen.

Die erfindungsgemäß erstellten Gegenstände besitzen eine mittels einer Matrize beliebig gestaltete Oberfläche, in der Narbenlederstrukturen, Textilstrukturen, geometrische Strukturen, Namenszüge, Logos sowie Oberflächenbereiche unterschiedlicher Struktur und/oder unterschiedlicher Rauigkeit ausgebildet sein können. Dazu ist es lediglich erforderlich, die strukturgebende Fläche der Matrize aus Silikonkautschuk oder Silikonharz entsprechend zu gestalten. Die Gestaltung der Oberflächen der Matrize kann durch Abformen, zum Beispiel eines Textils, mechanisch oder durch Laserabtragung oder im 3D-Druckverfahren erfolgen. Es muss dazu nicht unbedingt die für die Strukturgebung bei der Herstellung aus Schichtmaterials eingesetzte Matrize oberflächenbearbeitet worden sein, sondern die eingesetzte Matrize kann auch eine Negativmatrize einer ursprünglich erstellten Positivmatrize sein.

Die Erfindung ermöglicht eine Materialeinsparung an einzusetzendem Polyurethan, da die PU-Dispersionen geschäumt werden bzw. Gas enthalten und damit die Menge an erforderlichen Polyurethan durch die in dem PU-Schaum enthaltenden Gasblasen verringert wird. Damit ergibt sich gleichzeitig für die Schicht aus PU-Schaum ein geringeres Gewicht. Es werden ausschließlich wasserbasierte PU-Dispersionen eingesetzt, womit die Herstellung umweltfreundlich verläuft und schädliche bzw. umweltschädliche Verfahrensrückstände vermieden werden. Schließlich ist beim Prägen von Stanzteilen ein rascher Wechsel von unterschiedlichen Matrizen möglich und damit wird eine individuelle Fertigung von Gegenständen mit unterschiedlicher Oberflächengestaltung leicht möglich. Besonders vorteilhaft ist es, wenn die Trägerschicht von Zuschnitten im Siebdruckverfahren mit PU-Schaum beschichtet wurde. Es entfällt dann die Entsorgung von Abfällen der Trägerschicht bzw. wird der PU-Schaum lediglich auf den Zuschnitt aufgetragen und mit PU-Schaum versehene Reste von Trägerschichten fallen nicht an. Besonders vorteilhaft und wirtschaftlich ist es, wenn aus einem großflächigen mit PU-Schaum beschichteten Schichtmaterial Kleinformatteile bzw. Stanzteile herausgetrennt und danach geprägt werden. Derartige Stanzteile können vor dem Prägen gut zwischengelagert werden.

Erfindungsgemäß ist das Strukturieren von Formatteilen und Stanzteilen im Gegensatz zu ganzen Lederhäuten oder Bahnenware einfach zu handhaben. Zum individuellen Gestalten der Oberfläche können die Format- bzw. Stanzteile, z.B. in einer Schuhfabrik, mittels eines computergesteuerten Werkzeugs einer Farbaufdruckmaschine und/oder einer Prägevorrichtung zugeführt und wieder entnommen werden. Kleine Matrizen lassen sich im Gegensatz zu großen Matrizen digital gesteuert leicht und preiswert strukturieren. Energie kann gespart werden, weil beim Strukturiervorgang die Matrize immer heiß ist bzw. bleibt. Der Strukturierungsvorgang dauert nur wenige Sekunden. Die Herstellung der Matrize mit einer Silikon- oder Textiloberfläche ist äußerst kostengünstig und kann, im Gegensatz zu Prägewerkzeugen aus Metall oder Prägewalzen, innerhalb von einem Tag erfolgen.

Anhand der Zeichnungen wird die Erfindung beispielsweise näher erläutert.

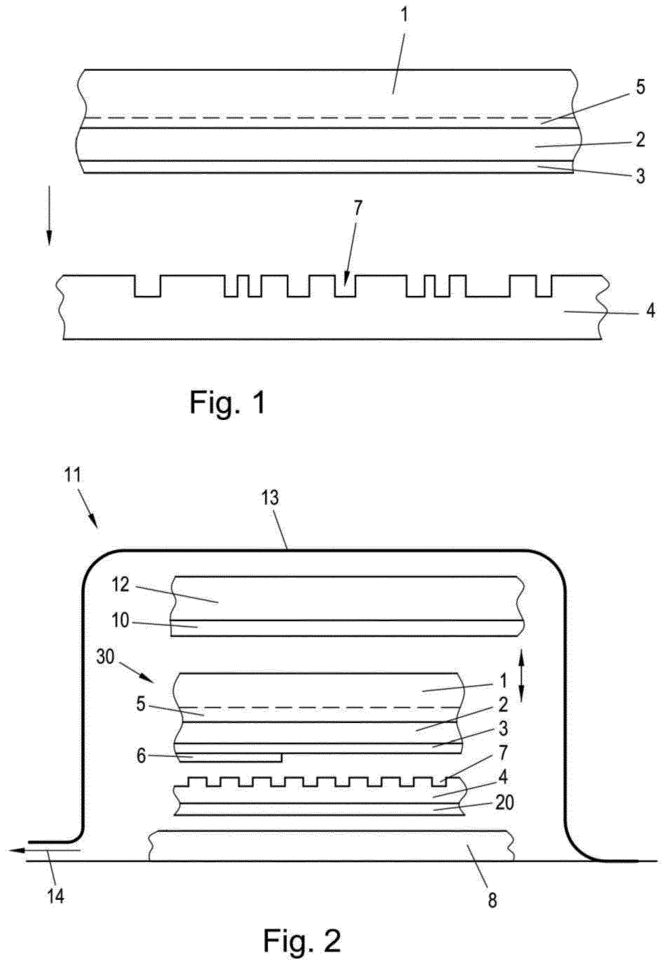

Fig. 1 zeigt schematisch einen Schnitt durch ein erfindungsgemäß aufgebautes Schichtmaterial. Fig. 2 zeigt schematisch den Strukturierungsvorgang. Das erfindungsgemäße Schichtmaterial wird derart erstellt, dass auf die Oberfläche einer Trägerschicht 1 eine Schicht 2 aus einem PU-Schaum angebunden bzw. aufgebracht wird. Wenn es sich bei der Trägerschicht 1 um ein Textilmaterial handelt, so kann dieses Textilmaterial als Basisschicht zur Vorbeschichtung oberflächlich mit einer Lage 5 aus einem Weich-PVC oder aus einem PU-Schaum, erstellt aus einer PU-Dispersion oder PU-Dispersionsmischung oder aus einer Polyacrylat-Dispersion, versehen werden, um die Schicht 2 aus PU-Schaum mit dem allenfalls groben Textilmaterial gut verbinden zu können. Beim Prägen der Schicht 2 mit der Matrize 4 wird die Schicht 2 zwar verformt, aber sie dringt nicht in die Trägerschicht 1 ein.

Auf die Schicht 2 aus PU-Schaum wird vor ihrer Strukturierung eine weitere Schicht 3 aus einer nicht geschäumten PU-Dispersion oder einer nicht geschäumten PU-Dispersionsmischung aufgetragen. Mit einer schematisch in Fig. 1 dargestellten Matrize 4 kann der Schicht 2 bzw. der darauf vorhandenen weitere Schicht 3 die angedeutete Oberflächenstruktur 7 verliehen werden. Mit entsprechenden Pressen und bei Einsatz von Heizeinrichtungen, z.B. Infrarotstrahlern - Fig. 2 - erfolgt das Aneinanderdrücken der Trägerschicht 1 und der Matrize 4. Die Matrize 4 kann für den Prägevorgang auf die erforderliche Temperatur erwärmt werden, um den PU-Schaum auf die gewünschte Erweichungstemperatur zu bringen. Wenn eine kalte oder nicht ausreichend erwärmte Matrize 4 eingesetzt wird, kann die Schicht 2 vor ihrem Kontakt mit der Matrize 4 erwärmt werden, beispielsweise mit einem Infrarotstrahler.

Vor dem Prägen ist die Oberfläche der Schicht 2 bzw. der weiteren Schicht 3 glatt und eben.

Der Einsatz eines PU-Schlagschaums oder PU-Schaums mit Mikrohohlkugeln bietet gegenüber nicht geschäumten bzw. nicht gashaltigen Beschichtungen den Vorteil, dass beim Prägen unter Temperatur und Druck der oberflächenstrukturierte PU-Schaum in sich stauchbar und verformbar ist. Luft und Feuchtigkeit, die beim Auflegen auf die Schicht 2 auf die Matrize 6 vorhanden sind, können entweichen, sodass ein lunker- und blasenfreies Prägen erfolgt.

Wenn der PU-Schaum getrocknet ist, kann das Schichtmaterial vor einer Weiterverarbeitung zu Zuschnitten gestanzt werden und die Zuschnitte werden sodann unabhängig voneinander einer Prägung bzw. Oberflächenstrukturierung unter Druck und Temperatur unterzogen.

Die weitere Schicht 3 kann entweder direkt auf die PU-Schaumschicht 2 aufgebracht werden oder sie wird auf die Matrize 4 aufgebracht und auf der Matrize wasserfrei bzw. nahezu wasserfrei getrocknet und gegebenenfalls so vorvernetzt bzw. so untervernetzt, dass sie dort unmittelbar und heiß abziehbar ist und beim Prägen mit der Schicht 2 untrennbar verbunden werden kann; am geprägten Schichtmaterial ist nicht mehr erkennbar, wie die Schicht 3 aufgebracht wurde.

Beim Heißtrocknen von PU-Dispersionen können Haarrisse und Lunker entstehen, die aber beim erfindungsgemäß erfolgenden Strukturieren durch das Plastifizieren der Schicht, insbesondere aufgrund der gewählten Drucke, geheilt werden und nicht mehr stören.

Die erfindungsgemäße Vorgangsweise setzt vorteilhafterweise lediglich nicht toxische Materialien ein, die auch von ungelernten Arbeitskräften wirtschaftlich und sicher verarbeitet werden können. Des Weiteren ist das Prägen eines bereits getrockneten PU-Schaums matrizenschonend, da der in dem PU-Schaum enthaltene Vernetzer nicht mehr nass ist und nicht in dem Ausmaß wie bei üblichen Beschichtungen mit der Matrize in Kontakt gelangt, weil Vernetzer aggressiv auf Silikonmatrizen einwirken und diese korrodieren.

Bei der Berechnung des spezifischen Gewichtes des PU-Schaums ist zu berücksichtigen, dass dieser je nach Anwendungszweck unterschiedliches spezifisches Gewicht aufweisende Pigmente bzw. Zusatzstoffe enthalten kann. Beispielsweise ist Titandioxyd als weißer Zusatzstoff zur Farbgebung sehr schwer, wogegen andersfarbige Pigmente wesentlich geringeres spezifisches Gewicht aufweisen können. Falls der offenzellige PU-Schaum mit Gas befüllte Mikrohohlkugeln, die bekanntlich geschlossene Zellen darstellen, enthält, müssen diese bei der Berechnung der Dichte durch Abzug berücksichtigt werden.

Die geschäumte und thermoplastische Schicht 2 aus PU-Schaum wird mittels Wärme und Druck zum Annehmen der Negativstruktur der Matrize 4 komprimiert. Der Mikroschaum wird dabei so verdichtet, dass ein Teil der Mikrozellen verloren geht und der PU-Schaum zwar noch eine offenzellige Mikroschaumstruktur aufweist, die aber dann nur ein Gewicht von 0,80 bis 1,05 kg/dm³ aufweist. Eine nicht geschäumte, mit der gleichen Formulierung hergestellte, kompakte Schicht hat dagegen eine Dichte von 1,050 bis 1,120 kg/dm³. Dies ergibt erfindungsgemäß einen Vorteil an Gewicht und eingespartem Material. Durch die beim Prägen kontrollierbare Verdichtung des PU-Schaums lassen sich im Gegensatz zu ungeschäumten Beschichtungen auch bei geringem Druck tiefere Strukturen darstellen und überraschend ist, dass die Weichheit erhalten bleibt.

Dadurch, dass die Schicht 2 wasserdampf- und luftdurchlässig ist, wird beim Heißverpressen entstehendes, expandierendes Gas bzw. allfälliger Restwasserdampf durch die Schicht 2 in die Trägerschicht 1 abgeleitet und es entstehen keine Lunker, Blasen und Risse. Beim Auflegen der trockenen Schicht 2 auf die heiße oder aufzuheizende Matrize ist es wichtig, dass die sich bei Wärme ausdehnende Luft bzw. Restgase, die in bzw. durch die Matrize nicht entweichen können, durch den offenzelligen PU-Schaum bzw. durch die Trägerschicht 1 abgeführt werden können. Wenn die Schicht keine offenzellige Mikrostruktur aufweisen würde, würden in den Narbtälern der Matrizen Fehlstellen entstehen, die sich als unerwünschte Poren und Glanzstellen darstellen.

Die dünne, härtere, nicht geschäumte Schicht 3 ist bei der bevorzugten Stärke unter Druck auch luftdurchlässig, sodass auch die Luft, die sich in den Narbtälern der Matrize 4 befindet, entweichen kann.

Strukturierte Oberflächen durch Heißverpressen kommen vor allem für Schuhe, Lenkräder, Taschen, Lederwaren, etc. zum Einsatz. Erfindungsgemäß können Formatteile z.B. in den Abmessungen von 0,35 bis 0,9 m² einfach hergestellt werden, indem Sets von Formatteilen aus der eingesetzten Trägerschicht 1 mit geringem Stanzabfall ausgestanzt werden. Ein Formatteil kann dabei so groß ausgebildet werden, dass er die Schaftteile beispielsweise für ein Paar Schuhe abdeckt.

Die komplette PU-Dispersionsmischung enthält vorteilhafterweise vor dem Aufschäumen bis zu 4,2 Gew.-% Vernetzer, bezogen auf das Gesamtgewicht der PU-Dispersionsmischung. Entsprechend ist die getrocknete PU-Dispersionsmischung untervernetzt und ist bzw. bleibt thermoplastisch verformbar. Vorteilhafterweise kann den jeweiligen PU-Dispersionsmischungen zur Verbesserung der Hydrolysebeständigkeit 8 bis 25 Gew.-% einer 40 bis 50 %-igen Acrylatdispersion, die vorteilhafterweise mit Isocyanat vernetzbar ist, zugesetzt werden.

Wenn eine 50 %-ige PU-Dispersion, d.h. 50 Teile Feststoff und 50 Teile Wasser, als Film von beispielsweise 0,15 mm Dicke auf einen Träger aufgetragen wird, so schrumpft bzw. kollabiert dieser Film beim Trocknen mittels Hitze um ca. 50 % durch Wasserverlust. Außerdem wird der Film beim Trocknen (z.B. im Wärmetrockenkanal) bei 120 °C rissig, weil sich auf der Oberfläche eine Haut bildet, welche die Wasserentfernung aus dem Film unter der Haut erschwert. Die Trocknung muss also langsam und bei niedriger Temperatur unterhalb von 80 °C über einen längeren Zeitraum erfolgen, was unwirtschaftlich ist. Vorteil der Erfindung ist, dass der PU-Schaum nicht wie beim Umkehrverfahren direkt auf die endgültige Trägerschicht aufgebracht wird. Es wird ein Teil des Wassers vom Träger aufgenommen und kann bei Temperaturen von 100 bis 120 °C in weniger als zwei Minuten entweichen, ohne dass Risse und Lunker entstehen, die beim Strukturieren nicht heilbar sind.

Die jeweilige(n) PU-Dispersionsmischung(en) enthält/enthalten zum Schäumen und zum Stabilisieren des aufgeschlagenen Schaums Schäumhilfsmittel, im einfachsten Fall ein Ammoniak enthaltendes Schäumungsmittel in einer Menge von 0,5 bis 2 Gew.-% (bezogen auf das Gesamtgewicht der jeweiligen PU-Dispersionsmischung mit Zuschlägen. Verdickungsmittel, z.B. auf Acronalbasis (Wesopret A2), können der jeweiligen PU-Dispersion bzw. der PU-Dispersionsmischung in einer Menge von 1 bis 4 Gew.-% (bezogen auf das Gesamtgewicht der jeweiligen PU-Dispersion mit Zuschlägen.

Der PU-Schaum wird durch das Einrühren von Gas bzw. Luft mit an sich bekannten Rührwerken, ähnlich einem Rührer zur Herstellung von Schlagsahne oder Eischnee, gebildet.

Bei den eingesetzten PU-Dispersionen handelt es sich um wässrige PU-Dispersionen.

Die Messung bzw. Überprüfung des Erweichungspunktes erfolgt auf der Kofler-Bank.

Erfindungsgemäß werden besonders gute Verformungseigenschaften für die Gestaltung der Oberfläche und eine exzellente Verbindungen zwischen der Trägerschicht 1 und der geschäumten bzw. gashaltigen Schicht 2 erzielt, wenn die PU-Dispersionsmischung 18 bis 52 Gew.-% einer PU-Dispersion in Form eines wärmeaktivierbaren Kontaktklebers oder einer Mischung von derartigen PU-Dispersionen enthält, wobei die PU-Dispersionen oder die Mischung einen PU-Feststoffanteil von 40 bis 50 % besitzt und wärmeaktivierbar ist und bereits bei einer Temperatur von 45 °C pastös und klebrig wird. Derartige PU-Dispersionen sind wärmeaktivierbare PU-Dispersionskontaktkleber auf Polyurethanbasis, wie z.B. das Produkt Luphen der der Firma BASF oder KECK-DIS 779 der Firma Keck Chemie GmbH oder Köracoll 3350 der Firma Kömmerling Chemische Fabrik GmbH. Bei Zusatz und nach dem Wirksamwerden eines Vernetzers, wie zum Beispiel das Produkt Aquaderm XL 80 der Firma Lanxess AG aus Köln, wird der Erweichungspunkt derartiger PU-Dispersionen zu höheren Temperaturen verlagert. Die PU-Dispersionsmischung, welche den wärmeaktivierbaren Kontaktkleber enthält, verliert aber ihre thermoplastischen Eigenschaften nicht, auch wenn die getrocknete, wasserfreie Schicht 2 aus PU-Schaum beim Gestalten der Oberfläche mittels Hitze und Druck auf eine Temperatur von über 110 °C, vorzugsweise über 145 °C, gebracht worden ist. Der PU-Schaum enthält nämlich entweder keinen Vernetzer oder ist derart untervernetzt, dass seine thermoplastischen Eigenschaften bzw. seine thermoplastische Verformbarkeit erhalten bleiben.

Dieser PU-Dispersion mit Schmelz- bzw. Kontaktklebereigenschaften wird eine PU-Dispersion oder werden mehrere PU-Dispersionen im Ausmaß von 39 bis 73 Gew.-% - bezogen auf das Gesamtgewicht der PU-Dispersionsmischung - zugemischt, deren Erweichungspunkt höher als 125 °C liegt, wobei diese PU-Dispersionen oder die Mischung derartiger PU-Dispersionen selbst aber keine Schmelz- bzw. Kontaktklebereigenschaften besitzt.

Mit der Erfindung wird auch der bekannte Nachteil, dass mit PU-Dispersionen hergestellte Beschichtungen auf hydrophoben Trägern nur ungenügende Haftung bzw. Verbindung erlangen, behoben. Ein hydrophober Träger verhindert das Eindringen von PU-Dispersion, die in der Regel mehr als 40 % Wasser enthalten in die Oberfläche des Trägers. Dieser in der Lederbranche bekannte Nachteil von PU-Dispersionen zur Beschichtung wird erfindungsgemäß verbessert, weil der erfindungsgemäß eingesetzte PU-Schaum nach seinem Trocknen beim Strukturieren sich wie ein wärmeaktivierbarer Schmelzkleber verhält, der unter Druck in feinste Vertiefungen eines Trägers eindringen kann. Der PU-Schaum verankert sich in der Trägerschicht wie ein Schmelzkleber und verbessert die Haftung.

Für die Feststellung, ob eine PU-Dispersionsmischung bzw. ein damit hergestellter PU-Schaum für die Strukturierung geeignet ist, erfolgt eine Prüfung der für das Heißprägen benötigten Eigenschaften wie Thermoplastizität, Klebrigkeit und Fließverhalten unter Wärme und Druck. Dies erfolgt derart, dass man eine Schicht mit einer Stärke von 1,0 mm aus einem getrockneten, noch nicht vernetzten PU-Schaum, d.h. eine Schicht aus PU-Schlagschaum und/oder Gasblasen enthaltenden PU-Schaum, ausbildet und der eine 0,02 mm nichtthermoplastische nicht geschäumte Schicht aufweist und diesen im Wärmeofen oder auf der Kofler-Bank bei einer Temperatur, insbesondere von 90 °C bis 165 °C, vorzugsweise von 110 bis 150 °C, bezüglich der genannten Eigenschaften beurteilt. Bei positivem Resultat wird diese Schicht aus PU-Schaum in einer Presse mit einer mit der gewünschten Oberflächenstruktur versehenen Silikonkautschukmatrize, die eine Shore-A-Härte von 75 besitzt, bei Temperaturen von 110 °C bis 165 °C und Presszeiten von 2 bis 18 s und einem Pressdruck von 4 bis 48 kg/cm² verpresst. Bei diesen Temperaturen hat der PU-Schaumfilm hochviskos klebrig zu sein, darf aber nicht zu dünnflüssig sein, muss die Matrize optimal abbilden und muss sich von der Matrize leicht ohne Verformung abziehen lassen, ohne die ausgebildete Struktur zu verändern. In der Regel erfüllen die genannten handelsüblichen PU-Dispersionen dieses Erfordernis. Für den Fachmann ist es einfach ein entsprechendes Mischungsverhältnis von derartigen handelsüblichen PU-Dispersionen einzustellen bzw. können Anpassungen an unterschiedliche Anwendungszwecke bzw. unterschiedliche Oberflächenstrukturen und unterschiedliche Beanspruchungen vorgenommen werden und die Erweichungs- und Prägetemperatur eingestellt bzw. vorgegeben werden.

Ganz allgemein werden für die Erstellung der Matrizen 4 handelsübliche Silikonkautschukabformmassen oder Silikonharze verwendet, wobei die Matrizen eine Shore-A-Härte von 25 bis 98 besitzen. Die Dichte der Matrizen beträgt mehr als 1,150 g/cm³ und sie sind kondensations- oder additionsvernetzt. Die erstellten Matrizen sind mittels Laser oder mechanisch gravierbar bzw. können in einem 3D-Druckverfahren hergestellt werden.

Eine Matrize zum Strukturieren eines aus dem Schichtmaterial herausgeschnittenen Formatteiles kann, wenn diese Matrize im 3D-Druckverfahren hergestellt wurde, auch aus einem anderen Material als einem Silikonpolymer bestehen. In diesem Fall muss der Schmelzpunkt dieses Materials über 185 °C liegen und bei dieser Temperatur noch die gleiche und nur eine um maximal 5 % abweichende Härte wie bei 20 °C besitzen. In Frage kommen hierfür zum Beispiel Epoxid- und Polyesterharze oder niedrig schmelzende Metalllegierungen. Es ist möglich, auch bei derartigen Matrizen bzw. Materialien Stege und Fortsätze bzw. Dornen auszubilden, um Kapillaren in den Schichten 2, 3 bei gleichzeitiger Strukturierung auszubilden.

Die Erfindung wird im Folgenden anhand von Beispielen näher erläutert.

### BEISPIEL 1:

Die dreidimensionale Struktur eines Flechtmaterials, bestehend aus 5 mm breiten Lederbändern mit Vertiefungen zwischen den Lederbändern von 0,6 bis 0,9 mm, wurde durch Abformen mit einer Silikonkautschukmasse auf eine Matrize übertragen. Die Matrize hat eine Stärke von 2,2 mm und eine Härte von 86 Shore A und zeigt exakt die Struktur im Negativ.

Eine Mischung für eine Schicht 2 wurde bereitet, bestehend aus:
300 g Köracoll 3350 mit einem Feststoffanteil von ca. 48 % und einer Aktiviertemperatur von ca. 45 °C von der Firma Kömmerling Chemische Fabrik GmbH.
650 g Cerfan Expert Soft mit einem Feststoffanteil von ca. 50 %, nicht wärmaktivierbar, von der Firma HELCOR-LEDER-TEC GmbH
20 g Vernetzer XL 80 von der Firma Lanxess AG
10 g Melio Foam AX-03 der Fa. Stahl
5 g TS 100
5 g Mikrohohlkugeln mit einem Durchmesser von 20-40 µ trocken
15 g Verdicker Acrylatdispersion mit ca. 60 % Feststoff
30 g Pigment schwarz

Nach 5 Minuten Rühren hatte die Mischung eine Viskosität von 45 Sekunden im Fordbecher mit 8 mm Durchmesser.

Danach wurde 1 Liter dieser Mischung durch Lufteinschlagen auf 1,25 Liter aufgeschäumt.

Mittels einer gravierten, gegenläufigen Walze wurden 390 g auf ein Spaltleder als Trägerschicht 1 aufgetragen.

Die nasse Dispersionsoberfläche sah homogen aus.

Die Trocknung erfolgte in einem Wärmeofen mit Luft bei 105 °C in 2,5 Minuten auf einen Wassergehalt von 0,8 %. Die Stärke der getrockneten Schaumschicht betrug danach 0,27 mm.

Die Oberfläche zeigte nach dem Trocknen feine Haarrisse, war aber sonst eben und blasenfrei.

Auf die Oberfläche der Schaumschicht erfolgte ein weiterer Auftrag einer Dispersionsmischung als Schicht 3 bestehend aus:
600 g Aquaderm HW2 der Firma Lanxess AG
350 g DLV-N der Firma Lanxess AG
25 g Vernetzer XL 80 der Firma Lanxess AG
100 g Wasser
30 g Pigment schwarz
150 g Mattierungsmittel der Firma HELLER-LEDER GmbH
15 g Griffmittel HW 283 der Firma Stahl

Diese Mischung hatte eine Viskosität von 25 Sekunden im Fordbecher mit einem Durchmesser von 4 mm. Mittels eines Sprühauftrags wurden 70 g nass aufgetragen und bei einer Temperatur von 110 °C und Luft in 1 Minute auf Wasserfreiheit getrocknet. Die feinen Haarrisse waren sichtbar. Die trockene Schicht hatte eine Stärke von 0,025 mm. Nach einer Lagerzeit von 48 Stunden wurden aus dem Schichtmaterial mit einer ebenen Oberfläche Schuh- und Taschenteile herausgeschnitten und dreidimensional strukturiert. Die Silikonkautschukmatrize mit ihrer Negativstruktur hatte eine Temperatur von 145 °C. Der Pressdruck am zu strukturierenden Teil betrug 9 kg/cm². Er wurde 10 Sekunden aufrecht gehalten. Danach wurde der Teil von der heißen Matrize 4 ohne Aufwand entformt und fehlerfrei von der Matrize abgezogen. Die Haarrisse in der Schaumschicht wurden beim Plastifizieren unter Druck geschlossen bzw. entfernt. Die dreidimensionale ausgebildete Oberfläche hatte das gleiche Aussehen und die selbe Struktur wie das Flechtmaterial aus Lederbändern. Querschnitte der Beschichtung zeigten bei 50-facher Vergrößerung weder Haarrisse noch Lunker in der Schaumschicht. Der fertige Teil war nach der Strukturierung noch so weich wie vorher und war lediglich 0,02 % dünner als vor dem Strukturieren.

### BEISPIEL 2:

Aus dem gleichen beschichteten Flächenmaterial wie in Beispiel 1 wurde ein Formatzuschnitt für eine Tasche 22 x 28 cm herausgetrennt und mit einer textilen Struktur dreidimensional geprägt und zwar bei einer Temperatur von 140 °C und einem Druck von 8 kg/cm² und einer Verweilzeit von 7 Sekunden. Das textile Material war ein in sich gemustertes gitterartiges Polyestergewebe in einer Stärke von 0,6 mm und war mit einer 1,0 mm dünnen Aluminiumplatte verbunden. Der dreidimensional strukturierte Teil zeigte negativ exakt die Textilstruktur. Das Abziehen von der Textilmatrize war leicht und ohne Kleben möglich, weil die dünne ungeschäumte Schicht 3 sich ohne klebrig zu werden der Schicht 2 und der strukturgebenden Textiloberfläche anpasste.

### BEISPIEL 3:

Die Narbenseite eines Rindsnarbenleders wurde mit Schleifpapierkörnung 180 um 0,05 mm abgeschliffen. Auf der geschliffenen Seite wurde zur Ausbildung der Schicht 2 ein PU-Schaum in einer Stärke 0,220 mm mittels einer gegenläufigen Walze aufgebracht. Bei einer Temperatur von 110 °C und Umluft wurde der Wassergehalt im Verlauf von 2,5 Minuten auf 1,3 Gew.-% reduziert. Der PU-Schaum nahm im Zuge der Trocknung lediglich um 0,06 mm in seiner Dicke ab.

Der Schaum wurde erstellt aus 420 g PU-Dispersion mit der Bezeichnung KECK-DIS 779 der Firma Keck Chemie GmbH mit wärmeaktivierbaren Kontaktklebereigenschaften mit einem Feststoffanteil von ca. 40 % und 480 g Polyurethandispersion mit einem hohen Erweichungspunkt von über 140 °C und ohne Klebeeigenschaften mit einer amorphen Struktur auf Polyesterbasis und einem Feststoffanteil von ca. 40 % mit der Bezeichnung DLV-N der Firma Lanxess AG sowie 20 g Meliofoam-Paste, 30 g Verdicker, 50 g Pigment.

Die PU-Dispersionsmischung hatte nach dem Trocknen im Wärmeschrank einen Erweichungspunkt bzw. -bereich, der bei einer Temperatur von 125 °C ein ausgezeichnetes Prägen zuließ.

Diese Mischung besaß ein Volumen von 1,07 l und wurde mit einem handelsüblichen Schaumschläger auf ein Volumen von 1,35 l durch Einschlagen von Luft aufgeschlagen bzw. vergrößert. Der eine schlagsahneartige Konsistenz besitzende Schaum wurde auf die geschliffene Seite des Narbenleders mit einer Stärke von 0,220 mm appliziert und getrocknet. Nach 48 Stunden erfolgte die Prägung, wobei der Wassergehalt des PU-Schaums weniger als 1 Gew.-% betrug.

Die Prägung erfolgte mit einer Matrizentemperatur von 125 °C und einem Druck von 8 kg/cm². Der Druck wurde 11 Sekunden lang aufrechterhalten.

Die Struktur des Trägers bzw. Leders war durch den Schaum bzw. die Schicht 2 nicht sichtbar. Die Verbindung bzw. die Schichtausbildung erfolgte lunker- und blasenfrei; ein Einfallen trat nicht auf.

Bei Ausbildung einer weiteren Schicht 3 auf der Schicht 2 aus PU-Schaum, die, wie zuvor angegeben wurde, erstellt wurde, ergab sich eine Wasserdampfdurchlässigkeit von 0,8 mg/cm²/h. Um diese weitere Schicht 3 zu erstellen, wurde eine Schicht aus PU-Dispersionsmischung, die nicht geschäumt war, in einer Stärke von 0,020 mm nach dem Trocknen auf der zur Strukturierung eingesetzte Matrize 4 ausgebildet. Bezogen auf ihr Gesamtgewicht wurde diese PU-Dispersionsmischung erstellt mit 60 g PU-Dispersion auf Polycarbonatätherbasis mit der Bezeichnung Aquaderm Finish HW2 der Firma Lanxess AG mit einem Feststoffanteil von ca. 35 Gew.-%. Dazu gemengt wurden 40 g PU-Dispersion auf Polyesterbasis mit einem Feststoffgehalt von 40 Gew.-% und der Bezeichnung DLV-N von der Firma Lanxess AG. Des Weiteren enthielt diese PU-Dispersionsmischung 1,8 g XL 80 der Firma Lanxess AG als Vernetzer, 5 g Pigmentpaste schwarz, 3 g Polysiloxan, 1 g Mattierungsmittel TS 100 sowie 20 g Wasser. Eine getrocknete Schicht einer derartigen PU-Dispersion besitzt eine Shore-A-Härte von mehr als 75.

Diese PU-Dispersionsmischung mit den angegebenen Zusätzen wurde 10 Minuten vor dem Strukturiervorgang ungeschäumt auf die Matrize 4 aufgetragen. Es erfolgte eine Trocknung auf weniger als 1 % Wassergehalt. Die Verbindung dieser weiteren Schicht 3 mit der auf dem Träger 1 befindlichen - oben angegebenen - Schicht 2 aus PU-Schaum erfolgte im Zuge der Kontaktierung der Schicht 2 mit der Matrize 4 bei der oben genannten Prägetemperatur und Prägedruck. Dabei wurde diese weitere Schicht 3 untrennbar mit der Schicht 2 aus PU-Schaum verbunden. Diese Schicht 3 hat eine Härte von 75 Shore-A.

Die sich ergebende hohe Haftung von PU-Dispersion-basierten Schichten bei hyrophoben Trägern, insbesondere bei hydrophobierten Ledern in Kombination mit der Wasserdampfdurchlässigkeit ist vor allem für Sicherheitsschuhe der Klasse S1 und S2 Voraussetzung und wird mit dem erfindungsgemäßen Schichtmaterial abhängig von der Stärke der Schicht 2 ohne Weiteres erfüllt.

Es zeigte sich ferner, dass bei der Verwendung eines mit einem geschäumten Weich-PVC vorbeschichteten Träger es vorzuziehen ist, die Schicht aus PU-Schaum nur mit PU-Dispersionen zu bereiten, die auf Polyester- oder auf Polycarbonatbasis basieren. Bei PU-Dispersionen auf Polyetherbasis könnte unter Umständen eine Weichmacherwanderung in den PU-Schaum eintreten.

Als PU-Dispersionen zur Erstellung des PU-Schaums für die Schichten 2 und 5 werden handelsübliche PU-Dispersionen eingesetzt. Diese handelsüblichen PU-Dispersionen basieren auf aliphatischen oder aromatischen Polyester- bzw. Polyether- oder Polycarbonatpolyurethanen. Derartige PU-Dispersionen besitzen einen Feststoffanteil von 35 bis 52. Der ph-Wert derartiger PU-Dispersionen liegt zwischen 6,5 und 9,5. Nach dem Wasserentzug bzw. der Trocknung besitzt der sich ausbildende Film eine Bruchdehnung von 500 bis 1100 %.

Diese PU-Dispersionen sind vernetzbar, z.B. mit XL 80.

Die Härte eines getrockneten und vernetzten, ungeschäumten Filmes bzw. der Schicht 3 von einsetzbaren PU-Dispersionsmischungen beträgt 45 bis 95 Shore-A, vorzugsweise 70 bis 80 Shore-A. Die gebildeten Schichten sind geruchsneutral und frei von unzulässigen Chemikalien.

Sehr vorteilhaft ist, dass die dünne Schicht 3 aus nicht thermoplastischem, ungeschäumtem Polycarbonat auf Polyetherbasis das Verschleißverhalten bzw. das Abriebverhalten und die Biegefestigkeit der Schicht 2 verbessert.

Ein Vernetzer wurde dem PU-Schaum der Schicht 2 im vorliegenden Beispiels nicht zugesetzt.

Nach der Prägung wurden folgende Werte für die mit der Schicht 3 versehene Schicht 2 ermittelt:
1. Verschleißfestigkeit bzw. Abrieb DIN EN ISO 17076-1 H22 1000x: kein Verschleiß
2. Biegungen DIN EN ISO 540L 125 000 FLEXE: kein Verschleiß
3. Haftung DIN EN ISO 11644: 24N

Ganz allgemein werden für die Erstellung der Matrizen 4 handelsübliche Silikonkautschukabformmassen oder Silikonharze verwendet, wobei die Matrizen eine Shore-A-Härte von 25 bis 98 besitzen. Die Dichte derartiger Matrizen beträgt mehr als 1,150 g/cm³ und sind kondensations- oder additionsvernetzt. Die erstellten Matrizen sind mittels Laser oder mechanisch gravierbar.

### BEISPIEL 4:

Es wurde eine PU-Dispersionsmischung erstellt mit:
460 g handelsüblicher PU-Kontaktkleberdispersion mit wärmeaktivierbaren Kontaktklebereigenschaften und mit einem Feststoffgehalt von ca. 40 Gew.-%.
510 g handelsüblicher PU-Dispersion basierend auf aliphatischem Polyether mit einem Feststoffanteil von 40 % mit einem Erweichungspunkt einer getrockneten Schicht (0,5 Gew.-% Wasser) von 155 °C und einer Härte von 55 Shore-A in getrocknetem Zustand,
40 g Pigmentpaste schwarz,
2 g Verdicker in Form von Polyacrylat,
15 g Schaumpaste Melio Foam,
20 g Vernetzter,
10 g Polyacrylatdispersion mit einem Feststoffgehalt von 50 Gew.-%,
5 g Mikrohohlkugeln mit einem Durchmesser von 20 µ

Ein Liter einer dieser PU-Dispersionsmischungen wurde aufgeschlagen auf 1,25 l.

Es wurde eine Schicht von 0,25 mm mit einer gegenläufig angetriebenen Auftragswalze auf ein Mikrofaservlies aufgetragen und innerhalb von 2 Minuten in einem Umlufttrockner bei einer Temperatur von 115 °C auf 1,0 Gew.-% Wassergehalt getrocknet. Nach 3 Stunden wurde auf die Schaumschicht die Schicht 3, wie im Beispiel 3 bestehend, direkt auf diese Schicht 2 aufgetragen, und zwar in einer Menge, dass die trockene Schicht 3 eine Stärke von 0,02 mm aufweist, und bei einer Temperatur von 135 °C und einem Druck von 8 kg/cm² 15 Sekunden lang mit einer oberflächenstrukturierten Silikonmatrize gepresst und strukturiert.

Danach werden daraus Stanzteile gefertigt. Die Stanzteile zeigen im Positiv exakt die Struktur der Negativmatrize, die das Aussehen von Känguruleder besaß. Die Schicht 2 hatte eine Dicke von 0,100 mm und die Haftung zwischen dem Träger und der Schicht 2 betrug 38 N/cm.

### BEISPIEL 5:

Auf ein Känguruleder mit geschliffenen Narben wurde ein PU-Schaum entsprechend Beispiel 2 mittels einer Walze in einer Stärke von 0,24 mm aufgetragen und bei einer Temperatur von 95 °C auf 1 Gew.-% Wasser getrocknet. Danach wurden Schuhoberteilzuschnitte für Fußballschuhe herausgestanzt und, wie im Beispiel 4 angeführt, strukturiert. Eine Schicht 3, wie im Beispiel 3 erstellt, wurde im Siebdruckverfahren auf die Schicht 2 aufgetragen, und zwar so, dass die Schicht 3 trocken eine Stärke von 0,018 mm aufweist. Die Dicke der Schicht 2 betrug 0,110 mm und die Haftung zwischen Träger 1 und der Schicht 2 betrug 22 N/cm.

### BEISPIEL 6:

Eine Mischung von PU-Dispersionen, jedoch in der Farbe weiß enthaltend 12 g Titanoxid, entsprechend Beispiel 4 wurde aufgeschäumt und der PU-Schaum wurde zur Ausbildung der Schicht 2 airless in einer Stärke von 0,22 mm nass auf ein Mikrofaservlies aufgebracht und bei einer Temperatur von 120 °C 2 Minuten lang auf weniger 1 Gew.-% Wasser getrocknet. Die getrocknete Schicht 2 hat eine Stärke von 0,10 mm. Danach werden Schuhoberteile herausgestanzt. Auf eine unstrukturierte Matrize wurde eine 0,025 mm starke nicht geschäumte PU-Dispersionsmischung aufgetragen, die getrocknet eine Stärke von 0,020 mm besaß. Der Feststoffgehalt dieser PU-Dispersionsmischung betrug 35 Gew.-%. Des Weiteren enthielt diese PU-Dispersion 5 Gew.-% rote Pigmentpaste. Die Stanzteile wurden auf die Schicht 3 auf der Matrize 4 gelegt und, wie in Beispiel 2 beschrieben, verpresst, wobei die Schichten 2 und 3 untrennbar miteinander verbunden wurden und die Textilstruktur der Matrize negativ auf das geprägte Teil übertragen wurde.

### BEISPIEL 7:

Ein Träger aus textilem Material wurde mit einem Weich-PVC-Schaum und ein anderer Träger aus textilem Material wurde mit PU-Schaum als Bahnenmaterial vorbeschichtet mit einer Stärke von 0,30 mm und einer Zusammensetzung entsprechend Beispiel 4, wie sie zur Ausbildung einer Schicht 2 verwendet wurde, jedoch 5 Gew.-% Vernetzer enthält. Auf jeden dieser vorbeschichteten Träger wurde eine wärmestrukturierbare Schicht 2 aus PU-Schaum mittel Rakel in einer Stärke von 0,15 bis 0,45 mm aufgebracht und auf einen Wassergehalt von weniger als 1 Gew.-% getrocknet. Auf diese Schicht 2 wurde eine ungeschäumte Schicht 3 einer PU-Dispersionsmischung in einer Stärke von 0,035 mm aufgebracht. Diese PU-Dispersionsmischung besaß einen Feststoffanteil von 35 Gew.-% und einen Gehalt eines Vernetzers im Ausmaß von 3 Gew.-%. Nach der Trocknung der Schicht 3 wurde der Zuschnitt bzw. wurden die Schichten 2 und 3 bei einer Temperatur von 155 °C strukturiert und miteinander und mit der Schicht 5 fest verbunden.

Die Erfindung ist besonders vorteilhaft zur Herstellung von Format- und Zuschnittteilen, z.B. für Schuhe oder Lenkräder. Es ergibt sich eine vollflächige gute Verbindung zwischen dem jeweiligen Trägermaterial 1 und der Schicht 2. Gleichzeitig ergibt sich eine Temperaturbeständigkeit bis zu 125 °C. Es wird die Forderung erfüllt, dass bis zu diesen Temperaturen eine Lagerung von 24 Stunden erfolgen kann, wobei die Struktur der Oberfläche, deren Farbe sowie der Glanzgrad bzw. eine vorgesehene Mattigkeit sich nicht oder nicht nennenswert verändern darf. Extreme Anforderungen treten bei der Abformung von Matrizen auf, welche eine Oberflächenstruktur besitzen, die durch Abformen eines Gewebes aus Stofffasern erhalten wurden oder bei der Abformung von Oberflächen von Kohlenstofffasergeweben. Die auf die Schicht 2 abgeformte Struktur entspricht exakt der Matrixstruktur in ihrer Dreidimensionalität sowie Glanzgrad und Mattigkeit.

Besonders gut wird eine exakte dreidimensionale Abbildung erreicht, wenn auf die Matrize 4 oder auf die Schicht 2 vor der Aufbringung der Schicht 2 eine dünne PU-Dispersion in der Stärke von 0,025 bis 0,06 mm aus einer vernetzen PU-Dispersion mit einem Erweichungspunkt von mehr als 125 °C aufgebracht wird. Diese PU-Dispersion enthält Polyurethane auf Polycarbonatbasis, wie z.B. Aquaderm Finish HW2 der Firma Lanxess AG, und/oder aliphatischen Polyester und/oder Polyether und hat eine Härte nach einer Vernetzung von mehr als 75 Shore-A. Derartige PU-Dispersionsmsichungen enthalten einen Feststoffanteil von 25 bis 35 Gew.-% und als Zuschlag 2 bis 3 Gew.-% Vernetzer, bis zu 6 Gew.-% Pigmente, 1 bis 3 Gew.-% Polysiloxan sowie Mattierungsmittel. Auf die getrocknete PU-Schicht 2 wird diese Schicht 3 in der bereits beschriebenen Weise aufgebracht.

Vor allem für Schichtmaterial in Form von Bahnenware, insbesondere mit einem textilen Träger 1 aus Gewebe oder Gewirke, erfolgt eine Vorbeschichtung mit einer Schicht 5 aus geschäumten Weich-PVC oder einem vernetzbaren PU-Schaum oder aus einer vernetzbaren Polyacrylatdispersion. Es ist dabei vorteilhaft, die Schaumschicht 2 mittels Rakel auf die Schicht 5 aufgetragen. Nach dem Trocknen dieser Schicht wird auf diese Schicht 2 die Schicht 3, vorzugsweise mit einer Druckwalze aufgebracht. Die Trocknung der aufgebrachten PU-Schicht 2 und 3 erfolgt auf dem bahnenförmigen Träger 1 mit der Schicht 5 im Durchlauftrockner. Bei der dreidimensionalen Strukturierung wird derart vorgegangen, dass aus dem Bahnenmaterial Formatteile und Zuschnitte ausgestanzt werden, die die Schichten 5 und 2 bzw. 3 auf der Trägerschicht 1 aufweisen. Die Schicht 2 aus PU-Schaum und die nicht geschäumte Schicht 3 bzw. die Formatteile werden mittels mit der beheizten Matrize 4 oder Infrarotstrahlern auf eine Temperatur, insbesondere von 145 bis 165 °C, gebracht und geprägt.

Bei einem mit Weich-PVC vorbeschichteten Träger 1 ist es von Vorteil, die Temperatur und/oder die Prägegeschwindigkeit und/oder den Druck so zu wählen, dass die PVC-Schicht zumindest leicht mitstrukturiert wird.

Der PU-Schaum soll für die Strukturierung nicht dünnflüssig sondern pastös und unter Druck leicht formbar sein, um die feinen Strukturen der Matrize abbilden zu können.

Eine vorteilhafte Konsistenz des PU-Schaums der Schicht 2 liegt dann vor, wenn der PU-Schaum eine ähnliche Schmelzviskosität besitzt wie Weich-PVC bei einer Temperatur von 160 bis 180 °C, also unter Druck fließfähig und umformbar ist. Dies gilt auch dann, wenn vor der Strukturierung der Schicht 2 noch eine weitere Schicht 3 auf diese Schicht 2 aufgebracht wird.

Die Ausbildung eines entsprechenden Erweichungsgrades bzw. einer gewünschten Verformungskonsistenz kann über die Menge des eingesetzten Vernetzers gesteuert werden und/oder über das Mischungsverhältnis von PU-Dispersionen mit niedrigen bzw. höherem Erweichungspunkt bzw. Erweichungsbereich.

Mattierungsmittel, insbesondere das für die Schichten 2 und 3 verwendete Mattierungsmittel TS100 der Firma Evonik Degussa GmbH., verbessern die Haptik, erleichtert die Trocknung, führt zu einem trockenen Griff und verbessert die Wasserdampfdurchlässigkeit.

Die Trocknung der Schicht 2 erfolgt unter Wärme im Trockner bzw. Durchlauftrockner.

Vorteilhaft ist eine möglichst weitgehende Trocknung, vorzugsweise auf Wasserfreiheit. Die erforderliche Temperatur und die erforderliche Verweilzeit sind empirisch einfach festzustellen. Da der Wassergehalt von PU-Dispersionen bzw. des PU-Schaums genau bekannt ist, kann z.B. auch durch Wägung festgestellt werden, wie viel Wasser beim Trocknen bereits verdampft ist. Des Weiteren erkennt man Wasserfreiheit, wenn beim Strukturieren kein störender Wasserdampf ausdampft.

Zur Ermittlung des Wassergehaltes in der getrockneten PU-Dispersion bzw. PU-Dispersionsmischung bei Wärmeeinwirkung kann auch festgestellt werden, wie groß der Restwassergehalt nach gewissen unterschiedlichen Verweilzeiten im Trockenofen ist. Es ist somit einfach möglich, einen gewünschten Restwassergehalt zu erreichen bzw. die erforderliche Temperatur und Verweilzeit dafür festzulegen. Auch Wasserfreiheit kann auf diese Weise erreicht werden bzw. damit können für die Fertigung die erforderlichen Parameter festgelegt werden. Vorteilhafterweise wird das Wasser völlig bzw. nahezu vollständig entfernt.

Die Reduktion der Dicke der Schicht 2 kommt vor allem für geschliffene Narbenleder und Träger 1 aus Mikrofaservlies und für Lederfaserwerkstoffe in Frage, aus denen Format- bzw. Stanzteile für Schuhe und Lederwaren erstellt werden, die oberflächlich strukturiert werden sollen. Wenn die Schicht 2 verdichtet wird, werden die Belastbarkeit, Abriebfestigkeit und das Biegeverhalten der Schicht 2 verbessert.

Das Strukturieren bzw. die Gestaltung der Oberfläche mittels Wärme und Druck und einer Silikonkautschukmatrize oder einer Matrize aus textilem Material kann auch im Vakuumverfahren, also bei Unterdruck, erfolgen. Beispielsweise können dazu Matrizen mit textilen Oberflächen eingesetzt werden, oder der Raum zwischen den Pressplatten wird evakuiert. Derartige Pressverfahren unter Anwendung von Unterdruck bzw. Vakuum sind bekannt.

Beim Strukturieren des PU-Schaums bzw. der Schicht 2 ist es erfindungsgemäß möglich, auf die Matrize 4 und/oder auf die Schicht 2 Verstärkungs- und/oder Formteile für das Schichtmaterial aufzulegen. Bei dem unter Druck und bei erhöhter Temperatur stattfindenden Pressvorgang werden diese Teile fest mit der Schicht 2 und der Schicht 3 verbunden. Diese Verstärkungs- bzw. Formteile können beliebig gestaltet werden und die Form von Streifen, Kreisen, Sternen, geometrischen oder anderen Figuren usw. besitzen. Als Materialien kommen vor allem sich mit der Schicht 3 verbindende Kunststofffolien, vor allem solche aus thermoplastischem PUR in Frage.

Als wärmeaktivierbare Schmelzklebereigenschaften besitzende PU-Dispersion zur Erstellung der PU-Dispersionsmischung sind auch der Kontaktkleber Köracoll 3350 der Firma Kömmerling Chemische Fabrik GmbH, Deutschland, sowie der Kleber DIS Typ 779 der Firma Jakob KECK Chemie GmbH, Deutschland, einsetzbar.

Aufgrund der bleibenden Thermoplastizität der Schicht 2 und der dünnen Stärke der Schicht 3 kann eine Prägung des Schichtmaterials, insbesondere Stanzteilen, auch nach einer längeren Lagerung, z.B. von 6 Monaten, ohne Qualitätseinbuße erfolgen.

Erfindungsgemäß ist es von Vorteil, wenn aus der beschichteten Trägerschicht 1 Zuschnitte ausgeformt bzw. ausgestanzt werden und diese Zuschnitte, gegebenenfalls nach einer Zwischenlagerung, dem Präge- bzw. Strukturiervorgang unterzogen werden. Diese Zuschnitte besitzen eine ebene zweidimensionale Oberfläche, die beim Strukturieren entsprechend verformbar ist und danach eine dreidimensionale Struktur aufweist.

Es ist möglich, vor dem Strukturieren auf die ebene zweidimensionale Oberfläche der Formatzuschnitte oder Zuschnitte oder Stanzteile 30 auf die Schicht 3, z.B. in einer Schuhfabrik, mit der gewünschten Farbe zu bedrucken oder auch Farbauflagen, Folien 6 mit Motiven oder Farbfolien aufzudrucken und damit die Schicht 3 für Formatteile einzufärben bzw. mit Motiven zu versehen. Das Aufbringen von Farben kann beispielsweise im Panton- oder Siebdruckverfahren erfolgen. Nach dem Trocknen der Farbaufdrucke kann der Prägevorgang zur Ausbildung der Dreidimensionalität gestartet werden. Diese aufgedruckten Farbschichten haben vorzugsweise eine ähnliche Zusammensetzung wie die Schicht 3.

Für das Strukturieren ist es von Vorteil, wenn die aus Silikonkautschukmaterial oder Silikonharz bestehende Matrize eine Shore-A Härte von 25 bis 98 besitzt. Damit ist die Matrize druckelastisch ausgeführt und kann Unebenheiten, so wie sie in der Trägerschicht 1 auftreten können, wenn es sich dabei um ein Naturmaterial wie Leder handelt, ausgleichen. Das Gleiche gilt auch für Matrizen mit textiler Oberfläche, vor allem wenn die textile Oberfläche eine Stärke von mehr als 0,5 mm aufweist. Die Silikonkautschukmatrizen und die Matrizen mit textilen Oberflächen können mit einer erwärmbaren Metallunterlage 20 abgestützt und über diese auf die für den Strukturierungsvorgang vorgesehene Temperatur erwärmt werden.

Es hat sich als vorteilhaft erwiesen, wenn zwischen der Trägerschicht 1 des Stanzteils 30 und der Pressplatte 12, d.h. einer Metallplatte der für den Strukturierungsvorgang eingesetzten Presse, ein druckelastomerer Stützteil 10 eingesetzt ist, der eine Stärke von etwa 1 bis 8 mm, vorzugsweise 2 bis 6 mm, besitzt, eine geschäumte Struktur aufweist und eine Shore-A Härte aufweist, die mit der Shore-A Härte der Silikonkautschukmatrize 4 vergleichbar ist. Damit können Dickenschwankungen in der Trägerschicht 1 voll ausgeglichen werden, sodass der geprägte Bereich des Stanzteils bzw. das Stanzteil zur Gänze überall die gleiche Prägestruktur aufweist. Des Weiteren wird damit jede partielle Verhärtung der Trägerschicht 1 völlig ausgeschlossen, obwohl die Trägerschicht 1 Dickenschwankungen von 5 bis 10 % besitzen kann. Derartige Stützteile 10 am druckelastischen Material können auch zwischen der Matrize 4 und der Metallplatte 20 oder an Stelle der Metallplatte 20 angeordnet werden.

Es ist auch möglich, für die in der Schicht 2 eingesetzten PU-Beschichtungsdispersionen, die bei 125 °C noch keinerlei Klebrigkeiten bzw. Klebeeigenschaften aufweisen, Astacin Finish PS der Firma BASF zu verwenden. Für die dünne Schicht 3 hat sich das Produkt Aquaderm Finish HW2 der Firma Lanxess AG als sehr vorteilhaft erwiesen.

Es ist volkswirtschaftlich von Bedeutung, dass mit der erfindungsgemäßen Vorgangsweise große Materialmengen eingespart werden können, da die Schuh- und Lederwarenindustrie Zuschnitte bzw. Stanzteile geliefert erhalten, die aus dem Schichtmaterial herausgeschnittenen bzw. herausgestanzten sind und diese selbst mit der gewünschten Farbe und/oder dem gewünschten Glanzgrad und/oder dem gewünschten Muster bedrucken können. Es ist somit nicht mehr erforderlich, großflächige Lederhäute und Mindestmengen pro Farbe sowie Bahnenware und damit große Mengen an Abfallmaterial für eine Erstellung von Zuschnitten und Stanzteilen auf Lager zu halten, sondern es werden nur die bereits für den Prägevorgang benötigten Zuschnitte gelagert, die dann beim Produkthersteller mit einem Farbaufdruck versehen, strukturiert und dabei gleichzeitig mit einem Logo und einer Marke versehen werden können.

Auch wenn die Schicht 2 nicht vernetzt oder untervernetzt und die Schicht 3 völlig vernetzt oder untervernetzt sind, kommt es zwischen den Schichten 2, 3 zu einer festen, untrennbaren Verbindung. Die Schicht 2 bleibt thermoplastisch und die weitere Schicht 3, die dünner und härter als die Schicht 2 und gegebenenfalls nicht thermoplastisch ist, können nach einer erfolgten dreidimensionalen Strukturierung nicht getrennt aber noch mehrmals geprägt bzw. mit anderen Prägungen zusätzlich strukturiert werden.

Fig. 2 zeigt schematisch eine Vorrichtung zur Strukturierung von Zuschnitten 30. Der Zuschnitt 30 umfasst eine Trägerschicht 1 sowie eine allenfalls vorhandene Schicht 5, die vorteilhaft auf einem strukturierten Gewebe ausgebildet wird. Auf der Trägerschicht 1 ist die Schicht 2 und auf dieser Schicht 2 die weitere Schicht 3 aufgebracht. Eine auf die Schicht 3 aufgebrachte Finishschicht 6 kann eine Farbschicht oder eine farbige oder Farbmuster aufweisende Folie sein, die etwa dieselbe Stärke wie die Schicht 3 aufweist. Die Finishschicht 6 kann beispielsweise auch eine aufgedruckte oder aufgesprühte Lederfarbe sein.

Zum Strukturieren wird ein Stanzteil bzw. der Zuschnitt 30 auf die Matrize 4 mit ihrer Oberflächenstruktur 7 aufgebracht.

Die Matrize 4 ruht auf einer beheizbaren bzw. temperierbaren Unterlage bzw. Metallplatte 8, die mit einer nicht dargestellten Heizeinheit beheizbar ist. Zwischen dem Pressstempel 12 und der Trägerschicht 1 befindet sich der Einlageteil 10 bzw. der Stützteil 10 aus elastomerem Material, der vom Pressstempel 12 getragen wird. Dieses elastomere Material dient dazu, Unebenheiten in der Trägerschicht 1, bei der es sich um ein Naturprodukt handelt, auszugleichen.

Mit 13 ist eine luftdichte Umhüllung der Presseneinheit 11 bezeichnet, die über einen Auslass 14, der schematisch dargestellt ist, evakuiert werden kann, um Lufteinschlüsse aus dem Zuschnitt 30 bzw. aus dem Raum zwischen dem Zuschnitt 30 und der Matrize 4 entfernen zu können.

Die Farb- bzw. Finishschicht 6 wird immer vor dem Strukturieren auf die weitere Schicht 3 aufgebracht und nimmt dieselbe Struktur wie die Schicht 3 an. Damit kann in gewünschten Bereichen die Farbe und/oder der Glanzgrad und/oder die Prägung für einzelne Zuschnitte individuell geregelt werden. Es wird damit eine individuelle Fertigung möglich, die nur wenige Meter an Schichtmaterial benötigt. Derzeit ist bei Sonderanfertigungen eine Herstellung bzw. Abnahme von einigen hundert Metern Schichtmaterial erforderlich. Es wird somit die Möglichkeit geboten, hohe Einsparungen vornehmen zu können bzw. eine Ressourcenverschwendung zu minimieren.

Um Fälschungen bzw. Nachahmungen von Produkten und Marken zu verhindern oder zu erschweren, können in der Silikonkautschukmatrize 4 Symbole und/oder Marken und/oder Kennzeichen ausgebildet werden, die beim Strukturieren unentfernbar auf den Stanzteil bzw. Zuschnitt übertragen werden.

Ein Schutz vor einem Kopieren kann auch erreicht werden, wenn die weitere Schicht 3 und/oder ein allenfalls auf diese Schicht 3 aufgebrachter Farbaufdruck farblich von der Farbe der Schicht 2 abweichen. Des Weiteren kann die weitere Schicht 3 und/oder der Farbaufdruck mittels eines Lasers, insbesondere pixelweise, abgetragen werden, sodass die Farbe der Schicht 2 sichtbar wird. Im Zuge einer Laserbearbeitung können auch in den Schichten 2, 3 durchgehende Kapillaren ausgebildet werden, womit die Wasserdampfdurchlässigkeit des Schichtmaterials bzw. eines Bereichs des erstellten Gegenstands, der mit dem Stanzteil erstellt wurde, auf einen gewünschten Wert eingestellt werden.

Die Trägerschicht 1 ist durch den PU-Schaum der Schicht 2 nicht sichtbar und es kann somit unterschiedlichen Trägerschichten durch gleiche Strukturierung der Oberfläche der Schichten 2, 3 gleiches Aussehen verliehen werden.

Bei den PU-Dispersionen handelt es sich durchwegs um wässrige Dispersionen.

Zur Ausbildung der PU-Dispersionsmischung können eine oder mehrere PU-Dispersionen mit Schmelz- bzw. Kontaktklebereigenschaften und eine oder mehrere PU-Dispersionen ohne derartige Eigenschaften eingesetzt bzw. vermischt werden.

Die wärmeaktivierbaren Eigenschaften aufweisenden PU-Dispersionen sind aus aliphatischem Polyurethan auf Polyether- oder Polyesterbasis aufgebaut und können auch Kleberharze enthalten. Die PU-Dispersionen besitzen einen pH-Wert von 6 bis 9 und sind miteinander mischbar.

Die PU-Dispersionsmischung besitzt einen pH-Wert von 6 bis 9 in unvernetztem Zustand und in getrockneter bzw. verfestigter Form eine Bruchdehnung von 550 bis 1100 %. Die Härte beträgt zwischen 28 und 75 Shore-A.

Die nichtthermoplastischen PU-Dispersionen sind aus aliphatischem Polyester, Polyether, Polyurethan oder Polycarbonat-Polyurethanen aufgebaut. Sie sind ebenfalls untereinander voll mischbar. Sie haben jedoch zwingend zwischen 95 und 125 °C keine Klebereigenschaften. Sie haben in der Regel ebenso wie die wärmeaktivierbaren PU-Dispersionen einen Feststoffanteil von 35 bis 52 Gew.-%.

Ein Mischungsansatz für die Schicht 2 für eine PU-Dispersionsmischung enthält vorzugsweise ein bis drei PU-Dispersionen mit wärmeaktivierbaren Klebereigenschaften und ein bis vier PU-Dispersionen mit unterschiedlicher Härte ohne Klebereigenschaften. Erfindungsgemäß können somit die Eigenschaften der Schicht 2 wie Härte, Dichte, thermische Prägbarkeit, Klebeeigenschaften, Weichheit, Dauerbiegeverhalten, Hydrolysebeständigkeit sowie die Verbindung der Schichten untereinander optimal an den jeweiligen Verwendungszweck angepasst werden.

Die Schicht 2, die vorteilhafterweise thermoplastisch und somit zeitlich unabhängig prägbar ist, bietet beträchtliche produktionsmäßige, technische Vorteile.

Erfindungsgemäß und wichtig ist die Kombination der Schichten 2 und 3. Die Schicht 2 ist thermoplastisch und somit nur unzureichend bei Einwirkung von Wärme abriebfest und besitzt auch eine unzureichende Beständigkeit gegenüber MEK oder Isopropanol. Dieser Nachteil wird durch die Schicht 3 wettgemacht, die aus Polyether-, Polyestervorzugsweise Polycarbonat-Polyurethan wie das Produkt HW2 aufgebaut ist und sowohl zwischen 2 und 5 Gew.-% Vernetzer enthalten, als auch voll vernetzt sein kann. Für den Fall, dass die Grenze von 4,2 Gew.-% Vernetzer überschritten wird, ist die Schicht 3 nicht mehr thermoplastisch. Überraschend ist eine vernetzte Schicht 3 kein Hindernis beim Prägen, obwohl sie nicht thermoplastisch ist, da sie sich aufgrund ihrer geringen Dicke beim Strukturieren der der dickeren Schicht 2 erteilten Oberflächenform völlig anpasst wird und die Strukturen der Matrize 4 vollständig annimmt.

Die Wärmeabriebfestigkeit zeigt bei einer Umgebungstemperatur von 50 °C in Anlehnung an DIN EN ISO 17076-1 H18 1000g 500x keine Beschädigung.

Beim Aufbringen von 1 g MEK auf die mit der Schicht 2 untrennbar verbundene Schicht 3 bei normalem Umgebungsbedingungen in einer Flächengröße von 100 x 100 mm verdampfte diese Menge in 3 min ohne die Oberfläche zu beschädigen. Die gleiche Menge MEK unter gleichen Bedingungen auf eine Schicht 2 direkt aufgetragen zeigte, dass das MEK in die Schicht 2 eindrang und ein starkes Quellen verursachte, das sich nach dem Verdampfen allerdings wieder zurück bildete. Durch die Kombination der Schichten 2 und 3 wird sich die Eigenschaft der thermoplastischen Schicht 2 zunutze gemacht und die Nachteile einer thermoplastischen Schicht gegenüber chemischen Lösungsmitteln wird durch die Schicht 3, auch wenn sie nicht thermoplastisch ausgebildet ist, vermieden.

Die Schicht 3 ist 0,015 bis 0,060 mm stark und wird immer dünner und härter als die Schicht 2 ausgebildet. Die Schicht 3 besteht aus einer PU-Dispersionsmischung, die vorzugsweise zu mehr als 45 Gew.-% aus Polycarbonat-Polyurethan aufgebaut ist.

Damit sich die Schicht 3 unabhängig von ihrem Vernetzungsgrad und ihrer Härte beim Strukturieren der thermoplastischen Schicht 2 unterordnet, ist es wichtig, dass sie immer wesentlich dünner ist als die Schicht 2 und auch bei Temperaturen von 125 bis 165 °C nicht klebrig wird.

Die angegebenen Stärken für die Schichten 2, 3 gelten für trockene Schichten.

Beim Auftragen muss so viel PU-Dispersion aufgetragen werden, dass nach dem Trocknen eine Stärke der Schicht 2 von 0,075 bis 0,45 mm entsteht. Die Schicht 3 hat eine Stärke von 0,015 bis 0,060 mm; auch diese Stärke ist immer trocken zu verstehen.

Es wurden wichtige kritische Punkte, nämlich die Haftung zwischen der Trägerschicht und der Schicht 2 sowie die Verschleißfestigkeit bzw. Abrieb und das Dauerbiegeverhalten untersucht bzw. wurde untersucht, wie sich das Material bei erhöhten Temperaturen, z.B. 50 °C, im Gebrauch zu Normaltemperaturen, z.B. 22 °C, verhält und was passiert, wenn auf die Oberfläche Lösungsmittel, z.B. MEK oder Isopropanol, gelangt.

Die Haftung der Beschichtung wurde in Anlehnung an die DIN EN ISO 11644 geprüft. Zwischen Normaltemperatur und einer Umgebungstemperatur von 50 °C wurden keine Veränderungen festgestellt. Das bei 50 °C geprüfte Schichtmaterial hatte um ca. 6 % höhere Werte als das bei Normaltemperatur geprüfte Schichtmaterial. Als Trägerschicht 1 diente geschliffenes Känguruleder. Alle Ergebnisse lagen über dem Sollwert von 12 N.

Die Verschleißfestigkeit bzw. der Abrieb wurden im Taber in Anlehnung an die DIN EN ISO 17076-1 bei Normaltemperatur und bei 50 °C getestet, und zwar mit dem Reibrad H22, 1 kg, > 1.000 Touren. Nach 500 Touren waren alle Prüfkörper in Ordnung und die Standardprüfung erfüllt.

Das Dauerbiegeverhalten wurde in Anlehnung an die DIN EN ISO 5402 bei 50 °C geprüft. Nach 100.000 Touren waren alle Prüfkörper noch in Ordnung.

Unter dem Merkmal "vollvernetzt" versteht man beim PU-Material, dass es keine thermoplastischen Eigenschaften besitzt, wobei bei Erwärmung meist sogar der Zerstörungspunkt vor dem Schmelzpunkt erreicht wird. Unter "vollvernetzten PU-Dispersionen" wird hier verstanden, dass auf 1 kg PU-Dispersion mit einem Feststoffanteil von z.B. 40 % mindestens 5% Isocyanatvernetzer XL 80 zugegeben wird, dass eine vollständige Vernetzung erfolgt. Die so vernetzten Produkte sind durch z.B. MEK oder Isopropanol unlöslich, quellen aber unter Umständen durch Aufnahme dieser Lösemittel leicht an. Die erfindungsgemäß vorgesehene thermoplastische, geschäumte bzw. Gasblasen enthaltende, vernetzerfreie oder vernetzerarme Schicht 2 nimmt zwar aufgrund ihrer Schaumstruktur MEK schwammartig auf, quillt und wird klebrig. In Kombination mit der weiteren Schicht 3, insbesondere wenn diese einen hohen Anteil von Polycarbonat auf Polyetherbasis, wie z.B. das Produkt Aquaderm Finish HW2 der Firma Lanxess AG, aufweist, verhindert die dünne weitere Schicht 3, obwohl auch sie nur 2 bis 4 % Vernetzer enthält, aber ein Quellen und Anlösen der Schicht 2. Wenn z.B. 1 g MEK auf eine Fläche von 100 x 100 mm aufgetragen wird, quillt die Oberfläche nicht oder nicht störend an. Nach dem Verdampfen zeigt die Prägung wieder die vorherige Narbstruktur. Lediglich ein leichtes Aufglänzen bleibt zurück. Aceton verhält sich ähnlich. Isopropanol führt zu keiner Anlösung und zu keinem Quellen und zu keinem Aufglänzen der Oberfläche.

Falls die Schicht 2 eine Weichheit von weniger als 55 Shore-A aufweisen soll, ist es im Rahmen der Erfindung möglich, der PU-Dispersionsgesamtmischung 5 bis 20 Gew.-% der Gesamtmischung einer weichen PU-Dispersion mit der Bezeichnung Epotal FLX 3621 der Firma BASF zuzusetzen. Diese PU-Dispersion Epotal FLX 3621 weist nach ihrer Verfestigung eine Härte von weniger als 28 Shore-A auf. Die zugesetzte Menge wird bei den nichtthermoplastischen PU-Dispersionen abgezogen.

Vorteilhafterweise kann die strukturierte Silikonkautschukschicht der Matrize 4 mit einer Metallplatte 20, vorzugsweise einer Aluminiumplatte, verbunden sein. Ferner ist es von Vorteil, wenn auf der Rückseite des Silikonkautschuks bzw. der Matrix in das Silikonkautschukmaterial ein Textilmaterial auf Polyesterbasis mit einem Flächengewicht von 30 bis 150 g/m² eingebettet ist, um die Wärmeausdehnung des Silikonkautschuks zu verhindern. Das Gleiche gilt auch für eine Matrize mit textiler Oberfläche. Vorteilhafterweise weist der Silikonkautschuk mit dem eingebetteten Textilmaterial eine Stärke von 0,6 bis 2,5 mm auf. Durch die Verbindung der Matrix 4 mit der Metallplatte 20 wird die Wärmeübertragung von der Heizplatte 8 über die Metallplatte 20 an den Silikonkautschuk der Matrize 4 begünstigt. Diese allenfalls vorgesehene Aluminiumplatte hat eine Stärke von 0,8 bis 10,0 mm. Sie kann dornenartige Stege 19 bis ca. 2,8 mm Länge aufweisen. Der Raum bzw. die Abstände zwischen den Stegen bzw. Dornen 19 können mit Silikonkautschuk, der das Prägemuster trägt, ausgefüllt sein, und zwar so, dass beim Prägen die aus dem Silikonkautschuk herausstehenden Spitzen die Schicht 3 und die Schicht 2 durchdringen und beim Abziehen sichtbare Vertiefungen in dem Schichtmaterial hinterlassen.

Bei Strukturieren dringen diese Dornen bzw. Stege 19 durch die Schichten 2 und 3 und dringen vorteilhafterweise maximal bis zu 0,4 mm in die Trägerschicht 1 ein. Damit kann die Atmungsaktivität des Schichtmaterials verbessert werden, ohne die Trägerschicht 1 nennenswert zu schwächen.

Die Stege bzw. Dornen können runden Querschnitt aber auch jede andere Form aufweisen. Die Abstände zwischen den einzelnen Stegen beträgt 4 bis 12 mm.

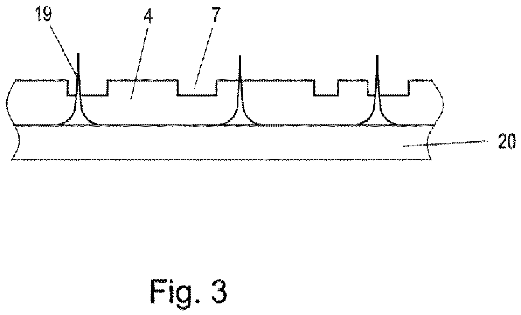

Die Metallplatten mit den Dornen bzw. Stegen 19 können fix vorgefertigt werden. Über die Dicke der Silikonkautschukmatrize oder der Textilmatrize kann vorgegeben werden, wie tief die Stege die Schichten 2, 3 durchdringen bzw. in die Trägerschicht 1 eindringen. In Fig. 3 ist eine derartige Matrize 4, die von Stegen bzw. Vorsprüngen und Spitzen 19 durchdrungen wird, schematisch dargestellt.

Falls der zu prägende Stanzteil mit einer Textilstruktur versehen werden soll, können die Zwischenräume zwischen den dornenartigen Stegen 19 auch mit einem textilen das Prägemuster vorgebenden Material mit einer beliebigen Oberflächenstruktur belegt bzw. ausgefüllt sein. Beim Prägen entstehen dann die Vertiefungen und eine Oberfläche mit textilem Aussehen. Hier tritt textiles Material anstelle des strukturierten Silikonkautschukmaterials. Anstelle von Silikonkautschukmaterial trägt die Platte 20 eine temperaturbeständige Struktur bzw. ein temperaturbeständiges Textilmaterial, von der bzw. dem die Oberfläche abgeformt wird. Auch der Einsatz anderer Materialien ist möglich.

Die Erfindung betrifft nicht nur ein Verfahren zur Herstellung eines oberflächenstrukturierten Schichtmaterials, sondern auch ein Verfahren zum Strukturieren von aus dem erfindungsgemäßen Schichtmaterial erstellten bzw. herausgeschnittenen oder ausgestanzten Formatteilen. In diesem Fall liegt das Schichtmaterial in Form von Stanz- bzw. Formatteilen vor.

Ein besonderer Vorteil der Erfindung ergibt sich, wenn nicht das Schichtmaterial selbst, sondern aus diesem gefertigte Format- und Stanzteile geprägt werden.

Aufgrund ihres Schichtaufbaus und den für den PU-Schaum eingesetzten PU-Dispersionen und der Konsistenz des erhaltenen Schlagschaums ist es bei einer bevorzugten Ausführungsform der Erfindung von Vorteil, wenn die Format- und Stanzteile beim Strukturieren mittels einer druckelastischen auf bzw. an der Schicht 1 bzw. deren Rückseite auf- bzw. anliegenden Stützteiles 10, der zumindest so groß wie der zu strukturierende Teil ist, belastet und geprägt werden. Dadurch kommt es nicht nur zu einem Druckausgleich bei Stärkeschwankungen in der Schicht 1. Es wird damit auch sichergestellt, dass der PU-Schaum den zu strukturierenden Zuschnitt vollflächig in die bis zu 1,1 mm tiefen Vertiefungen der strukturgebenden Matrize eingedrückt und strukturiert werden kann. Das druckelastische Material 10 wird vorteilhaft in Form einer Druckplatte an dem Druckstempel 12 befestigt. Es kann aber auch auf die Schicht 1 aufgelegt werden, wenn der Stanzteil in die Presse eingelegt bzw. auf der ebenen Pressfläche platziert wird. Das druckelastische Material muss bei einem Druck von 10 kg/cm² um mehr als 4 % in sich stauchbar sein und sollte eine Stärke von 1,5 bis 12 mm aufweisen. Ferner sollte es Temperaturen von mindestens 125 °C aushalten und sich nach Druckentlastung in weniger als 4 Sekunden wieder zurückstellen. Das druckelastische Material 10 kann ein- oder mehrschichtig aufgebracht sein. Es kann z.B. aus einem elastomeren Schaum z.B. aus Chloropren oder Silikonkautschuk ausgebildet werden.

Das druckelastische Material 10 kann auch aus einem Vliesmaterial mit einer Stärke von 0,5 bis 1,5 mm bestehen, das mit einer sehr weichen Schicht aus Silikonkautschuk mit einer Shore-A-Härte zwischen 20 und 55 beschichtet ist. Auch mittels Elastomeren imprägnierte Vliese, z.B. aus Polyesterfasern oder Filz, können eingesetzt werden, die mit Silikonkautschuk imprägniert werden und danach eine Dichte zwischen 0,32 bis 0,89 g/cm³ besitzen. Derartige imprägnierte Materialien haben sich bewährt, weil beim Strukturieren sich entwickelnde Feuchtigkeit bzw. vorhandene Gase in diese Materialien eindringen und abgeführt werden können. Des Weiteren verkleben sich derartige Materialien aufgrund ihrer Silikonausrüstung nicht mit der Trägerschicht 1 beim Strukturiervorgang. Der Einsatz eines druckelastischen Stützteils 10 hat beträchtlichen positiven Einfluss auf die Qualität der Prägung.

Als ein für die Trägerschicht 1 einsetzbares Textilmaterial kann auch ein aus Zellulosefasern hergestelltes Material eingesetzt werden, z.B. ein mit der Bezeichnung TEXON, das mit einer Stärke zwischen 0,8 und 2,8 mm eingesetzt wird.

TEXON ist ein Zellulosefaserwerkstoff der unter anderem von der Firma Texon Mockmühl GmbH in Mockmühl, Deutschland hergestellt wird.

Eingesetzt werden kann für die Trägerschicht 1 auch ein Spaltschaum aus EVA (EthylenVinylacetat-Copolymer) mit einer Stärke von 1,0 bis 6 mm und einer Dichte von 0,15 bis 0,65 g/cm³. Diese beiden genannten Materialien können vorteihaft als Träger bzw. Trägerschicht 1 eingesetzt werden.

Ferner ist als Trägerschicht 1 ein Werkstoff einsetzbar, der aus beschichteten Lederfaserstanzabfällen hergestellt wird. Ein derartiges Recyclingprodukt wird unter anderem bei der Firma Ledertech Deutschland GmbH in Bopfingen, Deutschland hergestellt.

Je nach Anwendungszweck der Zuschnitte bringen die beiden Arten der oben erwähnten Trägerschichten Vorteile. Auch unterstützen derartige Schichten 1 die Prägbarkeit bzw. das Prägeverhalten des PU-Schlagschaums.

Erfindungsgemäß kann es vorteilhaft sein, wenn auch die Stempelplatte beheizbar, insbesondere geregelt beheizbar, ist.

Beim Strukturieren eines Format- oder Stanzteiles kann vorteilhafterweise an die Rückseite der Trägerschicht 1 z.B. ein Futtermaterial bzw. eine ein Futtermaterial ausbildende Schicht bzw. Lage aus einer 0,1 bis 0, 3 mm starken Folie aus PUR an die Schicht 1 über ihre ganze Fläche oder auch nur stellenweise als Verstärkung angebunden werden.

Die die Matrize 4 tragende Metallplatte 20 kann vorteilhafterweise eine höhere Temperatur als die Matrize 4 selbst haben. Damit wird die Einregelung der Trägertemperatur erleichtert.

Um die druckelastischen Eigenschaften des Presstempels - abhängig vom zu prägenden Material - für das Strukturieren zu optimieren, ist es von Vorteil, wenn die strukturgebende Matrize 4 aus Silikonkautschuk besteht. Bei derartigen Matrizen 4 aus Silikonkautschuk kann es für den Prägevorgang von Vorteil sein, wenn Silikonkautschukmatrizen eingesetzt werden, die Mikrohohlkugeln enthalten bzw. die aus einem Silikonkautschukschaum erstellt sind. Dabei kann die Dichte der die Mikrohohlkugeln enthaltenden Silikonkautschukmatrizen um 12 bis 25 % geringer sein als die Dichte von Matrizen, die aus Silikonkautschuk ohne Mikrohohlkugeln gefertigt sind. Auch der Silikonkautschukkleber, mit dem die Silikonkautschukmatrizen mit der Metallplatte 20 des Pressstempels verbunden sind, kann 10 bis 25 Gew.-% thermoplastischer Mikrohohlkugeln enthalten. Dadurch wird vor allem bei Matrizen 4 mit einer textilen Oberfläche die Druckelastizität verbessert.

Bei Einsatz von textilen Materialien für Matrizen 4 können die beim Strukturieren entstehenden Gase über die eine textile Oberfläche aufweisenden Matrix 4 entweichen, insbesondere können Luft und Feuchtigkeit seitlich von den Matrizen abgeführt werden.

Zur dreidimensionalen Ausbildung der strukturierten Oberfläche und zum Ausgleich von Stärken unterschieden des Trägers ist es von ganz besonderem Vorteil, wenn der Stempel einen druckelastischen Stüzteil 10 trägt.

Bei der Erstellung eines Schlagschaumes wird Gas, insbesondere Luft oder Stickstoff, in die PU-Dispersionen eingerührt. Mikrohohlkugeln enthalten in ihrem hohlen Kern ebenfalls ein Gas, beispielsweise Isobutan. Ein Einrühren von Gas und/oder eine Zugabe von Mikrohohlkugeln resultiert immer in einen Gasblasen enthaltenden Schaum, die völlig vergleichbare Eigenschaften besitzen. Ein PU-Schlagschaum ist gleichwertig einem mit Mikrohohlkugeln erstellten Schaum. Erfindungsgemäß können Schäume mit Mikrohohlkugeln eingesetzt werden, welche dieselben Werte bezüglich Dichte, Viskosität usw. bzw. dieselben Prägeparameter wie die Schlagschäume besitzen. Es ist allerdings ohne weiteres auch möglich, einen PU-Schaum herzustellen bzw. einzusetzen, indem der PU-Dispersionsmischung Mikrohohlkugeln zugesetzt werden und auch Gas eingeschlagen wird.

Die Schicht 2 besitzt somit eine Schaumstruktur, die durch Einrühren von Luft und/oder durch die Zugabe von Mikrohohlkugeln erhalten wird. Die wesentlichen anderen Parameter für den Aufbau des Schichtmaterials verändern sich dabei nicht. Es wird z.B. in einen Liter der PU-Dispersionsmischungen für die Schicht 2 mikrogekapseltes Gas, d.h. gasenthaltende Mikrohohlkugeln, zugegeben, wobei die Mikrohohlkugeln geschlossene Zellen ausbilden. Da beim Einrühren von Gas im PU-Schaum ebenfalls geschlossene Gaszellen ausgebildet werden, ist die Schaumstruktur vergleichbar. Die Gasblasen, die mittels Mikrohohlkugeln hergestellt werden, haben einen Durchmesser von etwa 20 bis 50 µ. Ihre Hülle besteht aus thermoplastischem Kunststoff. Sie sind vor ihrer Zugabe feucht und haben ein Schüttgewicht von 32 bis 39 kg/m³.

Im Folgenden wird dazu ein Beispiel für eine Schicht 2 angegeben:
Ein Ansatz von
300 g Luphen DOS 3575 der Firma BASF
450 g PIS 779 der Firma Keck Chemie GmbH
950 g Aquacast S der Firma Lanxess
50 g Vernetzer XL 80 der Firma Lanxess
50 g Pigmentpaste Schwarz
25 g Verdicker Desopret A2 der Firma Weserland Chemie
15 g Mattierungsmittel TS100
wird vermischt und 5 Minuten gerührt. Ein Liter dieser Dispersion wiegt 1050 g. In einen Liter dieses Ansatzes werden sodann 45 g Mikrohohlkugeln mit einem Durchmesser von 20 bis 35 µ eingerührt. 1000 cm³ dieses Ansatzes erhalten damit ein Volumen von 1210 cm³. Mittels einer gegenläufigen Auftragswalze wurden 195 g/m² auf ein Brandsohlematerial mit der Bezeichnung TEXON und 220 g/m² auf ein Mikrofaservlies aufgetragen und auf einen Wassergehalt von etwa 1 Gew.-% getrocknet. Die trockene Schicht 2 hatte bei TEXON eine Stärke von 0,12 mm und beim Mikrofaservlies eine Stärke von 0,135 mm.

Danach wurden 50 g einer Dispersionsmischung, wie im Beispiel 3 für die Schicht 3 angegeben, durch Auftragen mit einer Gleichlaufwalze aufgetragen und bis auf einen Wassergehalt von weniger als 1 Gew.-% getrocknet. Aus dem derart beschichteten TEXON-Material wurden Brandsohlen für Sandalen ausgestanzt und mit einer textilen Matrize, aus der Nadeln mit einer Länge von 0,4 mm abstanden bzw. zur Ausbildung von Perforierungen empor ragten, strukturiert. Die Strukturierung der Zuschnitte erfolgte zwischen einer auf der textilen Trägerschicht 1 des Zuschnittes 30 an- bzw. aufliegenden druckelastischen Stützteil 10 bei einer Presszeit von 10 Sekunden und einer Temperatur von 130°C und einem Druck von 13 kg/cm². Es erfolgte eine exakt die Matrize 4 abbildende Strukturierung mit sichtbaren Kapillaren. Der vor der Strukturierung wasserdampfundurchlässige Stanzteil hatte nach der Strukturierung und Perforierung mit den Nadeln eine Wasserdampfdurchlässigkeit von 1,1 mg/cm²/h.

Aus dem beschichteten Mikrofaservlies wurde ein Schuhoberteil herausgeschnitten und mittels einer Silikonkautschukmatrize 4 mit einer negativen Nappalederstruktur und einer Shore-A-Härte von 85, aus der 0,45 mm lange Nadeln 19 herausragten, strukturiert und mit sichtbaren Kapillaren versehen. Die druckelastische Schicht 10 bestand aus einem geschäumten Silikonkautschuk mit einer Dichte von 75 g/cm³. Der Pressdruck betrug 17 kg/cm² und die Presszeit betrug 9 Sekunden bei einer Temperatur von 140°C. Nach der Strukturierung und Ausbildung der Kapillaren lag die Wasserdampfdurchlässigkeit bei 0,9 mg/cm²/h.

In diesen beiden Fällen wurden der Stützteil 10 zwischen Pressstempel 12 und Stanzteil 30 und Matrize 4 und Heizplatte 8 bzw. Tragplatte 20 eingelegt. Wie in Fig. 2 dargestellt, kann die druckelastische Schicht bzw. der Stützteil 10 mit dem Pressstempel 12 auch verbunden, z.B. verklebt, sein.

Die für die Erstellung des Gaszellen enthaltenden PU-Schaumes eingesetzten Mikrohohlkugeln sind unter der Bezeichnung Expancel bekannt. Diese Firma vertreibt die Typen 551WE40 und 551WE20. Hersteller ist die Firma Akso-Nobel in Schweden.

Es ist auch möglich, ein mit Gas oder einer Flüssigkeit gefülltes Kissen als druckelastisches Material bzw. als Stützteil 10 zwischen die Matrize 4 und den Pressstempel 12 einzufügen oder auf der Pressenauflage anzuordnen und darauf den Stanzteil 30 zu legen. Damit wird beim Schließen der Presse einen Druckausgleich über die Fläche des Formatzuschnittes bzw. Stanzteiles 30 erreicht, die die Matrize 4 überall denselben Druck auf den Stanzteil 30 ausübt.

Auf den Narbkuppen wird der druckelastische Stützteil 10 aus geschäumten Silikonkautschuk stärker komprimiert, in den Narbtälern wird der Stützteil 10 weniger stark komprimiert. Ein eingesetzter druckelastischer Stützteil z.B. aus Silikonkautschukschaum ist somit komprimierbar und drückt den Zuschnitt bzw. Stanzteil in die Vertiefungen der Matrize. Dabei kann allenfalls entstehende Feuchtigkeit und vorhandene Luft, die sich bei Wärme ausdehnt, zwar nicht durch die Matrize, jedoch durch die seitlichen Ränder des Stanzteiles entweichen bzw. abgeführt werden.

Die Matrize besteht in diesem Fall aus Silikonkautschuk mit einer Härte von 85 Shore-A.

Es ist für bestimmte Anwendungszwecke von Vorteil, als Trägerschicht Cellulosefaserwerkstoff wie das Produkt TEXON mit einer Stärke von 0,8 bis 2,5 mm einzusetzen. Es können auch EVA Spaltschäume mit einer Dichte von 0,2 bis 0,55 g/cm³ und einer Stärke von 1,2 bis 4,5 mm eingesetzt werden.

Die Trägerschicht 1 kann auf ihrer Rückseite eine als Futter dienende Beschichtung aus Kunststoff mit einer Stärke zwischen 0,10 und 0,5 mm aufweisen.

Vorteile betreffend die Nachhaltigkeit ergeben sich, wenn anfallende Stanzabfälle aus Leder verkleinert und mittels Kunststoffmaterial als Binder zu Platten und Bahnenmaterial mittels Hitze und Druck verfestigt werden und als Trägerschicht 1 eingesetzt werden.

Alternativ könnte auch ein Kissen, gefüllt mit Gas oder einer Flüssigkeit, beim Schließen der Presse den Pressdruck ausgleichen bzw. gleichmäßig über die Oberfläche des Zuschnittes 30 verteilen bzw. den Zuschnitt 30 an die Matrize 4 anpressen.

Das druckelastische Material bzw. der Stützteil kann sich leicht verformen und der der Trägerschicht 1 beim Prägen erteilten Form folgen. Damit erfolgt ein Ausgleich des Pressdruckes über die Oberfläche des Zuschnittes 30, wodurch die Schicht 2 mit der weiteren Schicht 3 an die Oberfläche der Matrix 4, z.B. aus Silikonkautschuk mit einer Härte von 25 - 98 Shore A, angepresst wird. Gleichzeitig werden Unebenheiten der Oberfläche der Trägerschicht 1 vergleichmäßigt bzw. Vertiefungen wie Narbentäler gefüllt. Im Bereich der Narbkuppen erfolgt eine Verdichtung des PU-Schaumes der Schicht 2 bzw. ein Wegdrücken des PU-Schaumes in Richtung von Vertiefungen bzw. von Narbtälern.

Bei einem Einsatz bzw. einer Mitverwendung von Mattierungsmitteln wie TS 100 kann die Rissbildung reduziert werden. Selbst bei einer Schichtdicke von 0,25 mm und bei einer Trockentemperatur von 120 °C entstehen beim Trocknen keine oder keine nicht heilbaren Risse.

Ferner ist ein kompaktes PU-Material nicht ohne weiters bei den erfindungsgemäß niedrigen Temperaturen prägbar, da das Material beim Prägen verdichtet wird und fließen können muss. Hier bietet der bei den eingesetzten Drücken leicht verformbare und nach seinem Erweichen bei den erfindungsgemäß vorgegebenen Temperaturen gut formbare, Gasblasen enthaltende PU-Schaum beträchtliche Vorteile.

Beim Heißpressen bzw. Strukturieren kann die Matrize 4 vorteilhafterweise unten liegen und auf ihr wird das Schichtmaterial mit der Schicht 2 aus PU-Schaum nach unten weisend aufgelegt bzw. angeordnet. Allerdings kann die Matrize 4 auch von oben auf das Stanzteil 30 aufgelegt werden.

Die Schicht 2 verhält sich zum Zeitpunkt der Oberflächengestaltung thermoplastisch und wird unter Druck und Hitzeeinwirkung so plastisch, dass sie auch in der Schicht 3, sofern diese nicht ohnehin auch thermoplastisch ist, die feinsten Mikrostrukturen der Matrizenoberfläche abformt bzw. ausbildet. Trotzdem kann die Trägerschicht 1 mit den strukturierten Schichten 2, 3 unmittelbar nach dem Prägen, also im noch heißen Zustand der Schichten 2, 3 von der Matrize 4 abgezogen werden.

Es kann auch von Vorteil sein, wenn die Schicht 2 und die weitere Schicht 3 auf in Form gebrachte Zuschnitte oder Stanzteile aufgebracht wird. Je nach Anwendungsfall kann es vorteilhaft sein, bereits mit PU-Schaum 2 und der Schicht 3 beschichtete Trägerschichten 1, die entweder als flächige Teile vorgegebener Form bzw. Dimension oder als beschichtete Häute bzw. Leder vorliegen, zu einem vorgegebenen Zeitpunkt zu strukturieren und danach zu stanzen bzw. in die gewünschte Form zu bringen. Die Formgebung für die Trägerschicht 1 kann somit vor oder nach dem Strukturieren erfolgen.

Der für die Strukturierung erforderliche Pressdruck kann mit einem Pressstempel 12 aufgebracht werden. Ein Teil des erforderlichen Pressdrucks kann auch durch Tiefziehen bzw. Evakuieren des Raumes zwischen Zuschnitt 30 und Matrize 4 aufgebracht werden. Dazu kann über dem Zuschnitt 30 und der Matrize 4 eine Druckmembran angeordnet werden und der Raum zwischen Membran und einer Auflage für die Matrize 4 bzw. der Raum unterhalb der Membran wird evakuiert. Des Weiteren können unterhalb und/oder oberhalb der Matrize 4 bzw. des Zuschnittes 30 und/oder unterhalb des Pressstempels 12 Druckkissen 39 angeordnet bzw. ausgebildet werden, die mit Gas oder Flüssigkeiten druckbeaufschlagt werden können.

Beim Strukturieren von größeren Stücken auf nicht luftdurchlässigen Matrizen 4 und auch in dem Fall, dass Gase bzw. die Luft zwischen der Matrize 4 und der weiteren Schicht 3 beim Strukturieren weder nach oben noch nach unten entweichen kann, wird durch das Verwenden von Matrizenoberflächen aus Textilien oder metallischen Fasern und/oder Fäden Abhilfe getroffen. Die Gase können durch die Matrizenoberfläche insbesondere seitlich entweichen. Auf diese Weise können auch große Teile wie Rindshäute oder Ziegenleder strukturiert werden. Es zeigte sich ferner, dass auch Matrizen 4, die nicht luftdurchlässig, aber mit Dornen bzw. Nadeln 19 versehen sind, überraschender Weise auch bei großen Teilen bzw. Stücken zu guten Ergebnissen führen, weil die Dornen 19, welche die Schichten 2 und 3 durchdringen, das Eindringen und Abführen der sich ausdehnende Luft in die Trägerschicht 1 ermöglichen.

Es ist auch möglich, ein mit Kunststoff beschichtetes Papier mit einer strukturierten Oberfläche als Matrize 4 einzusetzen. Ein derartiges Papier ist interessant, wenn Stellen zwischen den Dornen 19 strukturiert werden sollen. Das Papier trägt eine das Prägemuster aufweisende dünne Beschichtung aus Silikonharz und wird auf die weitere Schicht 3 aufgelegt. Beim Strukturieren dringen die von einer auf die Matritze 4 aus Papier aufgelegten Pressplatte oder dem Pressstempel getragenen Dornen 19 durch das Matrizenpapier durch die Schichten 2 und 3 max. 0,65 mm tief in die Trägerschicht 1 bzw. das Leder. Auf diese Weise kann eine kontrollierte steuerbare Wasserdampfdurchlässigkeit durch die von den Dornen 19 ausgebildeten Löcher erreicht werden.

Luftdurchlässige Matrizen 4 sind vor allem für größere Formatteile, insbesondere aus Leder z.B. halbe Rindshäute oder Ziegenhäute, oder für Plattenformate bis 3,5 m², vorteilhaft. Bei diesen luftdurchlässigen Matrizen 4 kann beim Strukturieren die Luft seitlich aus den Matrizen 4 austreten, wenn die Oberfläche der Matrize 4 z.B. aus textilen Fasern oder aus Monofilen aus Kunststoff oder Metall besteht.

Grundsätzlich wird beim Prägen bzw. Strukturieren von beschichteten Ledern bzw. Kunstledern die Oberfläche verdichtet, sodass eine vorher vorhandene Wasserdampfdurchlässigkeit zumindest teilweise, meistens aber ganz, verloren geht. Durch die erfindungsgemäße Strukturprägung, bei der nicht nur die Struktur sondern auch durchgehende Kapillare in den Schichten 2 und 3 gebildet werden, die sich darstellen wie eine Teilperforierung, weil sie nicht oder nicht nennenswert in die Trägerschicht 1 eindringen, wird überraschender Weise eine exakt vorbestimmbare Wasserdampfdurchlässigkeit ermöglicht.

Dabei ist es von ganz besonderem Vorteil, dass beim Strukturieren mittels nicht wasserdampf- und luftdurchlässigen Matrizen 4 die Feuchtigkeit und die sich ausdehnenden Luft durch die sich bildende und gebildete Teilperforation in die bzw. durch die Trägerschicht 1 abgeführt werden kann.

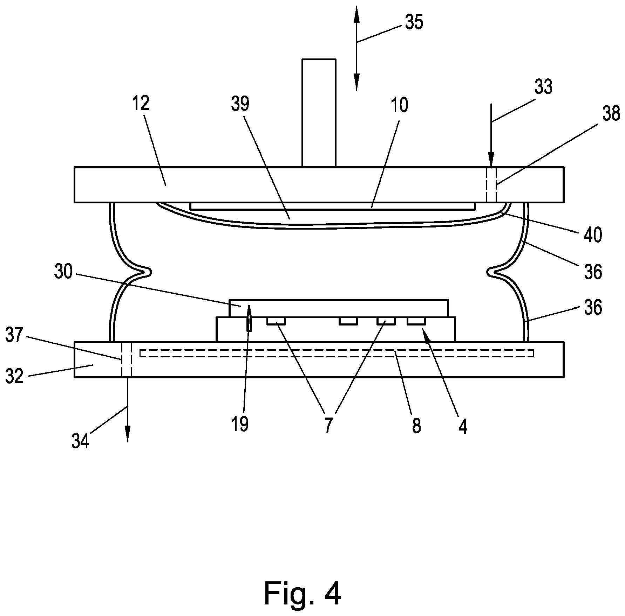

In Fig. 4 ist der Strukturierungsvorgang mit einem Abführen von im Zuge der Strukturierung entstehenden Gasen schematisch dargestellt. Fig. 4 zeigt einen für die Praxis vorteilhaft anwendbaren Pressenaufbau zum Strukturieren von erfindungsgemäßen Schichtmaterialien mit vergleichbarer Funktion, wie er in Fig. 2 dargestellt ist. Diese Schichtmaterialien liegen in stückiger, nicht allzu großer Form vor. Erfindungsgemäß sollen vor allem stückige Zuschnitte 30 beschränkter Größe strukturiert bzw. verarbeitet werden. Derartige Teile können beschichtet oder unbeschichtet vorgestanzt vorliegen oder werden strukturiert und nach dem Strukturierungsvorgang in die gewünschte Größe gebracht bzw. zu Stanzteilen verarbeitet.

Die Presse umfasst einen Pressstempel 12, der in Richtung des Zuschnittes 30 auf- und abbewegbar ist. Der Pressstempel 12 ist gegenüber einem Auflager bzw. einer unteren Pressplatte 32 eines Presstisches verstellbar. Der Presstisch trägt insbesondere in seinem Inneren eine Heizeinrichtung 8. Auf der Matrize 4 wird das zu strukturierende Stück bzw. ein Zuschnitt 30 aufgelegt.

Den Pressbereich umgeben allseits Dichtungen 36, welche bei abgefahrenem Pressstempel 12 den Raum zwischen der Unterseite des Pressstempels 12 und der Oberfläche des Auflagers bzw. der Pressplatte 32 abdichten, sodass über eine Ausnehmung 37, die in der Pressplatte 32 ausgebildet ist, in Richtung des Pfeiles 34 Luft abgesaugt werden kann. Damit können auch die beim Strukturierungsvorgang aus dem zu bearbeitenden Stück 30 austretenden Gase abgeführt werden.

Zur Strukturierung wird der Zuschnitt 30 mit vorgegebener Kraft belastet. Diese Kraft kann beispielsweise der Atmosphärendruck sein, wenn, wie bei einem Tiefziehvorgang, die zwischen dem Presstempel 12 und der Pressplatte 32 vorhandene Luft abgesaugt wird. Ist der Stempel 12 in seine unterste Stellung verfahren und arretiert, kann zusätzlich oder alternativ durch Einführen eines Druckmediums gemäß Pfeil 33 durch eine Ausnehmung 38 im Stempel 12 in einen Raum 39 zwischen dem Stempel bzw. dem Pressteil 12 und einer Membran 40 weiterer Druck auf den zu bearbeitenden Zuschnitt 30 aufgebracht werden. Dazu ist es erforderlich, die Lage des Pressstempels 12 gegenüber der Pressplatte 32 vorab zu fixieren.

Zusätzlich oder an Stelle der Druckaufbringung durch Tiefziehen oder mittels der Membran 40 ist natürlich vorgesehen, dass der Presstempel 12 selbst die erforderliche Presskraft aufbringen kann.

Als Druckmedien für die Beaufschlagung der Membran 40 kommen beliebige Druckfluide in Frage.

Der Vorteil einer derartigen Presse ist es, dass die Membran 40 gleichmäßig den Druck über die Oberfläche der Matrize 4 bzw. des zu bearbeiteten Stückes bzw. Zuschnittes 30 verteilt und damit auch bei Unebenheiten in der Oberfläche des Stückes 30, die der Matrize 4 gegenüberliegt, ausgeglichen werden können.

Ein weiterer Vorteil dieser Anordnung liegt darin, dass entstehende Gase seitlich aus der Matrize 4 und/oder dem zu strukturierenden Stück 30 austreten und durch die Öffnung 37 abgeführt werden können.

Der druckelastische Stützteil 10 an dem Pressstempel 12 ist fakultativ vorgesehen.

Das Ausbilden von Kapillaren in einer Polymerbeschichtung, um eine gewünschte Wasserdampfdurchlässigkeit zu erlangen, ist bekanntlich schwer bzw. die Wasserdampfdurchlässigkeit ist nicht steuerbar. Schlagschäume und koagulierte Schäume sind abhängig von ihrer Dichte und dem aufgebrachten Schlussfinish bezüglich Wasserdampfdurchlässigkeit stark schwankend bis undurchlässig, vor allem dann, wenn die Leder mit einem Druck von mehr als 60 kg/cm² geprägt wurden.

Es gehört zur Aufgabe der Erfindung, nicht nur Stanzteile kleineren Formates, sondern auch stückige Teile mit größerem Format, wie beispielsweise Rindslederhäute mit einem leicht steuerbaren und wirtschaftlichem Verfahren eine gewünschte bzw. einstellbare Atmungsaktivität zu verleihen. Dies erfolgt mittels Dornen bzw. Spitzen, welche Perforationen beim Strukturieren des Schichtmaterials in der Schicht 2 und in der weiteren Schicht 3 ausbilden. Diese Schichten 2, 3 werden durchdrungen; die ausgebildeten Perforationen setzen sich nicht nennenswert in die Trägerschicht fort. Die Dornen bzw. Spitzen 19 dringen in die Trägerschicht bis maximal 0,65 mm ein, schwächen diese jedoch nicht. Damit können Formatteile, wie beispielsweise Rindslederhäute, wirtschaftlich strukturiert und ggf. danach auch teilperforiert werden bzw. in gezielter Weise eine gewünschte Anzahl von Kapillaren pro Flächeneinheit ausgebildet werden.

Die Perforierungen werden vorgenommen mit einer Platte oder Matrize, aus der bis zu 2,8 mm lange spitze Nadeln bzw. Dornen 19 ragen. Die Spitzen bzw. Dornen 19 besitzen einen Schaftdurchmesser zwischen 0,6 bis 2,6 mm. Sie werden in einer Anzahl von 2 bis 10 Stück pro cm² angeordnet. Die Dornen ragen aus dem strukturgebenden Material der Matrize 4, z.B. textilem Material, Silikonkautschuk oder strukturiertem beschichteten Papier, heraus und dringen bei Kontakt von Matrize 4 und Zuschnitt 30 in diesen ein. Die Dornen 19 ragen aus der Matrize bzw. dem strukturgebenden Material der Matrize vorteilhafterweise maximal 1,6 mm heraus und dringen vorteilhafterweise maximal 0,25 mm in die Trägerschicht 1.

Das Strukturieren und gleichzeitige Perforieren oder das Strukturieren und ggf. nachträgliches Perforieren mit einer derartigen Matrize bzw. Nadeln tragenden Platte erfolgt bei Temperaturen zwischen 110 bis 160°C. Das Pressen bzw. die Aufbringung des Pressdruckes erfolgt vorteilhafterweise mit einer sich über die Platte von einer Seite zur anderen hin bewegenden Metallwalze, welche mit einem einem Stützteil 10 entsprechenden, druckelastischen Material belegt ist. Der Anpressdruck beträgt 4 bis 48 kg/cm²; die mit der Walze ausgeübte Pressdauer liegt zwischen 8 und 20 Sekunden. Diese Bedingungen entsprechen den Bedingungen, die beim Strukturieren mit einem Pressstempel eingehalten werden.

Vor dem Strukturieren der Zuschnitte 30 mit einer Platte und einer diese belastenden Metallwalze hatte in einer Untersuchung das Schichtmaterial eine Wasserdampfdurchlässigkeit von 0,3 mg/cm²/h. Nach Ausbildung von vier Perforationen je cm² lag die Wasserdampfdurchlässigkeit bei 1,25 mg/cm²/h. Die Nadeln hatten einen Schaftdurchmesser von 1,5 mm und ragten 0,25 mm in das Leder.

Die mit druckelastischen Material belegte Druckwalze hatte einen Durchmesser von 28 cm. Das zu strukturierende Material war mit Infrarotstrahlen auf 60°C vorgewärmt.

Bei größeren Matritzen (z.B. für halbe Rindshäute) mit oder ohne Dornen bzw. Stifte 19 können zwei Walzen vorgesehen werden, zwischen denen die mit der Matritze 4 kontaktierte Trägerschicht 1 durchgeschickt wird. Hierbei weist eine der Walzen, vorzugsweise die obere Walze, einen druckelastischen Belag auf, der das Schichtmaterial mit dem vorgegebenen Druck auf die Metallmatrize 4 mit ihrer strukturgebenden Oberfläche aus Silikonkautschuk oder Textilmaterial presst. Dies ist der einfachste Weg wenn Schichtmaterial mit plattenformatigen Matrizen 4 und einer warme Unterlage strukturiert wird.

Kunstleder und Leder werden in der Regel mit strukturierten Walzen strukturiert bzw. geprägt. Erfindungsgemäß werden flächenformatige Matrizen also Platten zum Strukturieren verwendet. Dies erfolgt unabhängig davon, ob es sich um Stanzteile, kleine Formatzuschnitte oder große Teile wie z.B. halbe Rinderhäute handelt.

Korrigierte Narbenleder, darunter werden Narbenleder verstanden, die eine mindestens 0,04 mm dicke geprägte Polymerzurichtung aufweisen, besitzen keine nennenswerte Wasserdampfdurchlässigkeit und schon gar nicht wenn die Polymerzurichtung stärker als 0,075 mm ist, weil beim Prägen mit den üblichen hohen Drücken von mehr als 60 kg/cm² eine eventuell vorher vorhandene Wasserdampfdurchlässigkeit verloren geht oder sehr stark reduziert wird. Das Prägen großer Lederflächen erfordert somit strukturierte Metallwalzen oder Metallprägeplatten. Diese sind teuer und benötigen eine Beschaffungszeit in der Regel von einigen Wochen.

Erfindungsgemäß ist es verfahrensmäßig am einfachsten und wirtschaftlich am günstigsten, wenn großflächige Leder erfindungsgemäß mit der Schicht 2 und der weiteren Schicht 3, wie beschrieben, versehen werden und Rindshäute mit Flächen z.B. von 6 qm danach halbiert oder geviertelt werden und auf erfindungsmäße Art mittels Matrizen aus Silikonkautschuk, textilen Fasern oder einem strukturierten Papier strukturiert und ggf. gleichzeitig teilperforiert werden. Bei großen Formatteilen ist es besonders vorteilhaft zuerst die Strukturierung und danach, falls gewünscht, die Perforierung vorzunehmen. Dies geschieht, indem man eine platten- bzw. brettförmige Matrize verwendet, aus der Metallnadeln bzw. -stifte herausragen, wobei die Räume zwischen diesen Nadeln bzw. Stiften aber frei bleiben. Mit derartigen Matrizen können keine Strukturprägungen vorgenommen werden.

Zum Erzeugen von beständigen Teilperforationen wird das bereits strukturierte Schichtmaterial z.B. eine geviertelte Rindslederhaut mit der mit den Schichten 2 und 3 beschichteten und strukturierten Seite auf die Nadelmatrize aufgelegt. Die Nadelmatrize sowie die Nadeln bzw. Stifte haben dabei eine Temperatur zwischen 90 und 150 °C. Es erfolgt daraufhin ein Andrücken des strukturierten Schichtmaterials an die Nadelmatrize.

Um die bereits strukturierte Oberfläche des Schichtmaterials beim Auflegen auf die Nadelmatrize nicht zu beschädigen und um das teilperforierte Leder bzw. Schichtmaterial einfach von der Matrize abziehen zu können, wird erfindungsgemäß vorgeschlagen zwischen den Stegen bzw. Nadeln 19 ein sehr leichtes, in sich, insbesondere elastisch, stauchbares Material mit geringer Wärmeleitfähigkeit als sogenanntes Hilfsmaterial anzuordnen und zwar so, dass nicht nur die Abstände zwischen den Nadeln 19 ausgefüllt sind, sondern das Material auch die Nadeln 19 mit abdeckt. Beim Pressen drückt sich das Hilfsmaterial in gewünschter Weise zusammen und zwar so weit, dass die freiwerdenden Nadeln die Schichten 2 und 3 durchdringen. Als ein derartiges Pägehilfsmaterial eignen sich weiche, watteartige Vliesstoffe sowie Schälschäume aus Polyurethan oder einem weichen elastomeren Material mit einer Dichte zwischen 40 und 170 kg/m². Dieses Hilfsmaterial kann mehrmals verwendet werden.

Es ist somit möglich, ein geprägtes bzw. strukturiertes Schichtmaterial auch nach dem Prägevorgang mit einer eigens dafür vorgesehenen Nadelmatrize zu perforieren, um eine gewünschte steuerbare Wasserdampfdurchlässigkeit zu erreichen. Derartige Perforationen durchdringen die Schichten 2 und 3 und enden vor und im Oberflächenbereich der Trägerschicht 1.

Es ist auch möglich, die Heizeinrichtung 8 innerhalb der Matrize 4, insbesondere wenn die Matrize aus Silikonkautschuk aufgebaut ist, anzuordnen. Diese Ausführungsform vereinfacht das Prägen bzw. den Aufbau der für das Prägen erforderlichen Presseneinheit. Des Weiteren kann die Prägetemperatur für den eingesetzten PU-Schaum der Schichten 2 und 3 sehr exakt eingeregelt und damit die Oberflächenstruktur des Schichtmaterials optimiert werden.

## Patentansprüche

1. Verfahren zur Herstellung eines oberflächenstrukturierten Schichtmaterials, das eine Trägerschicht (1) und eine mit dieser verbundene Schicht (2) aus Polyurethan aufweist, wobei als, insbesondere in stückiger Form vorliegende, Trägerschicht (1) ein Leder, vorzugsweise ein geschliffenes Narbenleder oder ein Rinds-Spaltleder, ein Textilmaterial, vorzugsweise ein Gewebe oder ein Gewirke, ein Zellulosefaserwerkstoff, ein Spaltschaum, ein Lederfaserwerkstoff oder ein Mikrofaservlies, eingesetzt und mit der Schicht (2) verbunden wird, wobei auf die Trägerschicht (1) als Schicht (2) zumindest eine, vorzugsweise eine einzige, Schicht aus einem insbesondere Gasblasen enthaltenden thermoplastischen PU-Schaum, vorzugsweise einem gegebenenfalls Mikrohohlkugeln enthaltenden PU-Schlagschaum und/oder einem Mikrohohlkugeln enthaltenden PU-Schaum, aufgebracht wird, **dadurch gekennzeichnet,**
- **dass** der insbesondere Gasblasen enthaltende PU-Schaum mit einer PU-Dispersionsmischung erstellt wird, wobei die einzelnen zur Erstellung der PU-Dispersionsmischung eingesetzten PU-Dispersionen in getrocknetem Zustand unterschiedliche Erweichungspunkte zeigen,
- **dass** zur Erstellung der PU-Dispersionsmischung eine oder mehrere PU-Dispersionen mit wärmeaktivierbaren Schmelz- bzw. Kontaktklebereigenschaften und mit einem Erweichungspunkt in getrocknetem Zustand höher als 40 °C, vorzugsweise höher als 45 °C, im Ausmaß von 18 bis 52 Gew.-% der fertigen PU-Dispersionsmischung und eine oder mehrere PU-Dispersionen ohne Schmelz- bzw. Kontaktklebereigenschaften und mit einem Erweichungspunkt höher als 95 °C, vorzugsweise höher als 125 °C, im Ausmaß von 39 bis 73 Gew.-% der fertigen PU-Dispersionsmischung vermischt werden,
- **dass** die PU-Dispersionsmischung für die Schicht (2) mit einer Dicke auf die Trägerschicht (1) aufgebracht wird, dass sie im getrockneten Zustand eine Dicke von 0,075 bis 0,450 mm, vorzugsweise von 0,150 bis 0,280 mm, aufweist,
- **dass** vor einer oder gleichzeitig mit einer Strukturierung des PU-Schaums eine weitere Schicht (3) aus einer ein Gemisch von mehreren PU-Dispersionen darstellenden, nicht geschäumten PU-Dispersion auf die Schicht (2) aufgebracht wird,
- wobei die weitere Schicht (3), die mit, gegebenenfalls aliphatischem, Polyether-, Polyester- und/oder Polycarbonat-Polyurethan aufgebaut wird, nach dem Verfestigen bzw. Trocknen eine Dicke von 0,015 bis 0,060 mm, vorzugsweise 0,020 bis 0,045 mm, besitzt, eine Härte größer als 70 Shore A aufweist, bei Temperaturen von 125 bis 165 °C nicht klebrig ist und gegebenenfalls nicht thermoplastisch ist,
- **dass** die Schicht (2) mit der Schicht (3) zum mittels einer Matrize (4) erfolgenden Strukturieren auf eine Temperatur von 110 bis 165 °C, vorzugsweise 120 bis 155 °C, gebracht wird,
- **dass** die Format- und Stanzteile (30) bzw. die Trägerschicht (1) beim Strukturieren, insbesondere zum Ausgleich von Dickenschwankungen in der Trägerschicht (1) und zum vollflächigen Eindrücken des PU-Schaums in die Vertiefungen der Matrize (4) und zu seiner Verankerung in der Trägerschicht (1), mittels eines druckelastischen Stützteils (10), der zumindest so groß ist, wie der zu strukturierende Teil, belastet werden, und
- **dass** die Trägerschicht (1), die weitere Schicht (3) und die Schicht (2) unter Aufbringung eines Kontaktdrucks von 4 bis 48 kg/cm², vorzugsweise von 18 bis 25 kg/cm², miteinander verpresst und verbunden und mit der Matrize (4) strukturiert werden, wobei die getrocknete Schicht (2) gleichzeitig bzw. gemeinsam mit der weiteren Schicht (3) mit der strukturierten Matrize (4) druckbeaufschlagt und auf der Oberfläche der Schicht (2) und der auf die Schicht (2) aufgebrachten weiteren Schicht (3) eine Strukturierung ausgebildet bzw. eingeprägt wird,
- wobei die Schicht (2) thermoplastisch bleibt und die Schicht (2) und die weitere Schicht (3), die dünner und härter ist als die Schicht (2), nach einer erfolgten dreidimensionalen Strukturierung nicht trennbar, aber noch mehrmals prägbar bzw. mit anderen Prägungen zusätzlich strukturierbar sind.

2. Verfahren nach Anspruch 1, **dadurch gekennzeichnet,**
- **dass** die PU-Dispersionen so gewählt werden, dass die PU-Dispersionsmischung nach dem Trocknen und auch nach einem allenfalls erfolgenden Untervernetzen thermoplastische Eigenschaften besitzt, und/oder
- **dass** die Zusammensetzung der PU-Dispersionsmischung so gewählt wird, dass die Schicht (2) nach dem Trocknen und Strukturieren eine Härte von 28 bis 75 Shore-A, vorzugsweise von 28 bis 68 Shore-A, insbesondere von 30 bis 60 Shore-A, besitzt, und/oder
- **dass** das Polyurethan der eingesetzten PU-Dispersionen, die wärmeaktivierbare Klebereigenschaften aufweisen, zumindest teilweise lineare und/oder zumindest teilkristalline Struktur aufweist und/oder thermoplastisch ist, und/oder
- **dass** ein PU-Schaum aus den PU-Dispersionen erstellt bzw. eingesetzt wird, der nach seiner Trocknung thermoplastisch oberflächenstrukturierbar ist, und/oder
- **dass** aus der beschichteten Trägerschicht (1) Zuschnitte ausgeformt bzw. ausgestanzt werden und diese Zuschnitte nach einer Zwischenlagerung, dem Präge- bzw. Strukturiervorgang unterzogen werden.

3. Verfahren nach Anspruch 1 oder 2, **dadurch gekennzeichnet, dass** der PU-Schaum erstellt wird, indem in die PU-Dispersion oder die PU-Dispersionsmischung ein Gas bzw. Gasbläschen, vorzugsweise Luft oder Stickstoff, eingebracht werden, wobei in einen Liter der PU-Dispersion oder PU-Dispersionsmischung so viel Gas eingebracht bzw. eingeschlagen wird, dass ein Liter ein Volumen von 1,10 bis 1,70 I, vorzugsweise 1,20 bis 1,50 I, annimmt.

4. Verfahren nach einem der Ansprüche 1 bis 3, **dadurch gekennzeichnet,**
- **dass** als Matrizen (4) Matrizen aus textilem Material, vorzugsweise Gewebe, Gewirke, Gestricke oder netzartigen Materialien oder Matrizen mit Matrizenoberflächen aus metallischen Fasern und/oder Fäden oder Matrizen aus mit Kunststoff beschichtetem Papier mit einer strukturierten Oberfläche oder in 3D-Druckverfahren oder aus niedrig schmelzenden Metalllegierungen hergestellte Matrizen oder oberflächenstrukturierte Matrizen aus Silikonkautschukmassen oder Silikonharz eingesetzt werden, die eine Shore-A-Härte von 25 bis 98 besitzen, deren Dichte gegebenenfalls mehr als 1,15 g/cm³ beträgt und die gegebenenfalls kondensations- oder additionsvernetzt sind, und/oder
- **dass** als Material für eine Matrize (4) Silikonkautschuk oder textiles Material eingesetzt wird, der bzw. das auf eine Metallplatte (20) aufgebracht bzw. daran befestigt ist, wobei gegebenenfalls von der Metallplatte (20) die das Silikonkautschukmaterial oder das textile Gewebe durchdringende bzw. in deren Strukturhohlräume ragende, vorzugsweise 0,5 bis 1,2 mm lange, nadelartige bzw. dornenartige Fortsätze oder Stege mit einem Durchmesser bzw. einer Breite von 0,8 bis 1,5 mm, vorzugsweise mit sich verjüngenden Querschnittsfläche, abgehen.

5. Verfahren nach einem der Ansprüche 1 bis 4, **dadurch gekennzeichnet,**
- **dass** der PU-Schaum auf die Trägerschicht (1), insbesondere airless, aufgesprüht oder im Siebdruckverfahren oder mit zumindest einer Walze oder einer Rakel in gleicher Dicke aufgebracht wird, wobei die Trägerschicht (1) vor oder nach dem Aufbringen des PU-Schaums, insbesondere nach dessen Trocknung, zu Zuschnitten oder Formatteilen (30) zerteilt oder gestanzt wird und die beschichteten Zuschnitte oder Formatteile (30) der Prägung bzw. Strukturierung unter Druck und Temperatur unterzogen werden.

6. Verfahren nach einem der Ansprüche 1 bis 5, **dadurch gekennzeichnet, dass** bei Einsatz eines Mikrofaservlieses als Trägerschicht (1) die Zwischenräume zwischen den Fasern des Vlieses mit koaguliertem oder geschäumtem Kunststoffschaum, vorzugsweise auf Polyurethanbasis, zumindest teilweise gefüllt sind.

7. Verfahren nach einem der Ansprüche 1 bis 6, **dadurch gekennzeichnet, dass** vor der Strukturierung der Oberfläche der Schicht (2) aus PU-Schaum auf der strukturgebenden Matrize (4) die weitere, gegebenenfalls eine andere Farbe als die Schicht (2) aufweisende Schicht (3) aus einer ungeschäumten PU-Dispersion, vorzugsweise eine PU-Dispersion auf Polyether-Polycarbonat oder Polyesterbasis, oder derartige PU-Dispersionsmischung in einer Stärke von 0,015 bis 0,060 mm, vorzugsweise 0,020 bis 0,045 mm, ausgebildet wird, die maximal 1,5 Gew.-%, vorzugsweise maximal 0,5 Gew. %, Wasser enthält, insbesondere wasserfrei getrocknet ist, zumindest bis zu einer Temperatur von 110 °C keine Klebeeigenschaften besitzt und soweit verfestigt und/oder vernetzt wird, dass sie von der strukturierten Matrize (4) ohne Klebenbleiben abziehbar ist, und dass diese auf der auf eine Temperatur von 90 bis 145 °C erwärmte Matrize (4) befindliche Schicht (3) mit der Schicht (2) in Kontakt gebracht, druckbeaufschlagt und bei der gleichzeitig erfolgenden Strukturierung mit der Schicht (2) verbunden wird, wobei vorteilhafterweise diese Schicht (3) nach dem Strukturieren eine Shore-A-Härte von 45 bis 95 besitzt.

8. Verfahren nach einem der Ansprüche 1 bis 7, **dadurch gekennzeichnet, dass** auf die Schicht (2) die weitere Schicht (3) aufgebracht wird, indem vor der Strukturierung der Schicht (2) mit einer Matrize (4) direkt die weitere Schicht (3) aus einer, gegebenenfalls eine unterschiedliche, vorzugsweise größere, Härte und/oder Farbe besitzende, PU-Dispersion oder PU-Dispersionsmischung auf die Schicht (2) aufgebracht und im Zuge des Strukturierens an diese angebunden wird, wobei die weitere Schicht (3) von einer ungeschäumten PU-Dispersion oder PU-Dispersionsmischung gebildet ist und in einer Stärke aufgebracht wird, dass sie nach dem Trocknen eine Dicke von 0,015 bis 0,060 mm, vorzugsweise 0,020 bis 0,045 mm, aufweist, wobei sie gegebenenfalls auf einen Wassergehalt von maximal 1,5 Gew.-%, vorzugsweise maximal 0,5 Gew. %, Wasser, insbesondere Wasserfreiheit, getrocknet wird.

9. Verfahren nach einem der Ansprüche 1 bis 8, **dadurch gekennzeichnet,**
- **dass** die Matrize (4) für das Strukturieren auf eine Temperatur von 110 bis 165 °C erwärmt wird, wobei für eine erwärmte Matrize (4) eine Press bzw. Kontaktdauer von 2 bis 18 s eingehalten wird, und/oder die Schicht (2), mit der Schicht (3), auf eine Temperatur von 110 bis 165 °C, insbesondere 120 bis 155 °C, z.B. mit IR-Strahlung, gebracht und mit einer gegebenenfalls einer auf 110 bis 145 °C erwärmten Matrize (4) druckbeaufschlagt und strukturiert wird.

10. Verfahren nach einem der Ansprüche 1 bis 9, **dadurch gekennzeichnet,**
- **dass** im Zuge Strukturierens in der Schicht (2) und der weiteren Schicht (3) Perforierungen ausgebildet werden, die bis zur oder in die Trägerschicht (1) reichen, diese aber nicht durchdringen, und/oder
- **dass** ein Strukturieren und gleichzeitiges Perforieren oder ein Strukturieren und nachträgliches Perforieren mit einer Matrize oder einer Nadeln tragenden Platte bei Temperaturen zwischen 110 und 160 °C erfolgt, und/oder
- **dass** beim Abziehen einer mit den Stegen (19) versehenen Metallplatte (20) deren Spitzen, welche die Schicht (2) und die weitere Schicht (3) durchdringen, sichtbare Vertiefungen im Schichtmaterial hinterlassen, und/oder
- **dass** die Perforierungen mit einer Platte oder einer Matrize vorgenommen werden, aus der bis zu 2,8 mm lange, spitze Nadeln oder Dornen ragen, wobei das Strukturieren und ein gleichzeitiges oder ein nachträgliches Perforieren des Schichtmaterials (1) bei einer Temperatur zwischen 110 und 160 °C erfolgt.

11. Verfahren nach einem der Ansprüche 1 bis 10, **dadurch gekennzeichnet, dass** der PU-Dispersionsmischung Vernetzer im Ausmaß von bis zu 4,2 Gew.-%, vorzugsweise von 0,9 bis 3,2 Gew.-%, bezogen auf das Gesamtgewicht des PU-Schaums, zugesetzt werden und auch nach einer unter Druck und Temperatur erfolgenden Strukturierung weiterhin thermoplastisch ist, und/oder
- dass der PU-Dispersionsmischung 8 bis 25 Gew.-%, bezogen auf das Gesamtgewicht des PU-Schaums, einer 40 bis 60 %-igen Acrylatdispersion zugesetzt werden.

12. Verfahren nach einem der Ansprüche 1 bis 11, **dadurch gekennzeichnet, dass** aus einer großflächigen, mit PU-Schaum beschichteten Trägerschicht (1) Formatteile bzw. Stanzteile herausgetrennt und geprägt werden, und/oder
- dass die Schicht (2) und die weitere Schicht (3) mit unterschiedlicher Zusammensetzung und/oder Pigmentierung bzw. Farbe, insbesondere mit unterschiedlichem Gehalt an Vernetzer, ausgebildet werden und thermoplastisches Verhalten zeigen, und/oder
- dass auf die weitere Schicht (3) vor der Strukturierung eine Farb- bzw. Finishschicht (6) aufgebracht wird, wobei diese Farb- bzw. Finishschicht vorteilhafterweise aufgedruckt wurde und gegebenenfalls von einer an der Schicht (3) anhaftenden bzw. mit dieser verbindbaren Farbe oder Farbschicht oder farbigen oder Farbmuster aufweisenden Kunststofffolie gebildet ist, und/oder
- dass aus dem Schichtmaterial, gegebenenfalls nach längerer Lagerzeit, herausgearbeitete Stanzteile oder Formatteile (30), z.B. in einer Schuhfabrik, unter dem vorgegebenen Druck und der vorgegebenen Temperatur strukturiert werden, ohne die Konsistenz der Trägerschicht durch die Druckbeaufschlagung negativ zu beeinträchtigen oder ohne die Schaumstruktur wesentlich zu ändern.

13. Verfahren nach einem der Ansprüche 1 bis 12, **dadurch gekennzeichnet, dass** für den Präge- bzw. Strukturiervorgang zwischen einem Pressstempel (12) und dem Stanzteil (30) bzw. der Trägerschicht (1) des Schichtmaterials (1) eine Lage oder Platte bzw. ein Stützteil (10) aus druckelastischem Material angeordnet wird, wobei das druckelastische Material ein elastomerer Schaum, ein mit einem Gas oder einer Flüssigkeit gefülltest Druckkissen mit flexiblen Wänden oder ein mit Elastomeren, z.B. Silikonkautschuk, imprägnierter(s) Filz oder Vlies ist.

14. Verfahren nach einem der Ansprüche 1 bis 13, **dadurch gekennzeichnet, dass** der druckelastische Stützteil (10), vorteilhaft in Form einer Druckplatte, an einem Druckstempel (12) befestigt ist, wobei das druckelastische Material des Stützteils (10) bei einem Druck von 10 kg/cm² um mehr als 4 % in sich stauchbar ist, und eine Stärke von 1,5 bis 12 mm, vorzugsweise 1 bis 8 mm, aufweist und gegebenenfalls sich nach einer Druckentlastung in weniger als 4 s zurückstellt, und/oder
- dass die Shore A Härte des Stützteils (10) mit der Shore A Härte der Matrize (4) vergleichbar ist.

15. Verfahren nach einem der Ansprüche 1 bis 14, **dadurch gekennzeichnet**, - dass zum Strukturieren die mit der Matrize (4) kontaktierte Trägerschicht (1) zwischen zwei Walzen durchgedrückt wird, wobei eine der Walzen einen druckelastischen Belag aufweist, der das Schichtmaterial mit vorgegebenem Druck auf die Metallmatrize 4 mit ihrer strukturgebenden Oberfläche aus Silikonkautschuk oder Textilmaterial presst, und/oder
- dass das Aufbringen des Pressdrucks mit einer sich von der einen Seite zur anderen Seite hin über die Platte oder Matrize bewegenden Metallwalze erfolgt, welche mit einem einem Stützteil (10) entsprechenden, druckelastischen Material belegt ist.

16. Verfahren nach einem der Ansprüche 1 bis 15, **dadurch gekennzeichnet, dass** vor Aufbringen der Schicht (2) aus PU-Schaum auf eine von einem Textilmaterial, z.B. Gewebe oder Gewirke, gebildeten Trägerschicht (1) auf die Oberfläche des Textilmaterials eine dünne Lage (5) aus gegebenenfalls geschäumtem Weich-PVC oder aus einer geschäumten oder nicht geschäumten, vernetzbaren PU-Dispersion oder einer nicht geschäumten, vernetzbaren PU-Dispersionsmischung aus aliphatischem und/oder aromatischem Polyurethan auf Polyester- oder Polyehterbasis einer vernetzbaren Polyacrylatdispersion aufgebracht wird, die eine Verbindungsschicht für die auf die Schicht 1 aufzubringende Schicht (2) aus PU-Schaum darstellt und nach dem Trocknen eine Dicke von 0,25 bis 0,40 mm besitzt.

17. Schichtmaterial umfassend eine Trägerschicht (1) und eine mit dieser verbundene Schicht (2) aus Polyurethan, wobei die, insbesondere in stückiger Form vorliegende, Trägerschicht (1) ein Leder, vorzugsweise Narbenleder, insbesondere geschliffenes Narbenleder oder ein Rinds-Spaltleder, ein Textilmaterial, vorzugsweise ein Gewebe oder ein Gewirke, ein Zellulosefaserwerkstoff, ein Spaltschaum, ein Lederfaserwerkstoff oder ein Mikrofaservlies ist, hergestellt nach einem Verfahren nach einem der Ansprüche 1 bis 16, **dadurch gekennzeichnet,**
- **dass** die Schicht (2) von zumindest einer, vorzugsweise einer einzigen, Schicht eines nicht vernetzten oder untervernetzten, insbesondere Gasblasen enthaltenden PU-Schaums, vorzugsweise eines gegebenenfalls Mikrohohlkugeln enthaltenden PU-Schlagschaums oder eines Mikrohohlkugeln enthaltenden PU-Schaums, gebildet ist, der gegebenenfalls einen maximalen Wassergehalt von 1,5 Gew.-%, vorzugsweise 0,5 Gew.-%, aufweist, insbesondere wasserfrei ist, wobei die Schicht (2) einen Erweichungspunkt oberhalb 90 °C besitzt und bei einer Temperatur von 110 bis 165 °C klebrig ist, thermoplastische Eigenschaften besitzt und unter Druck fließfähig und verformbar ist,
- **dass** eine weitere Schicht (3) aus einer nicht geschäumten PU-Dispersion auf die Schicht (2) aufgebracht und mit dieser Schicht (2) verbunden ist, und
- **dass** auf der Oberfläche der Schicht (2) und der auf die Schicht (2) aufgebrachten weiteren Schicht (3) eine Strukturierung ausgebildet bzw. eingeprägt ist.

18. Schichtmaterial nach Anspruch 17, **dadurch gekennzeichnet,**
- **dass** der PU-Schaum der Schicht (2) ein spezifisches Gewicht von 0,800 bis 1,050 g/cm³ aufweist, und/oder
- **dass** die Schicht (2) aus PU-Schaum eine Dicke von 0,075 bis 0,450 mm, vorzugsweise von 0,150 bis 0,280 mm, aufweist, und/oder
- **dass** die Schicht (2) aus verfestigtem, getrocknetem PU-Schaum eine Shore-A-Härte von 28 bis 68 aufweist, und/oder
- **dass** die Schicht (2) 0 bis 4,2 Gew.-%, bezogen auf das Gesamtgewicht der Schicht (2), Vernetzer enthält, und/oder
- **dass** die Schicht (3) bei Temperaturen von 125 bis 165 °C nicht bzw. noch nicht klebrig ist, und/oder
- **dass** die weitere Schicht (3) 0,015 bis 0,060 mm stark und dünner und härter ist als die Schicht (2) und bei Temperaturen von 125 bis 165 °C nicht klebrig ist.

19. Schichtmaterial nach einem der Ansprüche 17 oder 18, **dadurch gekennzeichnet, dass** in der Schicht (2) und in der weiteren Schicht (3) des Schichtmaterials Perforationen ausgebildet sind.

20. Schichtmaterial nach einem der Ansprüche 17 bis 19, **dadurch gekennzeichnet, dass** bei einer von einem Textilmaterial gebildeten Trägerschicht (1) zwischen dem Textilmaterial und der Schicht (2) eine dünne Lage (5) aus geschäumten Weich-PVC oder aus einer vernetzten Schaumschicht aus einer PU-Dispersion oder aus einer Polyacrylatdispersion ausgebildet ist, welche Lage (5) eine Dicke von 0,25 bis 0,45 mm besitzt und eine Verbindungsschicht für die aufzubringende Schicht (2) aus PU-Schaum darstellt, wobei gegebenenfalls die beiden Schichten (2, 5) eine Gesamtdicke von 0,30 bis 0,60 mm ausbilden.

21. Schichtmaterial nach einem der Ansprüche 17 bis 20, **dadurch gekennzeichnet, dass** die auf die Schicht (2) aufgebrachte bzw. angebundene, dünne, wärmestrukturierbare, nicht geschäumte Schicht (3) aus einer PU-Dispersion oder PU-Dispersionsmischung auf aliphatischer Polyether-Polycarbonat- und/oder Polyesterbasis, eine Dicke von 0,0150 bis 0,060 mm, vorzugsweise 0,020 bis 0,0350 mm, aufweist, wobei in der Schicht (2) aus PU-Schaum eine der Strukturprägung in der Schicht (3) entsprechende Struktur ausgebildet bzw. eingeprägt ist, und wobei die Schicht (3) vorteilhafterweise eine größere Shore-A-Härte als die Schicht (2) bzw. eine Härte von mehr als 70 Shore-A, vorzugsweise von 78 bis 98 Shore-A, aufweist und gegebenenfalls 1 bis 4 Gew.-% Polysiloxane enthält.

22. Schichtmaterial nach einem der Ansprüche 17 bis 21, **dadurch gekennzeichnet,**
- **dass** das Narbenleder ein vollnarbiges Rindleder, vorzugsweise Rinds-Spaltleder, Kalbleder, Ziegenleder, Lammleder, Wasserbüffelleder, Schweineleder, Schafleder oder Känguruleder ist, bei welchem Leder die Narbenschicht vorteilhafterweise um mindestens 5 % mechanisch entfernt ist, und/oder
- **dass** die Fasern des Mikrofaservlies aus Polyester oder Polyamid bestehen, wobei die Hohlräume zwischen den Fasern mit einem Kunststoff, vorzugsweise auf Polyurethan- oder Polyesterbasis, imprägniert bzw. gefüllt sind, der eine Schaumstruktur oder eine koagulierte Mikrozellenstruktur aufweist, und/oder
- **dass** der Lederfaserwerkstoff zwischen 13 und 48 Gew.-% synthetische Fasern enthält, und/oder
- **dass** das Schichtmaterial in Form eines Stanzteiles oder Zuschnittes (30) vorliegt.

23. Schichtmaterial nach einem der Ansprüche 17 bis 22, **dadurch gekennzeichnet,**
- **dass** der PU-Schaum eine mikrozellige Struktur besitzt und/oder luftdurchlässig ist und/oder eine Wasserdampfdurchlässigkeit von mehr als 0,50 mg/cm²/h, vorzugsweise von mehr als 0,12 mg/ cm²/h, gemäß DIN EN ISO 14268 aufweist, und/oder
- **dass** die Trägerschicht (1), insbesondere in Richtungen parallel zu ihrer Oberfläche, luftdurchlässig ausgebildet ist und vorteilhafterweise mit textilem Material bzw. Fasern oder Fäden gebildet ist.

24. Schichtmaterial nach einem der Ansprüche 17 bis 23, **dadurch gekennzeichnet,**
- **dass** beim direkten Auftragen von 1 g MEK auf eine Fläche von 100 mal 100 mm der Schicht (2) das MEK in die Schicht (2) eindringt und ein Quellen verursacht, das sich nach dem Verdampfen des MEK zurückbildet, und
- **dass** bei Aufbringen von MEK unter gleichen Bedingungen auf die mit der Schicht (2) untrennbar verbundene weitere Schicht (3) nach dem Verdampfen des aufgebrachten MEK die Oberfläche unbeschädigt verbleibt.

25. Gegenstände hergestellt unter Verwendung eines Schichtmaterials gemäß einem der Ansprüche 17 bis 24, wie Bahnenware, Zuschnitte, Stanzteile, Schuhteile, Sport- und Arbeitsschuhe, Schuheinlegesohlen, Taschen, Lederwaren, Lenkradbezüge, Polsterungsüberzüge, Innenwandverkleidungen von Fahrzeugen und Sitzbezüge für Kraftfahrzeuge, wobei die Oberfläche der Gegenstände und die Schicht (2) und die Schicht (3) eine Strukturprägung aufweisen.

26. Gegenstände nach Anspruch 25, **dadurch gekennzeichnet,**
- **dass** die Schicht (2) thermoplastisch bzw. unter Anwendung von Wärme und Druck verformt bzw. strukturiert sowie verformbar und strukturierbar ist, und/oder
- **dass** die Schicht (2) thermoplastisch ist und die Schicht (2) und die weitere Schicht (3), die dünner und härter ist als die Schicht (2), nach einer erfolgten dreidimensionalen Strukturierung nicht trennbar, aber noch mehrmals prägbar bzw. mit anderen Prägungen zusätzlich strukturierbar sind.

## Claims

1. Method for producing a surface-structured layered material which has a carrier layer (1) and a layer (2) made of polyurethane connected thereto, wherein as a carrier layer (1), present in particular in piece form, a leather, preferably a buffed grain leather or a cowhide split leather, a textile material, preferably a woven fabric or a knitted fabric, a cellulose fibre material, a split foam, a leather fibre material or a microfibre fleece, is used and is connected with the layer (2), wherein on the carrier layer (1) is applied as a layer (2) at least one, preferably one single, layer made of a thermoplastic polyurethane foam particularly containing gas bubbles, preferably a polyurethane impact foam containing hollow microspheres and/or a polyurethane foam containing hollow microspheres, **characterised in**
- **that** the polyurethane foam containing in particular gas bubbles is produced with a polyurethane dispersion mixture, wherein the individual polyurethane dispersion used for the production of the polyurethane dispersion mixture display different softening points in a dry state,
- but for producing the polyurethane dispersion mixture one or several polyurethane dispersions with heat-activatable melting or contact adhesive properties and with a softening point in dry state higher than 40°C, preferably higher than 45°C, in the amount of 18 to 52 wt% of the finished polyurethane dispersion mixture and one or more polyurethane dispersions without melting or contact adhesive properties and having a softening point however 95°C, preferably higher than 125°C, and the amount of 39 to 73 wt% of the finished polyurethane dispersion mixture are mixed,
- **that** the polyurethane dispersion mixture for the layer (2) is applied with a thickness onto the carrier layer (1) such that in the dried state it has a thickness of 0.075 to 0.450 mm, preferably of 0.150 to 0.280 mm,
- **that** prior to or simultaneously with a structuring of the polyurethane foam a further layer (3), consisting of a non-foamed polyurethane dispersion constituting a mixture of several polyurethane dispersions is applied onto the layer (2),
- wherein the further layer (3), which is constructed with, where appropriate aliphatic, polyether, polyester and/or polycarbonate polyurethane, has a thickness after the solidifying or drying of 0.015 to 0.060 mm, preferably 0.020 to 0.045 mm, has a hardness of greater than 70 Shore A, is not sticky at temperatures of 125 to 165°C and, where appropriate, is not thermoplastic,
- **that** the layer (2) with the layer (3) for the structuring taking place by means of a matrix (4) is brought up to a temperature of 110 to 165°C, preferably 120 to 155°C,
- **that** during structuring, the format and punching parts (30) or the carrier layer (1) are loaded by means of a pressure-elastic supporting part (10), which is at least as great as the part to be structured, in particular to compensate for fluctuations in thickness in the carrier layer (1) and for the pressing across the entire surface of the polyurethane foam into the indentations of the matrix (4) and for its anchoring in the carrier layer (1), and
- **that** the carrier layer (1), the further layer (3) and the layer (2) are pressed with one another with the application of a contact pressure of 4 to 48 kg/cm2, preferably of 18 to 25 kg/cm2, and are structured with the matrix (4), wherein the dried layer (2) is applied with pressure simultaneously or together with the further layer (3) with the structured matrix (4) and a structuring is formed or embossed onto the surface of the layer (2) and the further layer (3) applied onto the layer (2),
- wherein following the completed three-dimensional structuring, the layer (2) remains thermoplastic and the layer (2) and the further layer (3), which is thinner and harder than the layer (2), cannot be separated, but can still be multiply embossed or can in addition be structured with other embossments.

2. Method according to claim 1, **characterised in**
- **that** the polyurethane dispersions are selected such that, following the drying and also following any sub-cross-linking which may take place, the polyurethane dispersion mixture has thermoplastic properties, and/or
- **that** the composition of the polyurethane dispersion mixture is selected such that after the drying and structuring, the layer (2) has a hardness of 28 to 75 Shore-A, preferably of 28 to 68 Shore-A, in particular of 30 to 60 Shore-A, and/or
- **that** the polyurethane of the employed polyurethane dispersions, which have thermally activatable adhesive properties, has at least in part linear and/or at least partially crystalline structure and/or is thermoplastic, and/or
**that** a polyurethane foam is created from the polyurethane dispersions or is employed, which is thermoplastic surface structurable after its drying, and/or
- **that** cuttings are shaped or punched out from the coated carrier layer (1) and these cuttings are subjected to the embossing or structuring procedure after an intermediate storage.

3. Method according to claim 1 or 2, **characterised in that** the polyurethane foam is created **in that** a gas or gas bubbles, preferably or nitrogen, are introduced into the polyurethane dispersion or the polyurethane dispersion mixture, wherein so much gas is introduced or incorporated into one litre of the polyurethane dispersion or polyurethane dispersion mixture that one litre assumes a volume of 1.10 to 1.70 I, preferably 1.20 to 1.50 l.

4. Method according to any of claims 1 to 3, **characterised in**
- **that** as matrices (4), matrices of textile material, preferably woven, knitted and crocheted fabrics, or net-like materials or matrices with matrix surfaces of metallic fibres and/or threads or matrices of paper coated with plastic having a structured surface or matrices produced in 3D printing processes or of low-melting metal alloys or surface-structured matrices of silicone rubber masses or silicone resin are used, which have a Shore-A hardness of 25 to 98, the density of which is, where appropriate, more than 1.15 g/cm³ and which, where appropriate, are condensation or addition cross-linked, and/or
- **that** as material for a matrix (4), silicone rubber or textile material is used which is applied to or fastened on a metal plate (20), wherein, where appropriate the, preferably 0.5 to 1.2 mm long, preferably with tapering cross-sectional surface, needle-like or mandrel-like continuations or webs with a diameter or a width of 0.8 to 1.5 mm penetrating the silicone rubber material or the textile woven fabric or protruding into its structural hollow spaces protrude from the metal plate (20).

5. Method according to any of claims 1 to 4, **characterised in**
- **that** the polyurethane foam is applied onto the carrier layer (1) in particular in an airless manner, sprayed on or applied in a screen-press method or with at least one roller or a squeegee with a consistent thickness, wherein prior to or after the application of the polyurethane foam, in particular after its drying, the carrier layer (1) is divided punched to form cuttings or format parts (30) and the layered cuttings or format parts (30) are subjected to the embossing or structuring under the influence of pressure and temperature.

6. Method according to any of claims 1 to 5, **characterised in that** when a microfibre nonwoven is used as a carrier layer (1), the interspaces between the fibres of the nonwoven are at least partially filled with coagulated or phoned plastic foam, preferably on a polyurethane basis.

7. Method according to any of claims 1 to 6, **characterised in that** prior to the structuring of the surface, the layer (2) of polyurethane foam on the structure-providing matrix (4) the further layer (3), possibly having another colour than the layer (2) is formed of a non-foamed polyurethane dispersion, preferably a polyurethane dispersion on polyether polycarbonate or polyester basis, or polyurethane dispersion mixture of this sort is formed in a thickness of 0.015 to 0.060 mm, preferably 0.020 to 0.045 mm, which contains a maximum of 1.5 wt%, preferably maximum 0.5 wt % water, in particular is dried to be free of water, has, at least at a temperature of 110°C, no adhesive properties and is so far solidified and/or interconnected that it can be drawn off and the structured matrix (4) without sticking, and that this layer (3) located on the matrix (4) heated to a temperature of 90 to 145°C is brought into contact with the layer (2), is applied with pressure and, in the course of the structuring which takes place at the same time, is connected to the layer (2), wherein advantageously this layer (3) has a Shore-A hardness of 45 to 95 after the structuring.

8. Method according to any of claims 1 to 7, **characterised in that** the further layer (3) is applied to the layer (2) **in that** prior to the structuring of the layer (2) with a matrix (4) the further layer (3) consisting of a polyurethane dispersion or polyurethane dispersion mixture, possibly having a different, preferably greater hardness and/or colour, is applied onto the layer (2) and in the course of the structuring is bonded thereto, wherein the further layer (3) is formed from a non-foamed polyurethane dispersion or polyurethane dispersion mixture and is supplied in a thickness such that after the drying it has a thickness of 0.015 to 0.060 mm, preferably 0.020 to 0.045 mm, wherein, where appropriate, it is dried to a water content of maximum 1.5 wt%, preferably maximum 0.5 wt% water, in particular to be free of water.

9. Method according to any of claims 1 to 8, **characterised in**
- **that** the matrix (4) is heated for the structuring to a temperature of 110 to 165°C, wherein for a heated matrix (4) a press or contact duration of 2 to 18 s is complied with, and/or the layer (2), with the layer (3) is brought up to a temperature of 110 to 165°C, in particular 120 to 155°C, e.g. using infrared radiation, and has pressure applied and is structured with a matrix (4) which is possibly heated to 110 to 145°C.

10. Method according to any of claims 1 to 9, **characterised in**
- **that** in the course of structuring, perforations are formed in the layer (2) and the further layer (3) which reach as far as or into the carrier layer (1), but do not penetrate this, and/or
- **that** a structuring and simultaneous perforation or a structuring and subsequent perforation with a matrix or a plate bearing needles is carried out at temperatures of between 110 and 160°C, and/or
**that** when drawing off a metal plate (20) equipped with the webs (19), its tips, which penetrates through the layer (2) and the further layer (3) leave visible indentations in the layer material, and/or
- **that** the perforations are undertaken with a plate or a matrix from which sharp needles or mandrels protrude which are up to 2.8 mm long, wherein the structuring and a simultaneous or subsequent perforation of the layer material (1) takes place at a temperature of between 110 and 160°C.

11. Method according to any of claims 1 to 10, **characterised in that** to the polyurethane dispersion mixture is added cross-linkers in the amount of up to 4.2 wt%, preferably from 0.9 to 3.2 wt%, in relation to the total weight of the polyurethane foam, and remains thermoplastic also after a structuring which has taken place under the influence of pressure and temperature, and/or
- that to the polyurethane dispersion mixture is added 8 to 25 wt% of a 40 to 60% acrylate dispersion, related to the total weight of the polyurethane foam.

12. Method according to any of claims 1 to 11, **characterised in that** format parts or punching parts are separated out from and embossed from a large-scale carrier layer (1) coated with polyurethane foam, and/or
- that the layer (2) and the further layer (3) are formed with differing composition and/or pigmentation or colour, in particular with differing content of cross-linkers, and display thermoplastic behaviour, and/or
- that a colouring or finish layer (6) is applied to the further layer (3) prior to the structuring, wherein this colouring or finish layer is advantageously pressed on and is, where appropriate, formed by a colour or colour layer or coloured plastic film or plastic film having a colour pattern which adheres to the layer (3) or can be connected thereto, and/or
- that punching parts or format parts (30) worked out of the layer material, where appropriate after a longer storage time, e.g. in a shoe factory, are structured under the predetermined pressure and in the presence of the predetermined temperature without adversely affecting the consistency of the carrier layer through the application of pressure or without substantially changing the foam structure.

13. Method according to any of claims 1 to 12, **characterised in that** for the embossing or structuring procedure, a layer or a plate or a supporting part (10) made of pressure-elastic material is arranged between a pressing stamp (12) and the punching part (30) or the carrier layer (1) of the layer material (1), wherein the pressure-elastic material is an elastomer foam, a pressure that filled with the gas or a liquid with flexible walls or a felt or nonwoven impregnated with elastomers, e.g. silicone rubber.

14. Method according to any of claims 1 to 13, **characterised in that** the pressure-elastic support part (10) is fastened to a pressure stamp (12), advantageously in the form of a pressure plate, wherein the pressure-elastic material of the supporting part (10) is per se compressible by more than 4% at a pressure of 10 kg/cm2 and has a thickness of 1.5 to 12 mm, preferably 1 to 8 mm, and where appropriate retains its form after a removal of pressure in less than 4 s, and/or
- that the Shore A hardness of the supporting part (10) is comparable with the Shore A hardness of the matrix (4).

15. Method according to any of claims 1 to 14, **characterised in that** for the structuring the carrier layer (1) contacted with the matrix (4) is pressed through between two rollers, wherein one of the rollers has a pressure-elastic coating which presses the layout material with a predetermined pressure onto the metal matrix (4) with its structuring surface made of silicon rubber or textile material, and/or
- that the application of the pressing pressure is carried out with a metal roller, which moves from the one side to the other side across the plate or matrix, which is coated with a pressure-elastic material corresponding to a supporting part (10).

16. Method according to any of claims 1 to 15, **characterised in that** prior to the application of the layer (2) of the polyurethane foam onto a carrier layer (1) formed by a textile material, e.g. woven material or knitted material onto the surface of the textile material, a thin layer (5) of, where appropriate, foamed soft PVC or of a foamed or non-foamed, cross-linkable polyurethane dispersion or a non-foamed, cross-linkable polyurethane dispersion mixture of aliphatic and/or aromatic polyurethane on a polyester or polyether basis of a cross-linkable polyacrylate dispersion is applied, which constitutes a connecting layer for the layer (2) of polyurethane foam to be applied onto the layer 1, and, after the drying, has a thickness of 0.25 to 0.40 mm.

17. Layered material comprising a carrier layer (1) and a layer (2) of polyurethane connected thereto, wherein the carrier layer (1), present in particular in piece form, is a leather, preferably a grain leather, in particular a buffed grain leather or a cowhide split leather, a textile material, preferably a woven fabric or a knitted fabric, a cellulose fibre material, a split foam, a leather fibre material or a microfibre fleece, produced according to a method according to any of claims 1 to 16, **characterised in**
- **that** the layer (2), is formed from at least one, preferably one single, layer of a non-cross-linked or sub-cross-linked polyurethane foam particularly containing gas bubbles, preferably a, where appropriate, polyurethane impact foam containing hollow microspheres or a polyurethane foam containing hollow microspheres, which where appropriate has a maximum water content of 1.5 wt%, preferably 0.5 wt%, is in particular free of water, wherein the layer (2) has a softening point of above 90°C and is sticky at a temperature of 110 to 165°C, has thermoplastic properties, and is flowable and deformable under pressure,
- **that** a further layer (3) of a non-foamed polyurethane dispersion is applied to the layer (2) and is bonded with this layer (2), and
- **that** a structuring is formed or embossed on the surface of the layer (2) and the further layer (3) applied to the layer (2).

18. Layered material according to claim 17, **characterised in**
- **that** the polyurethane foam of the layer (2) has a specific weight of 0.800 to 1.050 g/cm3 and/or
- **that** the layer (2) of polyurethane foam has a thickness of 0.075 to 0.450 mm, preferably of 0.150 to 0.280 mm, and/or
- **that** the layer (2) of solidified, dried polyurethane foam has a Shore-A hardness of 28 to 68, and/or
- **that** the layer (2) contains between 0 to 4.2 wt% cross-linkers, in relation to the total weight of the layer (2), and/or
- **that** the layer (3) is not or is not yet sticky at temperatures of 125 to 165°C, and/or
- **that** the further layer (3) is 0.015 to 0.060 mm thick and is thinner and harder than the layer (2) and is not sticky at temperatures of 125 to 165°C.

19. Layered material according to any of claims 17 or 18, **characterised in that** perforations are formed in the layer (2) and in the further layer (3) of the layered material things

20. Layered material according to any of claims 17 to 19, **characterised in that** in the case of a carrier layer (1), formed of a textile material, between the textile material and the layer (2) is formed a thin layer (5) of foamed soft PVC or of a cross-linked foam layer made of a polyurethane dispersion or of a polyacrylate dispersion, which layer (5) has a thickness of 0.25 to 0.45 mm and constitutes a connecting layer for the layer (2) of polyurethane foam to be applied, wherein, where appropriate, the two layers (2, 5) form a total thickness of 0.30 to 0.60 mm.

21. Layers material according to any of claims 17 to 20, **characterised in that** the thin, heat-structurable, non-foamed layer (3), applied or bonded to the layer (2), made of a polyurethane dispersion or polyurethane dispersion mixture on aliphatic polyether polycarbonate and/or polyester basis, has a thickness of 0.0150 to 0.060 mm, preferably 0.020 to 0.0350 mm, wherein in the layer (2) of polyurethane foam is formed or embossed a structure corresponding to the structure embossing in the layer (3) and wherein the layer (3) advantageously has a greater Shore-A hardness than the layer (2) for a hardness of more than 70 Shore-A, preferably between 78 to 98 Shore-A, and, where appropriate, contains 1 to 4 wt% polysiloxane.

22. Layered material according to any of claims 17 to 21, **characterised in**
- **that** the grain leather is a full-grain cowhide leather, preferably cowhide split leather, calf leather, goat leather, lamb leather, water buffalo leather, pig leather, sheep leather or kangaroo leather, in the case of which leather up to at least 5% of the grain layer is advantageously mechanically removed, and/or
- **that** the fibres of the micro-fibre nonwoven consist of polyester or polyamide, wherein the hollow spaces between the fibres, impregnated or filled with a plastic, preferably on polyurethane polyester basis, which has a foam structure or a coagulated micro cell structure, and/or
- **that** the leather fibre material contains between 13 and 48 wt% synthetic fibres, and/or
- **that** the layered material is present in the form of a punched part or cutting (30).

23. Layered material according to any of claims 17 to 22, **characterised in**
- **that** the polyurethane foam has a micro-cellular structure and/or is air permeable and/or has a water vapour permeability of more than 0.50 mg/cm²/h, preferably of more than 0.12 mg/cm²/h, according to DIN EN ISO 14268, and/or
- **that** the carrier layer (1) is formed to be air permeable, in particular in directions parallel to its surface, and is formed advantageously with textile material or fibres or threads.

24. Layered material according to any of claims 17 to 23, **characterised in**
- **that** when 1g MEK is applied directly onto a surface of 100 by 100 mm of the layer (2), the MEK penetrates into the layer (2) and causes a swelling which retracts after the MEK evaporates, and
- **that** when MEK supplied under the same conditions onto the further layer (3) bonded inseparably with the layer (2), after the evaporation of the applied MEK the surface remains undamaged.

25. Objects produced by using a layered material according to any of claims 17 to 24, such as sheet goods, cut-to-size parts, stamped parts, shoe parts, sports and work shoes, shoe insoles, bags, leather goods, steering wheel covers, upholstery covers, interior wall linings for vehicles and seat covers for motor vehicles, wherein the surface of the objects and the layer (2) and the layer (3) have an embossed structuring.

26. Objects according to claim 25, **characterised in**
- **that** the layer (2) is thermoplastic or deforms under the influence of heat and pressure or is structured and deformable and structurable, and/or
- **that** the layer (2) is thermoplastic and the layer (2) and the further layer (3), which is thinner and harder than the layer (2) are not separable after they completed three-dimensional structuring, but can still be embossed many times or can be structured additionally with other embossings.

## Revendications

1. Procédé de fabrication d'un matériau stratifié à surface structurée, qui présente une couche de support (1) et une couche (2) en polyuréthane reliée à celle-ci, dans lequel on utilise comme couche de support (1), en particulier sous forme de pièces, un cuir, de préférence un cuir à fleur rectifié ou un cuir refendu de bovin, un matériau textile, de préférence un tissu ou un tricot, un matériau en fibres de cellulose, une mousse fendue, un matériau en fibres de cuir ou un non-tissé en microfibres est utilisé et relié à la couche (2), dans lequel au moins une couche, de préférence unique, d'une mousse PU thermoplastique contenant en particulier des bulles de gaz, de préférence une mousse PU à impact contenant facultativement des microbilles creuses et/ou une mousse PU contenant des microbilles creuses, est appliquée sur la couche de support (1) comme couche (2), **caractérisé en ce que**
- la mousse PU contenant en particulier des bulles de gaz est réalisée avec un mélange de dispersion PU, dans lequel les différentes dispersions PU utilisées pour la réalisation du mélange de dispersion PU présentent à l'état séché des points de ramollissement différents,
- pour la préparation du mélange de dispersion PU, une ou plusieurs dispersions PU avec des propriétés de collage par fusion ou par contact activables par la chaleur et avec un point de ramollissement à l'état sec supérieur à 40 °C, de préférence supérieur à 45 °C, dans une proportion de 18 à 52 % en poids du mélange de dispersions PU fini et une ou plusieurs dispersions PU sans propriétés adhésives à l'état fondu ou par contact et avec un point de ramollissement supérieur à 95 °C, de préférence supérieur à 125 °C, dans une proportion de 39 à 73 % en poids du mélange de dispersions PU fini,
- le mélange de dispersion PU pour la couche (2) est appliqué sur la couche de support (1) avec une épaisseur telle qu'il présente à l'état séché une épaisseur de 0,075 à 0,450 mm, de préférence de 0,150 à 0,280 mm,
- avant ou en même temps qu'une structuration de la mousse PU, une autre couche (3) d'une dispersion PU non expansée représentant un mélange de plusieurs dispersions PU est appliquée sur la couche (2),
- dans lequel l'autre couche (3), qui est constituée par du polyéther, du polyester et/ou du polycarbonate-polyuréthane, facultativement aliphatique, possède, après solidification ou séchage, une épaisseur de 0,015 à 0,060 mm, de préférence de 0,020 à 0,045 mm, présente une dureté supérieure à 70 Shore A, n'est pas collante à des températures de 125 à 165 °C et est facultativement non thermoplastique,
- **en ce que** la couche (2) est amenée avec la couche (3) à une température de 110 à 165 °C, de préférence de 120 à 155 °C, pour la structuration effectuée au moyen d'une matrice (4),
- les pièces de format et d'estampage (30) ou la couche de support (1) sont chargées lors de la structuration, en particulier pour compenser les variations d'épaisseur dans la couche de support (1) et pour enfoncer la mousse PU sur toute la surface dans les creux de la matrice (4) et pour l'ancrer dans la couche de support (1), au moyen d'une pièce de support (10) élastique en compression qui est au moins aussi grande que la pièce à structurer, et
- la couche de support (1), l'autre couche (3) et la couche (2) sont pressées et reliées entre elles en appliquant une pression de contact de 4 à 48 kg/cm², de préférence de 18 à 25 kg/cm², et sont structurées avec la matrice (4), dans lequel la couche séchée (2) est soumise à une pression avec la matrice (4) structurée simultanément ou conjointement avec l'autre couche (3) et une structuration est formée ou gaufrée sur la surface de la couche (2) et de l'autre couche (3) appliquée sur la couche (2),
- dans lequel la couche (2) reste thermoplastique et la couche (2) et l'autre couche (3), qui est plus mince et plus dure que la couche (2), ne peuvent pas être séparées après une structuration tridimensionnelle effectuée, mais peuvent encore être gaufrées plusieurs fois ou être structurées en plus avec d'autres gaufrages.

2. Procédé selon la revendication 1, **caractérisé en ce que**
- les dispersions PU sont choisies de sorte que le mélange de dispersions PU possède des propriétés thermoplastiques après le séchage et également après une éventuelle sous-réticulation, et/ou
- la composition du mélange de dispersion PU est choisie de sorte que la couche (2) possède, après séchage et structuration, une dureté de 28 à 75 Shore-A, de préférence de 28 à 68 Shore-A, en particulier de 30 à 60 Shore-A, et/ou
- le polyuréthane des dispersions PU utilisées, qui présentent des propriétés adhésives activables par la chaleur, présente une structure au moins partiellement linéaire et/ou au moins partiellement cristalline et/ou est thermoplastique, et/ou
- une mousse PU est préparée ou utilisée à partir des dispersions PU, laquelle peut être structurée en surface de manière thermoplastique après son séchage, et/ou
- des découpes sont formées ou découpées à partir de la couche de support (1) revêtue et lesdites découpes sont soumises, après un stockage intermédiaire, à l'opération de gaufrage ou de structuration.

3. Procédé selon la revendication 1 ou 2, **caractérisé en ce que** la mousse PU est produite en introduisant dans la dispersion PU ou le mélange de dispersion PU un gaz ou des bulles de gaz, de préférence de l'air ou de l'azote, dans lequel on introduit ou on fait pénétrer dans un litre de la dispersion PU ou du mélange de dispersion PU suffisamment de gaz pour qu'un litre prenne un volume de 1,10 à 1,70 I, de préférence de 1,20 à 1,50 I.

4. Procédé selon l'une quelconque des revendications 1 à 3, **caractérisé en ce que**
- comme matrices (4), sont utilisées des matrices en matériau textile, de préférence des tissus, des tricots ou des matériaux de type filet ou des matrices avec des surfaces de matrices en fibres et/ou fils métalliques ou des matrices en papier revêtu de matière plastique avec une surface structurée ou des matrices fabriquées dans des procédés d'impression 3D ou en alliages métalliques à bas point de fusion ou des matrices à surface structurée en masses de caoutchouc silicone ou en résine silicone, qui présentent une dureté Shore A de 25 à 98, dont la densité est éventuellement supérieure à 1,15 g/cm³ et qui sont éventuellement réticulées par condensation ou par addition, et/ou
- comme matériau pour une matrice (4), on utilise du caoutchouc silicone ou un matériau textile qui est appliqué sur une plaque métallique (20) ou qui y est fixé, dans lequel, le cas échéant, les prolongements ou barrettes en forme d'aiguilles ou d'épines, de préférence de 0,5 à 1,2 mm de long, traversant le matériau en caoutchouc silicone ou le tissu textile ou pénétrant dans leurs cavités structurelles, d'un diamètre ou d'une largeur de 0,8 à 1,5 mm, de préférence avec une surface de section transversale effilée, partent de la plaque métallique (20).

5. Procédé selon l'une quelconque des revendications 1 à 4, **caractérisé en ce que**
- la mousse PU est pulvérisée sur la couche de support (1), en particulier par procédé airless, ou est appliquée par sérigraphie ou avec au moins un rouleau ou une racle de même épaisseur, dans lequel la couche de support (1) est découpée ou estampée en découpes ou en pièces de format (30) avant ou après l'application de la mousse PU, en particulier après son séchage, et les découpes ou les pièces de format (30) revêtues sont soumises au gaufrage ou à la structuration sous pression et température.

6. Procédé selon l'une quelconque des revendications 1 à 5, **caractérisé en ce que**, lorsqu'un non-tissé en microfibres est utilisé comme couche de support (1), les espaces entre les fibres du non-tissé sont au moins partiellement remplis de mousse plastique coagulée ou expansée, de préférence à base de polyuréthane.

7. Procédé selon l'une quelconque des revendications 1 à 6, **caractérisé en ce qu'**avant la structuration de la surface de la couche (2) en mousse PU sur la matrice (4) donnant la structure, l'autre couche (3), présentant facultativement une autre couleur que la couche (2), est constituée d'une dispersion PU non expansée, de préférence une dispersion PU à base de polyéther-polycarbonate ou de polyester, ou un mélange de dispersion PU de ce type, est réalisée en une épaisseur de 0,015 à 0,060 mm, de préférence de 0,020 à 0,045 mm, laquelle contient au maximum 1,5 % en poids, de préférence au maximum 0,5 % en poids d'eau, en particulier séchée sans eau, ne possède pas de propriétés adhésives au moins jusqu'à une température de 110 °C et est solidifiée et/ou réticulée jusqu'à pouvoir être retirée de la matrice structurée (4) sans rester collante, et **en ce que** cette couche (3) se trouvant sur la matrice (4) chauffée à une température de 90 à 145 °C est mise en contact avec la couche (2), est soumise à une pression et est liée à la couche (2) lors de la structuration qui a lieu simultanément, dans lequel cette couche (3) possède de préférence une dureté Shore A de 45 à 95 après la structuration.

8. Procédé selon l'une quelconque des revendications 1 à 7, **caractérisé en ce que** l'autre couche (3) est appliquée sur la couche (2) en appliquant directement sur la couche (2), avant la structuration de la couche (2) avec une matrice (4), l'autre couche (3) constituée d'une dispersion PU ou d'un mélange de dispersion PU possédant facultativement une dureté et/ou une couleur différente, de préférence plus grande, et en la liant à celle-ci au cours de la structuration, dans lequel l'autre couche (3) est formée d'une dispersion PU ou d'un mélange de dispersion PU non expansé et est appliquée en une épaisseur telle qu'elle présente après séchage une épaisseur de 0,015 à 0,060 mm, de préférence de 0,020 à 0,045 mm, dans lequel elle est éventuellement séchée jusqu'à une teneur en eau de 1,5 % en poids maximum, de préférence de 0,5 % en poids maximum, d'eau, en particulier d'absence d'eau.

9. Procédé selon l'une quelconque des revendications 1 à 8, **caractérisé en ce que**
- la matrice (4) est chauffée à une température de 110 à 165 °C pour la structuration, dans lequel une pression ou une durée de contact de 2 à 18 s est maintenue pour une matrice (4) chauffée, et/ou la couche (2), avec la couche (3), est amenée à une température de 110 à 165 °C, en particulier de 120 à 155 °C, par exemple avec un rayonnement IR, et est soumise à une pression et structurée avec une matrice (4) facultativement chauffée à 110 à 145 °C.

10. Procédé selon l'une quelconque des revendications 1 à 9, **caractérisé en ce que**
- au cours de la structuration, des perforations sont réalisées dans la couche (2) et l'autre couche (3), lesquelles s'étendent jusqu'à la couche de support (1) ou dans celle-ci, mais ne la traversent pas, et/ou
- une structuration et une perforation simultanée ou une structuration et une perforation ultérieure sont effectuées avec une matrice ou une plaque portant des aiguilles à des températures comprises entre 110 et 160 °C, et/ou
- lors du retrait d'une plaque métallique (20) munie des entretoises (19), ses pointes, lesquelles traversent la couche (2) et l'autre couche (3), laissent des creux visibles dans le matériau stratifié, et/ou
- les perforations sont effectuées à l'aide d'une plaque ou d'une matrice de laquelle dépassent des aiguilles ou des pointes effilées d'une longueur allant jusqu'à 2,8 mm, dans lequel la structuration et une perforation simultanée ou ultérieure du matériau stratifié (1) sont effectuées à une température comprise entre 110 et 160 °C.

11. Procédé selon l'une quelconque des revendications 1 à 10, **caractérisé en ce que** des agents de réticulation sont ajoutés au mélange de dispersion PU dans une proportion allant jusqu'à 4,2 % en poids, de préférence de 0,9 à 3,2 % en poids, par rapport au poids total de la mousse PU, et **en ce qu'**il reste thermoplastique même après une structuration effectuée sous pression et température, et/ou
- **en ce que** l'on ajoute au mélange de dispersion PU 8 à 25 % en poids, par rapport au poids total de la mousse PU, d'une dispersion d'acrylate à 40 à 60 %.

12. Procédé selon l'une quelconque des revendications 1 à 11, **caractérisé en ce que** des pièces de format ou des pièces estampées sont séparées d'une couche de support (1) de grande surface revêtue de mousse PU et sont estampées, et/ou
- **en ce que** la couche (2) et l'autre couche (3) sont réalisées avec une composition et/ou une pigmentation ou une couleur différentes, en particulier avec une teneur différente en agent de réticulation, et présentent un comportement thermoplastique, et/ou
- **en ce qu'**une couche de coloration ou de finition (6) est appliquée sur l'autre couche (3) avant la structuration, dans lequel ladite couche de coloration ou de finition a été de préférence imprimée et est facultativement formée par une couleur ou une couche de couleur ou un film plastique coloré ou présentant des motifs colorés adhérant à la couche (3) ou pouvant être lié à celle-ci, et/ou
- **en ce que** des pièces estampées ou des pièces de format (30) usinées à partir du matériau stratifié, le cas échéant après un temps de stockage prolongé, par exemple dans une usine de chaussures, sont structurées sous la pression et la température prédéfinies, sans affecter négativement la consistance de la couche de support par l'application de la pression ou sans modifier sensiblement la structure de la mousse.

13. Procédé selon l'une quelconque des revendications 1 à 12, **caractérisé en ce que**, pour l'opération de gaufrage ou de structuration, une couche ou une plaque ou une pièce de support (10) en matériau élastique sous pression est agencée entre un poinçon de presse (12) et la pièce d'estampage (30) ou la couche de support (1) du matériau stratifié (1),

14. Procédé selon l'une quelconque des revendications 1 à 13, **caractérisé en ce que** la pièce de support (10) élastique à la pression, de préférence sous la forme d'une plaque de pression, est fixée à un poinçon de pression (12), dans lequel le matériau élastique à la pression de la pièce de support (10) peut s'écraser sur lui-même de plus de 4% à une pression de 10 kg/cm², et présente une épaisseur de 1,5 à 12 mm, de préférence de 1 à 8 mm, et se remet éventuellement en place en moins de 4 s après une décharge de pression, et/ou
- **en ce que** la dureté Shore A de la pièce de support (10) est comparable à la dureté Shore A de la matrice (4).

15. Procédé selon l'une quelconque des revendications 1 à 14, **caractérisé en ce que** - pour la structuration, la couche de support (1) en contact avec la matrice (4) est pressée entre deux cylindres, dans lequel l'un des cylindres présente un revêtement élastique à la pression qui presse le matériau de revêtement avec une pression prédéfinie sur la matrice métallique 4 avec sa surface structurante en caoutchouc de silicone ou en matériau textile, et/ou
- **en ce que** l'application de la pression de pressage s'effectue avec un cylindre métallique se déplaçant d'un côté à l'autre au-dessus de la plaque ou de la matrice, lequel cylindre est recouvert d'un matériau élastique à la pression correspondant à une pièce de support (10).

16. Procédé selon l'une quelconque des revendications 1 à 15, **caractérisé en ce que**, avant d'appliquer la couche (2) de mousse PU sur une surface d'un matériau textile, par exemple un tissu ou une étoffe, une couche mince (5) de PVC souple facultativement expansé ou d'une dispersion PU réticulable expansée ou non expansée ou d'un mélange de dispersion PU réticulable non expansé de polyuréthane aliphatique et/ou aromatique à base de polyester ou de polyéther d'une dispersion de polyacrylate réticulable est appliquée, laquelle couche présente une couche de liaison pour la couche (2) de mousse PU à appliquer sur la couche 1 et possède une épaisseur de 0,25 à 0,40 mm après séchage.

17. Matériau stratifié comprenant une couche de support (1) et une couche (2) en polyuréthane reliée à celle-ci, dans lequel la couche de support (1), en particulier sous forme de morceaux, est un cuir, de préférence un cuir à fleur, en particulier un cuir fleur rectifié ou un cuir croûte de bovin, un matériau textile, de préférence un tissu ou un tricot, un matériau à base de fibres de cellulose, une mousse fendue, un matériau à base de fibres de cuir ou un non-tissé en microfibres, fabriqué selon un procédé selon l'une quelconque des revendications 1 à 16, **caractérisé en ce que**
- la couche (2) est formée d'au moins une, de préférence d'une seule, couche d'une mousse PU non réticulée ou sous-réticulée, contenant en particulier des bulles de gaz, de préférence d'une mousse PU à impact contenant facultativement des microsphères creuses ou d'une mousse PU contenant des microsphères creuses, laquelle présente éventuellement une teneur maximale en eau de 1,5 % en poids, de préférence de 0,5 % en poids, en particulier anhydre, dans lequel la couche (2) possède un point de ramollissement supérieur à 90 °C et est collante à une température de 110 à 165 °C, possède des propriétés thermoplastiques et est fluide et déformable sous pression,
- une autre couche (3) constituée d'une dispersion PU non moussée est appliquée sur la couche (2) et est liée à ladite couche (2), et
- une structuration est réalisée ou imprimée sur la surface de la couche (2) et de l'autre couche (3) appliquée sur la couche (2).

18. Matériau stratifié selon la revendication 17, **caractérisé en ce que**
- la mousse PU de la couche (2) présente un poids spécifique de 0,800 à 1,050 g/cm3, et/ou
- la couche (2) de mousse PU présente une épaisseur de 0,075 à 0,450 mm, de préférence de 0,150 à 0,280 mm, et/ou
- la couche (2) de mousse PU solidifiée et séchée présente une dureté Shore A de 28 à 68, et/ou
- la couche (2) contient un agent de réticulation à raison de 0 à 4,2 % en poids, par rapport au poids total de la couche (2), et/ou
- la couche (3) n'est pas ou pas encore collante à des températures de 125 à 165 °C, et/ou
- l'autre couche (3) présente une épaisseur de 0,015 à 0,060 mm et est plus mince et plus dure que la couche (2) et n'est pas collante à des températures de 125 à 165 °C.

19. Matériau stratifié selon l'une quelconque des revendications 17 ou 18, **caractérisé en ce que** des perforations sont réalisées dans la couche (2) et dans l'autre couche (3) du matériau stratifié.

20. Matériau stratifié selon l'une quelconque des revendications 17 à 19, **caractérisé en ce que**, dans le cas d'une couche de support (1) formée par un matériau textile, une couche mince (5) de PVC souple expansé ou d'une couche de mousse réticulée d'une dispersion PU ou d'une dispersion de polyacrylate est formée entre le matériau textile et la couche (2), laquelle couche (5) présente une épaisseur de 0,25 à 0,45 mm et constitue une couche de liaison pour la couche (2) à appliquer en mousse PU, dans lequel, le cas échéant, les deux couches (2, 5) réalisent une épaisseur totale de 0,30 à 0,60 mm.

21. Matériau stratifié selon l'une quelconque des revendications 17 à 20, **caractérisé en ce que** la couche (2) appliquée ou couche (3) mince, structurable à chaud, non expansée, constituée d'une dispersion PU ou d'un mélange de dispersions PU à base de polyéther-polycarbonate aliphatique et/ou de polyester, présente une épaisseur de 0,0150 à 0,060 mm, de préférence de 0,020 à 0,0350 mm, dans lequel une structure correspondant à l'empreinte structurelle dans la couche (3) est formée ou imprimée dans la couche (2) en mousse PU, et dans lequel la couche (3) présente de préférence une dureté Shore A supérieure à celle de la couche (2) ou une dureté de plus de 70 Shore A, de préférence de 78 à 98 Shore A, et contient éventuellement 1 à 4 % en poids de polysiloxanes.

22. Matériau stratifié selon l'une quelconque des revendications 17 à 21, **caractérisé en ce que**
- le cuir fleur est un cuir de vachette pleine fleur, de préférence du cuir de vachette croûte, du cuir de veau, du cuir de chèvre, du cuir d'agneau, du cuir de buffle d'eau, du cuir de porc, du cuir de mouton ou du cuir de kangourou, cuir dans lequel la couche fleur est de préférence éliminée mécaniquement à raison d'au moins 5 %, et/ou
- les fibres du non-tissé en microfibres sont constituées de polyester ou de polyamide, dans lequel les espaces vides entre les fibres sont imprégnés ou remplis d'une matière plastique, de préférence à base de polyuréthane ou de polyester, qui présente une structure expansée ou une structure microcellulaire coagulée, et/ou
- le matériau en fibres de cuir contient entre 13 et % en poids de fibres synthétiques, et/ou
- le matériau stratifié se présente sous la forme d'une pièce d'estampage ou d'une pièce découpée (30).

23. Matériau stratifié selon l'une quelconque des revendications 17 à 22, **caractérisé en ce que**
- la mousse PU présente une structure microcellulaire et/ou est perméable à l'air et/ou présente une perméabilité à la vapeur d'eau de plus de 0,50 mg/cm²/h, de préférence de plus de 0,12 mg/cm²/h, selon la norme DIN EN ISO 14268, et/ou
- la couche de support (1) est réalisée perméable à l'air, en particulier dans des directions parallèles à sa surface, et est de préférence formée avec un matériau textile ou des fibres ou des fils.

24. Matériau stratifié selon l'une quelconque des revendications 17 à 23, **caractérisé en ce que**
- lors de l'application directe de 1 g de MEK sur une surface de 100 x 100 mm de la couche (2), le MEK pénètre dans la couche (2) et provoque un gonflement qui se résorbe après l'évaporation du MEK, et
- lors de l'application de MEK dans les mêmes conditions sur l'autre couche (3) reliée de manière indissociable à la couche (2), la surface reste intacte après l'évaporation du MEK appliqué.

25. Objets fabriqués en utilisant un matériau stratifié selon l'une quelconque des revendications 17 à 24, tels que des produits en bande, des découpes, des pièces d'estampage, des pièces de chaussures, des chaussures de sport et de travail, des semelles intérieures de chaussures, des sacs, des articles en cuir, des revêtements de volant, des revêtements de rembourrage, des revêtements de parois intérieures de véhicules et des revêtements de sièges pour véhicules automobiles, dans lesquels la surface des objets et la couche (2) et la couche (3) présentent un gaufrage structurel.

26. Objet selon la revendication 25, **caractérisé en ce que**
- la couche (2) est déformée ou structurée de manière thermoplastique ou par application de chaleur et de pression ainsi que déformable et structurable, et/ou
- **en ce que** la couche (2) est thermoplastique et la couche (2) et l'autre couche (3), qui est plus mince et plus dure que la couche (2), ne peuvent pas être séparées après une structuration tridimensionnelle effectuée, mais peuvent encore être gaufrées plusieurs fois ou être structurées en plus avec d'autres gaufrages.
